# EUROPEAN PATENT APPLICATION

(11) **EP 4 694 545 A1**
(43) Date of publication of application: **11.02.2026**
(21) Application number: 24795683.2
(22) Date of filing: 15.03.2024
(51) Int. Cl.: H04W 76/10

(54) **COMMUNICATION METHOD AND APPARATUS**

(30) Priority: 27.04.2023 CN 202310478575
(71) Applicant: Huawei Technologies Co., Ltd., Shenzhen, Guangdong 518129 (CN)
(72) Inventor: XU, Yishan, Shenzhen, Guangdong 518129 (CN); ZHOU, Runze, Shenzhen, Guangdong 518129 (CN)
(74) Representative: Thun, Clemens
(86) International application number: PCT/CN2024/081969
(87) International publication number: WO 2024/222300

(57) **Abstract**

This application provides a communication method and apparatus, so that a terminal device serving as a reader can communicate with an internet of things device. The method includes: A terminal device sends a session establishment request message to a session management device, to request to establish a first session for transmission of internet of things service data. The session management device establishes, to each of a user plane device and an internet of things management device, an internet of things service transmission path for transmission of the internet of things service data; or obtains address information of an internet of things management device. The session management device sends, to the terminal device, a session establishment accept message including an uplink destination address (an address of the user plane device or the internet of things management device) for transmission of the internet of things service data. When the uplink destination address of the received data is the address of the user plane device, the user plane device sends the data to the session management device. When the uplink destination address of the received data is the address of the internet of things management device, the user plane device sends the data to the internet of things management device.

## Description

### TECHNICAL FIELD

This application relates to the communication field, and more specifically, to a communication method and apparatus.

### BACKGROUND

Currently, a passive internet of things technology is widely applied to various industry fields. A passive internet of things architecture may include internet of things devices, readers, servers, and the like. The internet of things device may be in a tag form, or may be in any other terminal form. The reader may be an access network device, for example, a base station, a pole station, a micro base station, or a macro base station. The reader performs contactless bidirectional data communication in a radio frequency manner, and reads from and writes to an electronic tag or a radio frequency card in the radio frequency manner, to achieve the objectives of target identification and exchange data.

In the current passive internet of things technology, a scenario in which the access network device serves as the reader is mainly considered. How to support a terminal device in serving as a reader also needs to be considered.

### SUMMARY

This application provides a communication method and apparatus, so that a terminal device serving as a reader can communicate with an internet of things device.

According to a first aspect, a communication method is provided. The method may be performed by a session management device, or a chip or a chip system in the session management device. The method includes: The session management device receives a session establishment request message from a terminal device, where the session establishment request message is for requesting to establish a first session for transmission of internet of things service data. The session management device establishes an internet of things service transmission path to each of a user plane device and an internet of things management device based on the session establishment request message, where the internet of things service transmission path is for transmission of the internet of things service data. The session management device sends a session establishment accept message to the terminal device, where the session establishment accept message includes an uplink destination address used by the terminal device for transmission of the internet of things service data, and the uplink destination address includes address information of the user plane device. The session management device sends first information to the user plane device, where the first information indicates the user plane device to send the internet of things service data to the session management device when the uplink destination address of the received internet of things service data is an address of the user plane device.

Based on the foregoing technical solution, the terminal device supporting a reader function may request the session management device to establish the first session for transmission of the internet of things service data. The session management device establishes, to each of the user plane device and the internet of things management device, the internet of things service transmission path for transmission of the internet of things service data. The uplink destination address used by the terminal device for transmission of the internet of things service data is the address of the user plane device. The user plane device sends the internet of things service data to the session management device when the uplink destination address of the received internet of things service data is the address of the user plane device. The session management device sends the internet of things service data to the internet of things management device. In this solution, the terminal device serving as a reader can communicate with an internet of things device, and the terminal device serving as the reader can be interconnected to a functional device that is in a core network and that is responsible for managing the internet of things device. When serving as the reader, the terminal device can transmit the internet of things service data to the internet of things management device via the user plane device and the session management device. In addition, terminal devices have good mobility, and are widely distributed. Therefore, the terminal device serving as the reader is more flexible than an access network device serving as the reader.

With reference to the first aspect, in some implementations of the first aspect, that the session management device establishes the internet of things service transmission path to the internet of things management device based on the session establishment request message includes: The session management device sends a first request message to the internet of things management device, where the first request message is for requesting to establish the internet of things service transmission path between the session management device and the internet of things management device, and the first request message includes at least one of an identifier of the terminal device, address information of the terminal device, or an identifier of the first session. The session management device receives a first response message from the internet of things management device, where the first response message indicates that establishment of the internet of things service transmission path between the session management device and the internet of things management device is completed.

With reference to the first aspect, in some implementations of the first aspect, the first request message further includes information about an access and mobility management device serving the terminal device and/or information about a radio access network device serving the terminal device. The information about the access and mobility management device serving the terminal device and/or the information about the radio access network device serving the terminal device may be for determining a location of the terminal device.

With reference to the first aspect, in some implementations of the first aspect, that the session management device establishes the internet of things service transmission path to the user plane device based on the session establishment request message includes: The session management device sends a second request message to the user plane device, where the second request message is for requesting to establish the internet of things service transmission path between the session management device and the user plane device, the second request message includes an identifier of the internet of things service transmission path between the session management device and the user plane device and first indication information, and the first indication information indicates the user plane device to allocate the uplink destination address. The session management device receives a second response message from the user plane device, where the second response message indicates that establishment of the internet of things service transmission path between the session management device and the user plane device is completed, and the second response message includes the address information of the user plane device. In this implementation, the session management device indicates the user plane device to allocate the uplink destination address/the address information of the user plane device, where the uplink destination address/the address information of the user plane device is used by the terminal device for transmission of the internet of things service data.

With reference to the first aspect, in some implementations of the first aspect, that the session management device establishes the internet of things service transmission path to the user plane device based on the session establishment request message includes: The session management device sends a second request message to the user plane device, where the second request message is for requesting to establish a second session between the session management device and the user plane device, the second request message includes an identifier of the second session and first indication information, and the first indication information indicates the user plane device to allocate the uplink destination address. The session management device receives a second response message from the user plane device, where the second response message indicates that establishment of the second session is completed, and the second response message includes the address information of the user plane device. Establishing the second session between the session management device and the user plane device is equivalent to establishing the transmission path for transmission of the internet of things service data between the session management device and the user plane device. The second session may be a session established through an N4 interface, and may be referred to as an N4 session.

With reference to the first aspect, in some implementations of the first aspect, that the session management device establishes the internet of things service transmission path to the user plane device based on the session establishment request message includes: The session management device sends a second request message to the user plane device, where the second request message is for requesting to establish the internet of things service transmission path between the session management device and the user plane device, and the second request message includes an identifier of the internet of things service transmission path between the session management device and the user plane device and the address information of the user plane device. The session management device receives a second response message from the user plane device, where the second response message indicates that establishment of the internet of things service transmission path between the session management device and the user plane device is completed. In this implementation, the session management device allocates the uplink destination address/the address information of the user plane device, where the uplink destination address/the address information of the user plane device is used by the terminal device for transmission of the internet of things service data; and sends the uplink destination address/the address information of the user plane device to the user plane device.

With reference to the first aspect, in some implementations of the first aspect, that the session management device establishes the internet of things service transmission path to the user plane device based on the session establishment request message includes: The session management device sends a second request message to the user plane device, where the second request message is for requesting to establish a second session between the session management device and the user plane device, and the second request message includes an identifier of the second session and the address information of the user plane device. The session management device receives a second response message from the user plane device, where the second response message indicates that establishment of the second session is completed.

With reference to the first aspect, in some implementations of the first aspect, the method further includes: The session management device receives second information sent by the internet of things management device, where the second information indicates the terminal device to execute an internet of things service instruction. The session management device sends third information to the user plane device, where the third information indicates the terminal device to execute the internet of things service instruction. The internet of things management device may send, to the terminal device via a user plane/the session management device and the user plane device, the information indicating the terminal device to execute the internet of things service instruction.

With reference to the first aspect, in some implementations of the first aspect, when the internet of things service instruction indicates to obtain target internet of things service data from an internet of things device, the method further includes: The session management device receives the target internet of things service data sent by the user plane device. The session management device sends the target internet of things service data to the internet of things management device. The terminal device may send the target internet of things service data to the internet of things management device via the user plane/the user plane device and the session management device.

According to a second aspect, a communication method is provided. The method may be performed by an internet of things management device, or a chip or a chip system in the internet of things management device. The method includes: The internet of things management device receives a first request message from a session management device, where the first request message is for requesting to establish an internet of things service transmission path between the session management device and the internet of things management device, the first request message includes at least one of an identifier of a terminal device, address information of the terminal device, or an identifier of a session that the terminal device requests to establish, and the internet of things service transmission path is for transmission of internet of things service data. The internet of things management device sends a first response message to the session management device, where the first response message indicates that establishment of the internet of things service transmission path between the session management device and the internet of things management device is completed.

The method provided in the second aspect is an internet of things management device side method corresponding to the first aspect. For beneficial effects thereof, refer to the first aspect.

With reference to the second aspect, in some implementations of the second aspect, the first request message further includes information about an access and mobility management device serving the terminal device and/or information about a radio access network device serving the terminal device.

With reference to the second aspect, in some implementations of the second aspect, the method further includes: The internet of things management device receives fourth information from a service requester, where the fourth information indicates to execute an internet of things service instruction in a target area. The internet of things management device determines the terminal device located in the target area to execute the internet of things service instruction. The internet of things management device sends second information to the session management device, where the second information indicates the terminal device to execute the internet of things service instruction. The internet of things management device may send, to the terminal device via a user plane/the session management device and a user plane device, the information indicating the terminal device to execute the internet of things service instruction.

With reference to the second aspect, in some implementations of the second aspect, the method further includes: The internet of things management device receives fourth information from a service requester, where the fourth information indicates to execute an internet of things service instruction in a target area. The internet of things management device determines the terminal device located in the target area to execute the internet of things service instruction. The internet of things management device sends fifth information to the access and mobility management device, where the fifth information indicates the terminal device to execute the internet of things service instruction. The internet of things management device may send, to the terminal device via a control plane/the access and mobility management device, the information indicating the terminal device to execute the internet of things service instruction.

The terminal device that is determined by the internet of things management device to execute the internet of things service instruction may be a terminal device on which a reader function has been activated. In one case, a terminal device supporting the reader function may serve as a reader only after the reader function is activated. In another case, the reader function of a terminal device supporting the reader function is activated, and the terminal device supporting the reader function may directly serve as a reader. In this case, the terminal device supporting the reader function may be understood as having activated the reader function, and may directly serve as the reader.

With reference to the second aspect, in some implementations of the second aspect, when the internet of things service instruction indicates to obtain target internet of things service data from an internet of things device, the method further includes: The internet of things management device receives the target internet of things service data sent by the session management device. The internet of things management device sends the target internet of things service data to the service requester.

With reference to the second aspect, in some implementations of the second aspect, that the internet of things management device determines the terminal device located in the target area to execute the internet of things service instruction includes: The internet of things management device determines that a reader function has been activated on the terminal device, and determines that the terminal device is located in the target area.

With reference to the second aspect, in some implementations of the second aspect, that the internet of things management device determines that the terminal device is located in the target area includes: The internet of things management device determines, based on the information about the access and mobility management device serving the terminal device and/or the information about the radio access network device serving the terminal device, that the terminal device is located in the target area; the internet of things management device determines, by triggering a positioning procedure of the terminal device, that the terminal device is located in the target area; or the internet of things management device determines, based on location information that is of the terminal device and that is obtained from a unified data management device or location information that is of a terminal device supporting the reader function and that is obtained from the unified data management device, that the terminal device is located in the target area.

With reference to the second aspect, in some implementations of the second aspect, that the internet of things management device determines that the reader function has been activated on the terminal device includes: The internet of things management device sends a subscription request message to the unified data management device, where the subscription request message is for obtaining information about the terminal device supporting the reader function. The internet of things management device receives a subscription response message from the unified data management device, where the subscription response message includes at least one of an identifier of the terminal device supporting the reader function, the location information of the terminal device supporting the reader function, status information of the terminal device supporting the reader function, or information about a core network device serving the terminal device supporting the reader function. The internet of things management device determines, based on the subscription response message, that the reader function has been activated on the terminal device. In this example, it may be considered that the reader function of the terminal device supporting the reader function is activated.

With reference to the second aspect, in some implementations of the second aspect, that the internet of things management device determines that the reader function has been activated on the terminal device includes: The internet of things management device receives second indication information from the terminal device, where the second indication information indicates that the reader function has been activated on the terminal device.

According to a third aspect, a communication method is provided. The method may be performed by a user plane device, or a chip or a chip system in the user plane device. The method includes: The user plane device receives a second request message from a session management device, where the second request message is for requesting to establish an internet of things service transmission path between the session management device and the user plane device, the second request message includes an identifier of the internet of things service transmission path and first indication information, the first indication information indicates the user plane device to allocate an uplink destination address used by a terminal device for transmission of internet of things service data, and the internet of things service transmission path is for transmission of the internet of things service data. The user plane device sends a second response message to the session management device, where the second response message indicates that establishment of the internet of things service transmission path is completed, and the second response message includes address information of the user plane device.

The method provided in the third aspect is a user plane device side method corresponding to the first aspect and the second aspect. For beneficial effects thereof, refer to the first aspect or the second aspect.

With reference to the third aspect, in some implementations of the third aspect, the method further includes: The user plane device receives third information sent by the session management device, where the third information indicates the terminal device to execute an internet of things service instruction. The user plane device sends sixth information to the terminal device, where the sixth information indicates the terminal device to execute the internet of things service instruction.

With reference to the third aspect, in some implementations of the third aspect, when the internet of things service instruction indicates to obtain target internet of things service data from an internet of things device, the method further includes: The user plane device receives the target internet of things service data from the terminal device. The user plane device sends the target internet of things service data to the session management device.

According to a fourth aspect, a communication method is provided. The method may be performed by a user plane device, or a chip or a chip system in the user plane device. The method includes: The user plane device receives a second request message from a session management device, where the second request message is for requesting to establish a second session between the session management device and the user plane device, the second request message includes an identifier of the second session and first indication information, and the first indication information indicates the user plane device to allocate an uplink destination address. The user plane device sends a second response message to the session management device, where the second response message indicates that establishment of the second session is completed, and the second response message includes address information of the user plane device.

According to a fifth aspect, a communication method is provided. The method may be performed by a user plane device, or a chip or a chip system in the user plane device. The method includes: The user plane device receives a second request message from a session management device, where the second request message is for requesting to establish an internet of things service transmission path between the session management device and the user plane device, and the second request message includes an identifier of the internet of things service transmission path between the session management device and the user plane device and address information of the user plane device. The user plane device sends a second response message to the session management device, where the second response message indicates that establishment of the internet of things service transmission path between the session management device and the user plane device is completed.

According to a sixth aspect, a communication method is provided. The method may be performed by a user plane device, or a chip or a chip system in the user plane device. The method includes: The user plane device receives a second request message from a session management device, where the second request message is for requesting to establish a second session between the session management device and the user plane device, and the second request message includes an identifier of the second session and address information of the user plane device. The user plane device sends a second response message to the session management device, where the second response message indicates that establishment of the second session is completed.

According to a seventh aspect, a communication method is provided. The method may be performed by a session management device, or a chip or a chip system in the session management device. The method includes: The session management device receives a session establishment request message from a terminal device, where the session establishment request message is for requesting to establish a first session for transmission of internet of things service data. The session management device obtains address information of an internet of things management device from the internet of things management device based on the session establishment request message, where the internet of things management device is for transmission of the internet of things service data corresponding to the first session. The session management device sends a session establishment accept message to the terminal device, where the session establishment accept message includes an uplink destination address used by the terminal device for transmission of the internet of things service data, and the uplink destination address includes the address information of the internet of things management device.

Based on the foregoing technical solution, the terminal device supporting a reader function may request the session management device to establish the first session for transmission of the internet of things service data. The session management device obtains the address information of the internet of things management device from the internet of things management device, where the internet of things management device is for transmission of the internet of things service data corresponding to the first session. The uplink destination address used by the terminal device for transmission of the internet of things service data is an address of the internet of things management device. A user plane device sends the internet of things service data to the internet of things management device when the uplink destination address of the received internet of things service data is the address of the internet of things management device. In this solution, the terminal device serving as a reader can communicate with an internet of things device, and the terminal device serving as the reader can be interconnected to a functional device that is in a core network and that is responsible for managing the internet of things device. When serving as the reader, the terminal device can transmit the internet of things service data to the internet of things management device via the user plane device. In addition, terminal devices have good mobility, and are widely distributed. Therefore, the terminal device serving as the reader is more flexible than an access network device serving as the reader.

With reference to the seventh aspect, in some implementations of the seventh aspect, that the session management device obtains the address information of the internet of things management device from the internet of things management device based on the session establishment request message includes: The session management device sends a third request message to the internet of things management device, where the third request message is for requesting to obtain the address information of the internet of things management device, the third request message includes address information corresponding to the terminal device, and the address information corresponding to the terminal device includes address information of the terminal device and/or address information of a user plane device corresponding to the terminal device. The session management device receives a third response message from the internet of things management device, where the third response message includes the address information of the internet of things management device.

With reference to the seventh aspect, in some implementations of the seventh aspect, the third request message further includes information about an access and mobility management device serving the terminal device and/or information about a radio access network device serving the terminal device. The information about the access and mobility management device serving the terminal device and/or the information about the radio access network device serving the terminal device may be for determining a location of the terminal device.

With reference to the seventh aspect, in some implementations of the seventh aspect, the method further includes: The session management device sends first indication information to the user plane device, where the first indication information indicates the user plane device to allocate the address information used by the terminal device for transmission of the internet of things service data. The session management device receives the address information of the user plane device from the user plane device. In this implementation, the session management device indicates the user plane device to allocate the address information that is of the user plane device and that is used by the terminal device for transmission of the internet of things service data. Optionally, the address information that is of the user plane device and that is used by the terminal device for transmission of the internet of things service data may alternatively be allocated and sent to the user plane device by the session management device.

With reference to the seventh aspect, in some implementations of the seventh aspect, the method further includes: The internet of things management device receives fourth information from a service requester, where the fourth information indicates to execute an internet of things service instruction in a target area. The internet of things management device determines the terminal device located in the target area to execute the internet of things service instruction. The internet of things management device sends seventh information to the user plane device, where the seventh information indicates the terminal device to execute the internet of things service instruction. The internet of things management device may send, to the terminal device via the user plane device, the information indicating to execute the internet of things service instruction.

With reference to the seventh aspect, in some implementations of the seventh aspect, when the internet of things service instruction indicates to obtain target internet of things service data from an internet of things device, the method further includes: The internet of things management device receives the target internet of things service data sent by the user plane device. The internet of things management device sends the target internet of things service data to the service requester. The terminal device may send the target internet of things service data to the internet of things management device via the user plane device.

According to an eighth aspect, a communication method is provided. The method may be performed by an internet of things management device, or a chip or a chip system in the internet of things management device. The method includes: The internet of things management device receives a third request message from a session management device, where the third request message is for requesting to obtain address information of the internet of things management device, the third request message includes address information corresponding to a terminal device that requests to establish a first session, the address information corresponding to the terminal device includes address information of the terminal device and/or address information of a user plane device corresponding to the terminal device, and the internet of things management device and the user plane device are for transmission of internet of things service data corresponding to the first session. The internet of things management device sends a third response message to the session management device, where the third response message includes the address information of the internet of things management device.

The method provided in the eighth aspect is an internet of things management device side method corresponding to the seventh aspect. For beneficial effects thereof, refer to the seventh aspect.

With reference to the eighth aspect, in some implementations of the eighth aspect, the third request message further includes information about an access and mobility management device serving the terminal device and/or information about a radio access network device serving the terminal device.

With reference to the eighth aspect, in some implementations of the eighth aspect, the method further includes: The internet of things management device receives fourth information from a service requester, where the fourth information indicates to execute an internet of things service instruction in a target area. The internet of things management device determines the terminal device located in the target area to execute the internet of things service instruction. The internet of things management device sends seventh information to the user plane device, where the seventh information indicates the terminal device to execute the internet of things service instruction. The internet of things management device may send, to the terminal device via a user plane/the user plane device, the information indicating to execute the internet of things service instruction.

With reference to the eighth aspect, in some implementations of the eighth aspect, the method further includes: The internet of things management device receives fourth information from a service requester, where the fourth information indicates to execute an internet of things service instruction in a target area. The internet of things management device determines the terminal device located in the target area to execute the internet of things service instruction. The internet of things management device sends fifth information to the access and mobility management device, where the fifth information indicates the terminal device to execute the internet of things service instruction. The internet of things management device may send, to the terminal device via a control plane/the access and mobility management device, the information indicating to execute the internet of things service instruction.

The terminal device that is determined by the internet of things management device to execute the internet of things service instruction may be a terminal device on which a reader function has been activated. In one case, a terminal device supporting the reader function may serve as a reader only after the reader function is activated. In another case, the reader function of a terminal device supporting the reader function is activated, and the terminal device supporting the reader function may directly serve as a reader. In this case, the terminal device supporting the reader function may be understood as having activated the reader function, and may directly serve as the reader.

With reference to the eighth aspect, in some implementations of the eighth aspect, when the internet of things service instruction indicates to obtain target internet of things service data from an internet of things device, the method further includes: The internet of things management device receives the target internet of things service data sent by the user plane device. The internet of things management device sends the target internet of things service data to the service requester.

With reference to the eighth aspect, in some implementations of the eighth aspect, that the internet of things management device determines the terminal device located in the target area to execute the internet of things service instruction includes: The internet of things management device determines that a reader function has been activated on the terminal device, and determines that the terminal device is located in the target area.

With reference to the eighth aspect, in some implementations of the eighth aspect, that the internet of things management device determines that the terminal device is located in the target area includes:

The internet of things management device determines, based on the information about the access and mobility management device serving the terminal device and/or the information about the radio access network device serving the terminal device, that the terminal device is located in the target area; the internet of things management device determines, by triggering a positioning procedure of the terminal device, that the terminal device is located in the target area; or the internet of things management device determines, based on location information that is of the terminal device and that is obtained from a unified data management device or location information that is of a terminal device supporting the reader function and that is obtained from the unified data management device, that the terminal device is located in the target area.

With reference to the eighth aspect, in some implementations of the eighth aspect, that the internet of things management device determines that the reader function has been activated on the terminal device includes: The internet of things management device sends a subscription request message to the unified data management device, where the subscription request message is for learning of information about the terminal device supporting the reader function. The internet of things management device receives a subscription response message from the unified data management device, where the subscription response message includes at least one of an identifier of the terminal device supporting the reader function, the location information of the terminal device supporting the reader function, status information of the terminal device supporting the reader function, or information about a core network device serving the terminal device supporting the reader function. The internet of things management device determines, based on the subscription response message, that the reader function has been activated on the terminal device.

With reference to the eighth aspect, in some implementations of the eighth aspect, that the internet of things management device determines that the reader function has been activated on the terminal device includes: The internet of things management device receives second indication information from the terminal device, where the second indication information indicates that the reader function has been activated on the terminal device.

According to a ninth aspect, a communication method is provided. The method may be performed by a user plane device, or a chip or a chip system in the user plane device. The method includes: The user plane device receives first indication information from a session management device, where the first indication information indicates the user plane device to allocate address information used by a terminal device for transmission of internet of things service data. The user plane device sends address information of the user plane device to the session management device.

The method provided in the ninth aspect is an internet of things management device side method corresponding to the seventh aspect and the eighth aspect. For beneficial effects thereof, refer to the seventh aspect or the eighth aspect.

With reference to the ninth aspect, in some implementations of the ninth aspect, the method further includes: The user plane device receives seventh information sent by an internet of things management device, where the seventh information indicates the terminal device to execute an internet of things service instruction. The user plane device sends sixth information to the terminal device, where the sixth information indicates the terminal device to execute the internet of things service instruction.

With reference to the ninth aspect, in some implementations of the ninth aspect, when the internet of things service instruction indicates to obtain target internet of things service data from an internet of things device, the method further includes: The user plane device receives the target internet of things service data from the terminal device. The user plane device sends the target internet of things service data to the internet of things management device.

According to a tenth aspect, a communication method is provided. The method may be performed by a terminal device, or a chip or a chip system in the terminal device. The method includes: The terminal device determines to establish a first session for transmission of internet of things service data. The terminal device sends a session establishment request message to a session management device, where the session establishment request message is for requesting to establish the first session for transmission of the internet of things service data. The terminal device receives a session establishment accept message from the session management device, where the session establishment accept message includes an uplink destination address used by the terminal device for transmission of the internet of things service data, the uplink destination address includes address information of a user plane device or address information of an internet of things management device, and the internet of things management device and the user plane device are for transmission of the internet of things service data corresponding to the first session.

Based on the foregoing technical solution, the terminal device supporting a reader function may request the session management device to establish the first session for transmission of the internet of things service data. The session management device establishes, to each of the user plane device and the internet of things management device, an internet of things service transmission path for transmission of the internet of things service data, or the session management device obtains the address information of the internet of things management device from the internet of things management device. The uplink destination address used by the terminal device for transmission of the internet of things service data includes an address of the user plane device or an address of the internet of things management device. The user plane device sends the internet of things service data to the session management device when the uplink destination address of the received internet of things service data is the address of the user plane device, and the session management device sends the internet of things service data to the internet of things management device; or the user plane device sends the internet of things service data to the internet of things management device when the uplink destination address of the received internet of things service data is the address of the internet of things management device. In this solution, the terminal device serving as a reader can communicate with an internet of things device, and the terminal device serving as the reader can be interconnected to a functional device that is in a core network and that is responsible for managing the internet of things device. When serving as the reader, the terminal device can transmit the internet of things service data to the internet of things management device via the user plane device or the user plane device and the session management device. In addition, terminal devices have good mobility, and are widely distributed. Therefore, the terminal device serving as the reader is more flexible than an access network device serving as the reader.

With reference to the tenth aspect, in some implementations of the tenth aspect, that the terminal device determines to establish the first session for transmission of the internet of things service data includes: The terminal device sends third indication information to an access and mobility management device, where the third indication information indicates that the terminal device supports a reader function. The terminal device receives eighth information from the access and mobility management device, where the eighth information indicates a session parameter for transmission of the internet of things service data. The terminal device determines, based on the eighth information, to establish the first session for transmission of the internet of things service data.

With reference to the tenth aspect, in some implementations of the tenth aspect, the method further includes: The terminal device sends second indication information to the internet of things management device, where the second indication information indicates that the reader function has been activated on the terminal device.

With reference to the tenth aspect, in some implementations of the tenth aspect, the method further includes: The terminal device receives sixth information sent by the user plane device, where the sixth information indicates the terminal device to execute an internet of things service instruction. The terminal device executes the internet of things service instruction.

With reference to the tenth aspect, in some implementations of the tenth aspect, when the internet of things service instruction indicates to obtain target internet of things service data from an internet of things device, that the terminal device executes the internet of things service instruction includes: The terminal device receives the target internet of things service data from the internet of things device based on the internet of things service instruction. The terminal device sends the target internet of things service data to the user plane device or the internet of things management device by using the uplink destination address.

According to an eleventh aspect, a communication apparatus is provided. The apparatus may be used in the session management device in the first aspect or the seventh aspect. The apparatus includes a transceiver unit, configured to implement a receiving function and a sending function in the method according to the first aspect or the seventh aspect; and a processing unit, configured to implement a function of establishing the internet of things service transmission path to each of the user plane device and the internet of things management device in the method according to the first aspect, or configured to implement a function of obtaining the address information of the internet of things management device from the internet of things management device in the method according to the seventh aspect.

According to a twelfth aspect, a communication apparatus is provided. The apparatus may be used in the internet of things management device in the second aspect or the eighth aspect. The apparatus includes: a transceiver unit, configured to implement a receiving function and a sending function in the method according to the second aspect or the eighth aspect; and a processing unit, configured to implement a function of determining the terminal device located in the target area to execute the internet of things service instruction in the method according to the second aspect or the eighth aspect.

According to a thirteenth aspect, a communication apparatus is provided. The apparatus may be used in the user plane device in the third aspect, the fourth aspect, the fifth aspect, the sixth aspect, or the ninth aspect. The apparatus includes a transceiver unit, configured to implement a receiving function and a sending function in the method according to the third aspect, the fourth aspect, the fifth aspect, the sixth aspect, or the ninth aspect.

According to a fourteenth aspect, a communication apparatus is provided. The apparatus may be used in the terminal device in the tenth aspect. The apparatus includes: a transceiver unit, configured to implement a receiving function and a sending function in the method according to the tenth aspect; and a processing unit, configured to implement a function of determining to establish the first session for transmission of the internet of things service data in the method according to the tenth aspect.

According to a fifteenth aspect, a communication apparatus is provided, and includes a processor and a memory. The memory is configured to store a computer program, and the processor is configured to execute the computer program stored in the memory, to cause the communication apparatus to perform the method according to any one of the first aspect to the tenth aspect and the possible implementations of the first aspect to the tenth aspect.

According to a sixteenth aspect, a communication device is provided, and includes an input/output interface and a logic circuit. The input/output interface is configured to obtain input information and/or output information. The logic circuit is configured to perform the method according to any one of the first aspect to the tenth aspect or the possible implementations of the first aspect to the tenth aspect, and perform processing and/or generate the output information based on the input information.

According to a seventeenth aspect, a communication system is provided, and includes a session management device, an internet of things management device, a user plane device, and a terminal device. The session management device is configured to implement the method according to any one of the first aspect or the seventh aspect and the possible implementations of the first aspect or the seventh aspect, the internet of things management device is configured to implement the method according to any one of the second aspect or the eighth aspect and the possible implementations of the second aspect or the eighth aspect, the user plane device is configured to implement the method according to any one of the third aspect, the fourth aspect, the fifth aspect, the sixth aspect, or the ninth aspect and the possible implementations of the third aspect, the fourth aspect, the fifth aspect, the sixth aspect, or the ninth aspect, and the terminal device is configured to implement the method according to any one of the tenth aspect and the possible implementations of the tenth aspect.

According to an eighteenth aspect, a computer-readable storage medium is provided. The computer-readable medium stores a computer program. When the computer program is run on a computer, the computer is caused to perform the method according to any one of the first aspect to the tenth aspect and the possible implementations of the first aspect to the tenth aspect.

According to a nineteenth aspect, a computer program product including instructions is provided. When the instructions are executed by a computer, a communication apparatus is caused to implement the method according to any one of the first aspect to the tenth aspect and the possible implementations of the first aspect to the tenth aspect.

The solutions provided in the eleventh aspect to the nineteenth aspect are for implementing or cooperatively implementing the methods provided in the first aspect to the tenth aspect, and therefore can achieve beneficial effects the same as or corresponding to those achieved by the first aspect to the tenth aspect. Details are not described herein again.

### BRIEF DESCRIPTION OF DRAWINGS

FIG. 1 is a diagram of transmission of a passive internet of things service;
FIG. 2 is a diagram of a protocol stack of an internet of things device;
FIG. 3 is a schematic interaction flowchart of a registration procedure of a terminal device;
FIG. 4 is a schematic interaction flowchart of a session establishment procedure of a terminal device;
FIG. 5 is a diagram of an architecture of a system to which an embodiment of this application is applicable;
FIG. 6 is a diagram of an access network device serving as a reader and a terminal device serving as the reader;
FIG. 7 is a schematic interaction flowchart of a communication method according to an embodiment of this application;
FIG. 8 is a diagram of a protocol stack corresponding to a communication method according to an embodiment of this application;
FIG. 9 is a diagram of a registration procedure of a terminal device in a communication method according to an embodiment of this application;
FIG. 10A and FIG. 10B are a diagram of a session establishment procedure of a terminal device in a communication method according to an embodiment of this application;
FIG. 11 is a schematic interaction flowchart of another communication method according to an embodiment of this application;
FIG. 12 is a diagram of a protocol stack corresponding to another communication method according to an embodiment of this application;
FIG. 13A and FIG. 13B are a diagram of a session establishment procedure of a terminal device in another communication method according to an embodiment of this application; and
FIG. 14 to FIG. 20 are schematic block diagrams of communication apparatuses according to embodiments of this application.

### DESCRIPTION OF EMBODIMENTS

The following describes technical solutions in this application with reference to accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, satellite communication, a 5G communication system, a 6th generation (6th generation, 6G) communication system, or a new communication system emerging in the future.

The communication system used in this application includes one or more transmitting ends and one or more receiving ends. Signal transmission between the transmitting end and the receiving end may be performed by using a radio wave, or may be performed by using a transmission medium such as visible light, a laser, infrared, and an optical fiber.

For example, the transmitting end may be a terminal device, a base station, or another device that can obtain sensing information and/or artificial intelligence information, or chips or chip systems in these devices. The receiving end may be a sensing center that performs fusion processing on the sensing information and/or the artificial intelligence information, or a chip or a chip system in the sensing center.

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), an uncrewed aerial vehicle, a machine type communication (machine type communication, MTC) terminal, a wireless terminal in self driving (self driving), or the like. The user equipment includes vehicle user equipment.

For example, a network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), a device that undertakes a base station function in device to device (device to device, D2D), an access point (access point, AP) in a wireless fidelity (wireless fidelity, Wi-Fi) system, a radio relay node, a wireless backhaul node, an uncrewed aerial vehicle, a transmission point (transmission point, TP), or a transmission and reception point (transmission and reception point, TRP), may be a gNB or a transmission point (for example, a TRP or a TP) in new radio (new radio, NR), or one antenna panel or a group of antenna panels (including a plurality of antenna panels) of a base station in NR, or may be a network node that constitutes a gNB or a transmission point, for example, a building baseband unit (building baseband unit, BBU) or a distributed unit (distributed unit, DU). Alternatively, a network device may be a vehicle-mounted device, a wearable device, a network device in a 5G network, a network device in an evolved public land mobile network (public land mobile network, PLMN) network, or the like, or a network device deployed on a satellite. This is not limited.

The network device has abundant product forms. For example, in a product implementation process, a BBU and a radio frequency unit (radio frequency unit, RFU) may be integrated into a same device, and the device is connected to an antenna array through a cable (for example but not limited to, a feeder). A BBU and an RFU may alternatively be disposed separately, are connected to each other through an optical fiber, and communicate with each other by using, for example but not limited to, a common public radio interface (common public radio interface, CPRI) protocol. In this case, the RFU is usually referred to as a remote radio unit (remote radio unit, RRU), and is connected to an antenna array through a cable. In addition, the RRU may alternatively be integrated with the antenna array. For example, this structure is used for an active antenna unit (active antenna unit, AAU) product in a current market.

In addition, the BBU may be further decomposed into a plurality of parts. For example, the BBU may be further divided into a central unit (central unit, CU) and a distributed unit (distributed unit, DU) based on real-time quality of processed services. The CU is responsible for processing non-real-time protocols and services, and the DU is responsible for processing physical layer protocols and real-time services. Further, some physical layer functions may be separated from the BBU or the DU and integrated into an AAU.

To facilitate understanding of embodiments of this application, the following briefly describes technical solutions related to embodiments of this application.
I. Brief introduction to a passive internet of things (passive internet of things, P-IoT) technology

In a passive internet of things, some network nodes may be passive, semi-passive, semi-active, or active. For example, an internet of things device has a capacitor that can store electric power, and may store power such as solar power and radio power in an environment in the capacitor. The network nodes may obtain power from the solar power, a radio frequency, wind power, water power, tidal power, or the like. A manner of obtaining the power is not limited. These network nodes are not equipped with or do not depend on power supply devices such as batteries, but obtain the power from the environment, to support sensing, transmission, and distributed computing of data. These network nodes may further store the obtained power. The passive internet of things technology may be understood as an ambient power-enabled internet of things (ambient power-enabled IoT, A-IoT) technology.

A passive internet of things architecture may include the internet of things device, a reader, a server, and the like. The internet of things device may be in a tag form, or may be in any other terminal form. This is not limited. In this application, a tag may be replaced with the internet of things device. It may be understood that the tag is a specific device form of the internet of things device. A device form of the internet of things device is not limited in this application. The reader may be an access network device, for example, a base station, a pole station, a micro base station, a macro base station, or an integrated access and backhaul (integrated access and backhaul, IAB) node. Alternatively, the reader may be a terminal device, for example, a device like a mobile phone, an internet of things device, or a handheld reader. The reader performs contactless bidirectional data communication in a radio frequency manner, and reads from and writes to an electronic tag or a radio frequency card in the radio frequency manner, to identify a target and exchange data. There are two cases of a working manner of the reader. One is that when entering an effective identification range of the reader, the tag receives a radio frequency signal sent by the reader, and sends, by using power obtained from an induced current, information stored in a chip (corresponding to a passive tag). The other is that the tag may store a part of electric power by using the solar power and the like, so that the tag can actively send a signal at a frequency (corresponding to a semi-passive tag or a semi-active tag). After receiving and decoding the information, the reader sends decoded information to a central information system for related data processing.

The passive internet of things technology is widely applied to various industries and fields. The following briefly lists two application scenarios:
1. Warehouse/Transportation/Materials: Goods are embedded with or attached with passive or semi-passive tags. In a logistics process, information related to goods stored in the warehouse and a shopping mall is automatically collected by the reader, so that management personnel can quickly query a system for the information about the goods, a risk of discarding or theft is reduced, a goods handover speed and goods handover accuracy can be improved, and unauthorized distribution and counterfeiting are prevented.
2. Fixed asset management: For some places in which assets are enormous or articles are valuable, for example, a library, an art museum, and a museum, a complete management procedure or a strict protection measure are needed. When storage information of a book or a valuable article abnormally changes, the system immediately reminds an administrator, to process a related case.

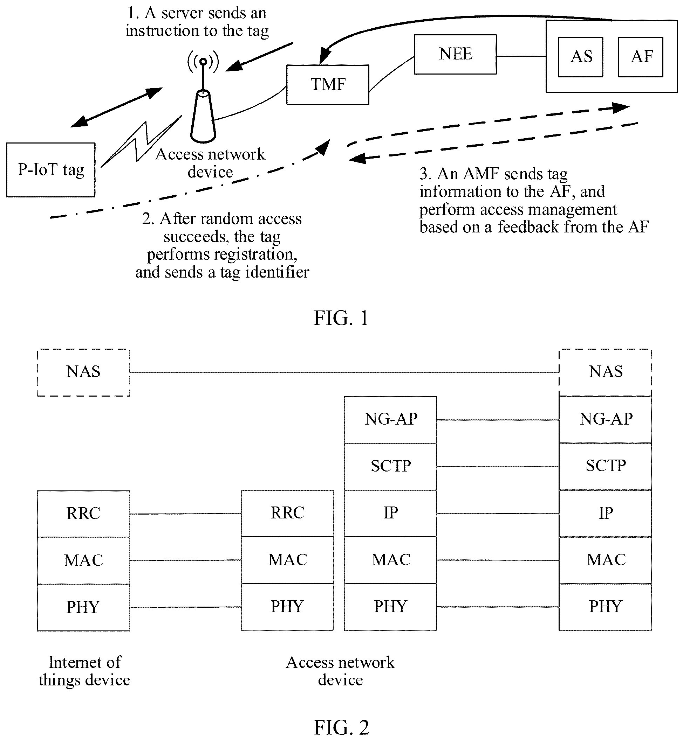

FIG. 1 is a diagram of transmission of a passive internet of things service. A characteristic thereof is that a core network device performs a procedure related to the passive internet of things service, for example, functions such as tag access management, security authentication, instruction transmission, and tag management. The core network function may be an access management device, for example, an access and mobility management function (access and mobility management function, AMF), to perform tag management; or may be a newly added function shown in FIG. 1, for example, an internet of things management function (IoT management function, IMF) or an internet of things device management function (IoT device management function, IDMF), which may be referred to as an ambient power-enabled internet of things management function (ambient IoT management function, AIMF), an ambient power-enabled internet of things device management function (ambient IoT device management function, AIDMF), a passive internet of things management function (passive iot management function, PIMF), a passive internet of things device management function (passive iot device management function, PIDMF), or a tag management function (tag management function, TMF), to perform internet of things device (for example, tag) management or internet of things data transmission. In addition, the newly added function may be interconnected to an access network device. An interconnection manner includes direct interconnection and indirect interconnection. The direct interconnection is equivalent to that there is an interface between the access network device and the function, and the indirect interconnection is performing signaling or data forwarding via the AMF. The access network device/a base station serves as a reader, to perform an operation of an internet of things device, for example, an operation like read, write, inventory, positioning, or disable. Details are described below. In this application, unless otherwise specified, an internet of things management function may be exchanged with an internet of things management device.

When performing an operation on the tag, the server may send an operation instruction to a core network, where the operation instruction may include but is not limited to obtaining tag information, performing a stocktaking operation/an inventory operation, performing a read operation, performing a write operation, performing a disable operation, performing an operation of information exchange with the tag, sending a payload (payload) to the tag, or performing a positioning operation. The operation instruction may include area location information, identification information of the tag, and the like. The base station sends an access instruction to the tag. After random access of the tag succeeds, the base station sends an instruction to the tag, or the base station may forward, to the tag, an instruction sent by the core network. The tag obtains or sends corresponding information based on the instruction. For example, when the instruction is a stocktaking instruction or performing the stocktaking operation, the tag sends the identification information of the tag. When the instruction is a read instruction or performing the read operation, the tag sends data information stored in a storage area of the tag. When the instruction is a write instruction or performing the write operation, the tag may store, in a storage area of the tag, data information that is to be written to the tag and that is included in the instruction. When the instruction is performing the positioning operation, the base station may indicate the tag to send, to the base station, a signal for performing positioning; and the base station receives the positioning signal, and sends the positioning signal to a device that performs a positioning function, to perform the positioning operation. For example, the device that performs the positioning function is a location management function (location management function, LMF). The base station sends or forwards, to the core network, the information sent by the tag, and the core network sends the information to the server.

The server may send the instruction through a control plane channel. As shown in FIG. 1, the server sends the instruction to the AMF or another core network device that has a management tag, performs a tag instruction, or supports a passive internet of things. For example, the server sends the instruction to the TMF. In this case, the server may be an application function (application function, AF), an application server (application server, AS), a passive internet of things application function (P-IoT AF), or an ambient power-enabled internet of things application function (ambient power-enabled IoT application function, A-IoT AF). In a possible implementation, the P-IoT AF or the A-IoT AF sends the instruction to the AMF or the TMF via a network exposure function (network exposure function, NEF).

### II. Tag operation type

1. Details of the stocktaking operation/the inventory operation on the tag are as described above. In a possible implementation, the stocktaking operation may further include a full tag stocktaking operation, that is, obtaining an identifier of a tag within coverage of the reader. It may be understood that, this type of operation may use another name to be distinguished from the foregoing stocktaking operation, for example, may be referred to as the full tag stocktaking operation or an unlimited stocktaking operation. Alternatively, when a tag identifier range in the foregoing stocktaking operation is not limited, it may be understood as that the stocktaking operation is obtaining the identifier of the tag within the coverage of the reader.
2. Read operation: Read data from the tag. The tag may have a storage function, and the storage area of the tag can store data. If an operation requester intends to perform the read operation on the tag, the operation requester sends the read instruction to the reader. The reader performs the read operation on the tag based on the instruction, to read the data from the storage area of the tag; and sends the data to the server.
3. Write operation: Write data to the tag. The operation requester may send the write instruction to the reader. The reader performs the write operation on the tag based on the instruction, to write the data to the storage area of the tag.
4. Disable operation: Disable the tag. The operation requester may send a disable instruction to the reader, where the disable instruction may include a tag identifier, and the tag identifier is an identifier of a tag that the operation requester expects to disable. The reader performs the disable operation on the tag based on the disable instruction. After the operation is completed, the tag is disabled, and cannot be subject to stocktaking or another operation.
5. Obtain the tag information. In a possible implementation, the reader obtains or receives the tag information sent by the tag. The reader sends the tag information to the operation requester or a core network device. In a possible implementation, before the reader obtains the tag information sent by the tag, the reader may receive an operation instruction, and send the operation instruction to the tag. The operation instruction may be from the operation requester, or may be from the core network device. This is not limited in this application. In a possible implementation, the tag information may include the identification information of the tag and/or information stored in the tag.
6. Operation of message exchange with the tag. In a possible implementation, the reader sends, to the tag, a message from the operation requester/the server/the application function. In another possible implementation, the reader receives a message sent by the tag, and sends, to the operation requester/the server/the application function, the message from the tag. In another possible implementation, before receiving a message sent by the tag, the reader may exchange the message, for example, a random number, with the tag.
7. Send the payload to the tag. In a possible implementation, the server or the application function may send the payload to the tag via the reader. After receiving the payload from the server or the application function, the reader sends the payload to the tag. In another possible implementation, the core network device may send the payload to the tag via the reader. After receiving the payload from the core network device, the reader sends the payload to the tag. For example, the payload herein may be an instruction sent by the core network device, the server, or the application function to the tag; data written by the core network device, the server, or the application function to the tag; or application layer information sent by the core network device, the server, or the application function to the tag. Alternatively, the payload herein may be other information related to the tag. This is not limited in this application.
8. Positioning operation: Position the tag or obtain location information of the tag. In a possible implementation, the obtained location information of the tag may include one or more of information such as a coordinate value, longitude and latitude, a cell identity, a tracking area identity, or a network identifier. In a possible implementation, the tag sends the signal for performing positioning, and the reader performs positioning after receiving the signal. Alternatively, the reader sends, after receiving the signal, the signal to a functional device that performs location calculation, to perform location calculation. For example, the reader sends the signal to the LMF after receiving the signal, and the LMF performs tag location calculation based on the signal.

### III. Protocol stack of the internet of things device and capability of the internet of things device

FIG. 2 is a diagram of a protocol stack of an internet of things device. The protocol stack supported by the internet of things device is mainly a control plane protocol stack, and includes a non-access stratum (non-access stratum, NAS) protocol stack, namely, a protocol for interaction between the internet of things device and the core network; an RRC (radio resource control) protocol stack, namely, a protocol for interaction with the access network device; and a medium access control (medium access control, MAC) layer and physical layer (physical layer, PHY) protocol stack, namely, a protocol for data transmission.

The internet of things device in embodiments of this application may be an internet of things device with low power consumption and low complexity. The internet of things device may not have a battery or an active communication capability, and needs to perform data transmission under network excitation. In addition, when the internet of things device is not excited, the internet of things device may not be capable of recording temporary information, and the temporary information is erased after a power failure.

### IV. Registration procedure of the terminal device and session establishment procedure of the terminal device

### 1. Registration procedure of the terminal device

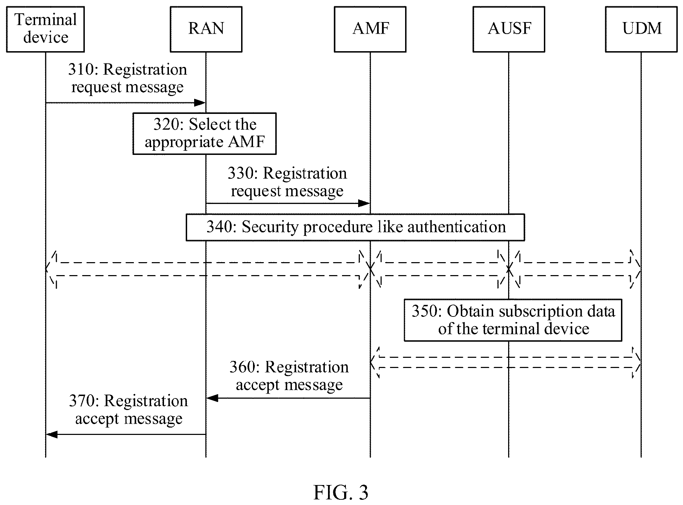

FIG. 3 is a schematic interaction flowchart of a registration procedure of a terminal device. Specific steps are as follows:
310: The terminal device sends a registration request message to a radio access network (radio access network, RAN), where the registration request message carries a registration type (registration type) and identification information of the terminal device. An access network device includes the RAN. There are the following several registration types.
(1) Initial registration (initial registration): a registration procedure initiated when the terminal device is in a deregistered state.
(2) Mobility registration update (mobility registration update): a registration procedure that needs to be initiated by the terminal device when the terminal device moves.
(3) Periodic registration update (periodic registration update): a registration procedure initiated because a periodic registration update timer expires and when the terminal device is in a registered state.
(4) Emergency registration (emergency registration): a registration procedure initiated when the terminal device is in a service-restricted state.

If the terminal device has a valid 5G globally unique temporary identity (5G globally unique temporary identity, 5G-GUTI), the 5G-GUTI is carried in the registration request message. If the terminal device does not have a valid 5G-GUTI, a subscription concealed identifier (subscription concealed identifier, SUCI) is carried in the registration request message. In the emergency registration, if the terminal device does not have a valid 5G-GUTI, an SUCI, a subscription permanent identifier (subscription permanent identifier, SUPI), where the SUCI is an encrypted SUPI, a permanent equipment identifier (permanent equipment identifier, PEI) is carried in the registration request message.

320: The RAN selects an appropriate AMF.

330. The RAN sends, to the AMF, the registration request message sent by the terminal device. After receiving the registration request sent by the terminal device, the AMF may determine, based on a cell accessed by the terminal device, that the terminal device uses an NB-IoT access technology.

340: The AMF selects an appropriate authentication service function (authentication server function, AUSF), to perform a security procedure like authentication; and the terminal device, the AMF, the AUSF, and a unified data management (unified data management, UDM) interact with each other, to complete the security procedure like the authentication. For a terminal device in the 3rd generation partnership project (the 3rd generation partnership project, 3GPP), the authentication procedure is bidirectional authentication between the terminal device and a network side.

350: After authentication between the terminal device and the network side succeeds, the AMF interacts with the UDM, to obtain subscription data of the terminal device.

360: The AMF sends, to the RAN, a NAS message that needs to be forwarded by the RAN to the terminal device, where the NAS message includes a registration accept message sent by the AMF to the terminal device.

370: The RAN forwards, to the terminal device, the registration accept message (the NAS message) sent by the AMF.

### 2. Session establishment procedure of the terminal device

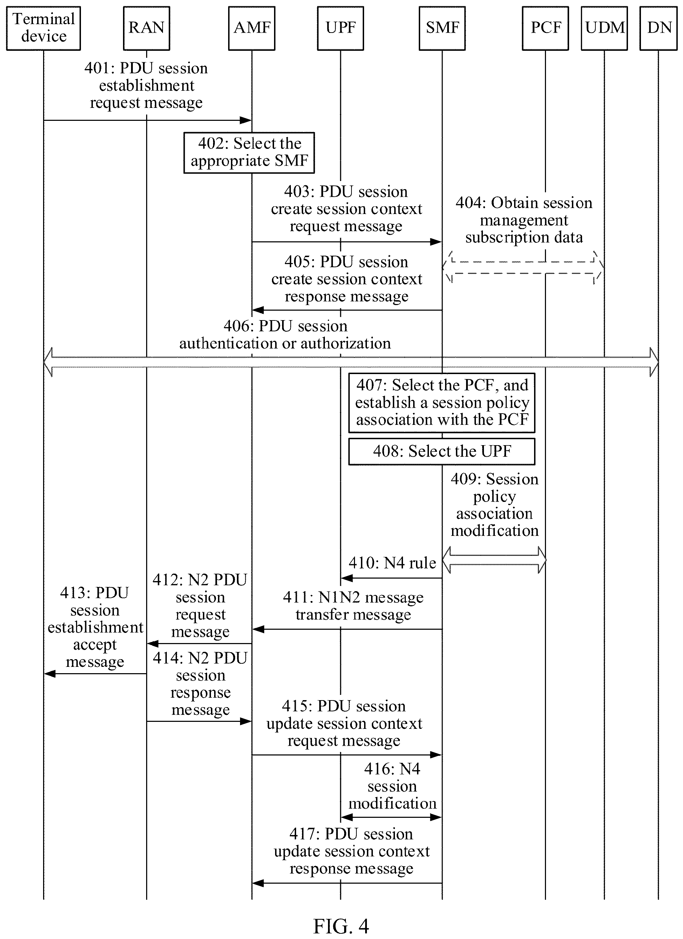

FIG. 4 is a schematic interaction flowchart of a session establishment procedure of a terminal device. Specific steps are as follows:
401: The terminal device sends a protocol data unit (protocol data unit, PDU) session establishment request (session establishment request) message to an AMF, where the PDU session establishment request message is a NAS message, the PDU session establishment request message carries parameters such as a PDU session identifier (PDU session ID), a request type (request type), a data network (data network, DN) name (data network name, DNN) requested by the terminal device, and single network slice selection assistance information (single network slice selection assistance information, S-NSSAI), and the single network slice selection assistance information identifies a network slice.
402: The AMF selects an appropriate session management function (session management function, SMF).
403: The AMF sends a PDU session create session context request message to the SMF, where the PDU session create session context request message carries parameters such as an identifier of the terminal device, the DNN requested by the terminal device, the PDU session ID, and the S-NSSAI.
404: The SMF obtains session management subscription data from a UDM. This step is an optional step.
405: The SMF feeds back a PDU session create session context response message to the AMF.
406: Perform a PDU session authentication or authorization procedure. This step is an optional step.
407: If a dynamic policy and charging control (policy and charging control, PCC) rule is needed, the SMF selects a policy control function (policy control function, PCF), and establishes a session policy association with the PCF. Specifically, the SMF sends a policy association establishment request (policy association establishment request) message to the PCF, and the PCF sends a policy association establishment response (policy association establishment response) message to the SMF, where the policy association establishment response message includes policy control and charging rule (policy control and charging rule) information.
408: The SMF selects an appropriate user plane function (user plane function, UPF).
409: The SMF initiates session policy association modification to the PCF. In this step, the SMF sends, to the PCF, an internet protocol (internet protocol, IP) address allocated to the terminal device.
410: The SMF establishes an N4 connection to the UPF. Specifically, the SMF sends an N4 rule to the UPF, where the N4 rule includes rules such as a packet detection rule (packet detection rule, PDR) and a forwarding action rule (forwarding action rule, FAR).
411: The SMF sends an N1N2 message transfer (N1N2 message transfer) message to the AMF, where the N1N2 message transfer message includes information such as the PDU session identifier, N2 session management information (N2 session management information, N2 SM information), and an N1 session management container (N1 session management container, N1 SM container). The N2 SM information is sent by the SMF to a RAN via the AMF, and information in the N1 SM container is sent by the SMF to the terminal device via the AMF, where the information in the N1 SM container is subsequently sent by the AMF to the terminal device via a NAS message. The N1 SM container includes a PDU session establishment accept (PDU session establishment accept) message. The session establishment accept message may include the IP address allocated to the terminal device, namely, a source IP address used by the terminal device to send an uplink message. The N2 SM container includes core network tunnel information (core network tunnel information). The core network tunnel information includes a tunnel endpoint identifier of a UPF end and/or address information of the UPF end, namely, a destination address used by the RAN to forward uplink data. The UPF may determine, based on the core network tunnel information, a specific session of a specific terminal device, where the data is from the specific session of the specific terminal device.
412: The AMF sends an N2 PDU session request message to the RAN, where the N2 PDU session request message carries the N2 SM information and the NAS message that needs to be sent to the terminal device, and the NAS message includes the session identifier and the N1 SM container.
413: The RAN establishes an air interface resource with the terminal device, and the RAN sends the NAS message to the terminal device, where the NAS message carries session-related parameter information such as the PDU session establishment accept message.
414: The RAN sends an N2 PDU session response message to the AMF, where the N2 PDU session response message may include access network tunnel information allocated by the RAN, the access network tunnel information includes a tunnel endpoint identifier of a RAN end and/or address information of the RAN end, and the address information may be an IP address, namely, a destination address used by the UPF to forward downlink data. The RAN may determine, based on the access network tunnel information, a specific session of a specific terminal device, where data is from the specific session of the specific terminal device.
415: The AMF sends, to the SMF via a PDU session update session context request message, the message sent by the RAN.
416: The SMF sends the tunnel endpoint identifier of a RAN side and/or the address information of the RAN end to the UPF by using an N4 session modification procedure.
417: The SMF sends a PDU session update session context response message to the AMF. A subsequent step is optional, and is not quite related to this embodiment of this application. Details are not described herein again.

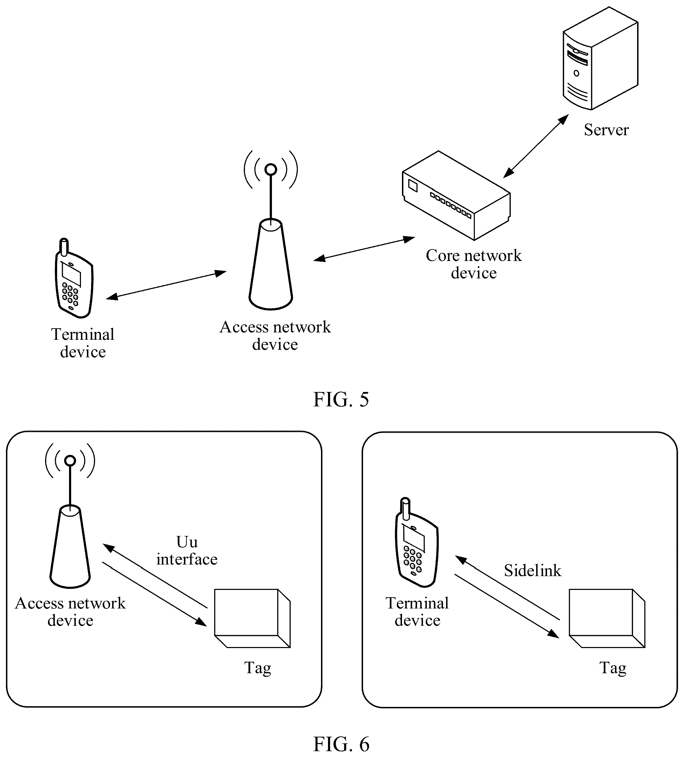

FIG. 5 is a diagram of an architecture of a system to which an embodiment of this application is applicable. The system includes a core network device, an access network device, a terminal device, and a server. The core network device includes an AMF, a UDM, a unified data repository (unified data repository, UDR), an SMF, a UPF, a PCF, and a TMF. The access network device includes a RAN. The terminal device includes UE and an internet of things device. The internet of things device includes a terminal that performs communication by using a reflected carrier, a terminal supporting active carrier generation, and a terminal supporting active carrier recovery. In a possible implementation, the internet of things device may be a passive tag, a semi-passive tag, a semi-active tag, an active tag, or the like. The server includes a service requester, for example, a server or an AF that delivers an instruction. The service requester may be referred to as an operation requester, and may also be referred to as a third party. The following describes functions of the devices.
(1) An access and mobility management device (for example, the AMF) may be referred to as an access and mobility management function entity, an access and mobility management function network element, a mobility management device, a mobility management network element, or a mobility management entity, and belongs to the core network device. The AMF may be configured to manage access control and mobility of the terminal device. During actual application, the AMF includes an access and mobility management function in a mobility management entity (mobility management entity, MME) in a network framework in LTE, and an access management function is added. The AMF may be specifically responsible for registration, mobility management, a tracking area update procedure, reachability detection, session management network element selection, mobility state transition management, and the like of the terminal device. For example, in 5G, an access and mobility management network element may be an AMF network element. In future communication, for example, in 6G, the access and mobility management network element may still be the AMF network element, or may have another name. This is not limited in this application. When the access and mobility management network element is the AMF network element, the AMF may provide an Namf service.
(2) An internet of things management function is configured to perform functions such as management of the internet of things device which is also referred to as an ambient power-enabled internet of things device, data processing of the internet of things device, data routing of the internet of things device, and reader management. The internet of things management function may be referred to as an ambient power-enabled internet of things management function (AIMF) or a passive internet of things management function (Passive IoT management function). The internet of things management function may also be referred to as an internet of things device management function (IoT device management function) or an internet of things device management device, for example, may be referred to as an ambient power-enabled terminal management function (for example, an AIDMF) or a tag management function (TMF). The internet of things management function may parse instructions from the service requester or an application function, determine, based on the instructions, a reader for executing the instructions, and indicate the reader to perform an operation of the internet of things device or indicate the reader to perform a random access procedure of the internet of things device; receive data from the internet of things device via the reader; and optionally, perform data processing of the internet of things device, and send the data of the internet of things device to the service requester.
(3) A user plane device (for example, the UPF) belongs to the core network device. The device may be responsible for forwarding and receiving data in the terminal device. The user plane device may receive data from a data network, and transmit the data to the terminal device via an access network element. A user plane function network element may further receive data from the terminal device via the access network element, and forward the data to the data network. A transmission resource and a scheduling function that are used by the user plane function network element to provide a service for the terminal device are managed and controlled by a session management function network element.
(4) A session management device (for example, the SMF) belongs to the core network device. The device may be configured to be responsible for session management of the terminal device, including session establishment, modification, and release, selection and reselection of the user plane function network element, IP address allocation of the terminal device, quality of service (quality of service, QoS) control, and the like. For example, in 5G, the session management network element may be an SMF network element. In a future communication system, for example 6G, the session management network element may still be the SMF network element, or may have another name. This is not limited in this application. When the session management network element is the SMF network element, the SMF may provide an Nsmf service.
(5) A unified data management device (for example, the UDM) may be referred to as a unified data management network element, a data management device, or a unified data management entity. The unified data management network element is for terminal device identification handling, access authentication, registration, mobility management, and the like. In a 5G communication system, the unified data management may be the UDM or the unified data management device. In the future communication system, the unified data management may still be the UDM network element, or may have another name. This is not limited in embodiments of this application. The unified data management device may be the core network device, or the unified data management device may be a control plane device.
(6) A user data repository device (for example, the UDR) may be referred to as a user data repository entity or a user data repository network element, and may be understood as a name of a unified data repository network element in a 5G architecture. A user data repository mainly includes the following functions: functions of storage and retrieval of subscription data, policy data, application data, and other types of data.
(7) The terminal device may be UE, a terminal, an access terminal, a subscriber unit, a subscriber station, a mobile station, a remote station, a remote terminal, a mobile device, a user terminal, a wireless communication device, a user agent, or a user apparatus. Alternatively, the UE may be a cellular phone, a cordless phone, a SIP phone, a WLL station, a PDA, a handheld device with a wireless communication function, a computing device, another processing device connected to a wireless modem, a vehicle-mounted device, a wearable device, a terminal device in a 5G network, a terminal device in a future evolved PLMN, a non-terrestrial network (non-terrestrial network, NTN), or the like; may be a terminal device like an end device, a logical entity, an intelligent device, for example, a mobile phone, or a smart terminal; a communication device like a server, a gateway, a base station, or a controller; or an internet of things device like a tag, the passive tag, the active tag, the semi-active tag, a sensor, an electric meter, or a water meter; or may be an uncrewed aerial vehicle (unmanned aerial vehicle, UAV) with a communication function. When the terminal is a passive terminal, a semi-active terminal, or the tag, the terminal may obtain power to receive or send data. The power can be obtained from radio, solar power, light power, wind power, water power, heat power, kinetic power, and the like. A manner in which the passive or semi-active terminal obtains the power is not limited in this application. It should be noted that the tag in this application may be in a tag form, or may be in any terminal form.
(8) The operation requester may be referred to as the service requester or the third party, and may be a server, an application function, or another device that indicates to execute an operation instruction. In embodiments of this application, the operation requester may be understood as a device that sends the operation instruction. For example, the operation requester may be a server/a P-IoT server/an AF/another device that sends the operation instruction. The operation requester may correspond to a specific type of user. The specific type of user may include an enterprise, a tenant, a third party, or a company. This is not limited. That the operation requester corresponds to the specific type of user may be understood as that the operation requester belongs to the specific type of user and is managed by the specific type of user.
(9) The reader interacts with the tag through a radio frequency signal or a radio signal. It should be understood that the name of reader is not limited in this application. The reader may also be referred to as a reader/writer, or may have another name. It may be understood as that the names of the reader and the reader/writer are interchangeable. The reader herein has a function related to the reader in this application. For example, the reader has a function of performing the operation (tag information obtaining, the stocktaking operation, the read operation, the write operation, the disable operation, or the operation of message exchange with the tag) in this application on the internet of things device, and has functions such as obtaining charging related information and/or charging information, and sending the charging information to a charging function (charging function, CHF). In a possible implementation, the reader may send, to the tag, an instruction from the server or the application function, or the reader may send, to the server or the application function, a message from the tag. In a possible implementation, the reader may obtain, based on an instruction delivered by the server, information stored in a specified tag. For example, if the instruction is the stocktaking operation/the inventory operation, the reader obtains identification information of the tag, where the identification information may be a unique identifier of the tag, or may be a temporary identity of the tag. For example, if the instruction is the read operation, the reader reads data in a storage area of the tag. Optionally, in some scenarios in which information stored in the tag needs to be rewritten, the reader may further have a write function. If the instruction is the write operation, the reader writes data to the storage area of the tag. In addition, the reader may further perform the disable operation on the tag. After the disable operation is performed on the tag, the tag is disabled, and an operation like tag information obtaining, the stocktaking operation, the read operation, the operation of message exchange with the tag, or the write operation cannot be performed on the tag. In a possible implementation, that the tag is disabled and tag information obtaining cannot be performed on the tag may be understood as that the reader cannot obtain tag information of the disabled tag after the tag is disabled. In another possible implementation, that the tag is disabled and the operation of message exchange with the tag cannot be performed on the tag may be understood as that the reader cannot perform message exchange with the disabled tag after the tag is disabled. In this application, the reader may be a terminal device, for example, UE, a mobile phone, or a handheld terminal. Alternatively, the reader may be an access network device, for example, a pole station, an eNodeB, a gNodeB, or an IAB node. A form of the reader is not limited in this application.
(10) A policy control device (for example, the PCF) is mainly responsible for providing a unified policy framework for network behavior management, providing a policy rule for a control plane function, obtaining registration information related to a policy decision, and the like. It should be noted that, these functional units may work independently, or may be combined to implement some control functions, for example, access control and mobility management functions such as access authentication, security encryption, and location registration on the terminal device, and session management functions such as establishment, release, and change of a user plane transmission path.

In a current passive internet of things technology, a scenario in which an access network device serves as a reader is mainly considered, and a case in which the reader is the access network device is mainly considered. How to support a terminal device in serving as the reader also needs to be considered. Currently, a communication method is urgently needed to enable the terminal device to serve as the reader to communicate with an internet of things device. FIG. 6 is a diagram of an access network device serving as a reader and a terminal device serving as the reader. When the access network device serves as the reader, an internet of things device communicates with the reader through a Uu interface. When the terminal device serves as the reader, the internet of things device communicates with the reader through a sidelink (sidelink, SL) or a Uu interface.

In an internet of things scenario, a core network has a functional device that is responsible for managing the internet of things device, for example, an AMF or a TMF/an AIMF/an IMF. Therefore, a user plane transmission path established by the reader needs to be interconnected to the functional device. If the user plane transmission path established by the reader is not interconnected to the functional device, the reader cannot obtain a downlink instruction from the functional device to trigger a random access procedure of the internet of things device and send the instruction. Likewise, after obtaining data from the internet of things device, the reader also needs to send the data to the functional device. Therefore, in comparison with an existing session establishment procedure of the terminal device, in this embodiment of this application, a session establishment manner of the terminal device needs to be improved, to enable a transmission path that is established by the terminal device serving as the reader and that is for transmission of the data corresponding to the internet of things device, so that interconnection (for communication) to the functional device that is in the core network and that is responsible for managing the internet of things device or processing the data of the internet of things device can be implemented.

Embodiments of this application provide a communication method, so that a terminal device serving as a reader can communicate with an internet of things device. In embodiments of this application, a TMF is used as an example of an internet of things management device, an SMF is used as an example of a session management device, a UPF is used as an example of a user plane device, an AMF is used as an example of an access and mobility management device, and a UDM is used as an example of a unified data management device. In embodiments of this application, the internet of things device may include a tag or an ambient power-enabled device (ambient IoT device).

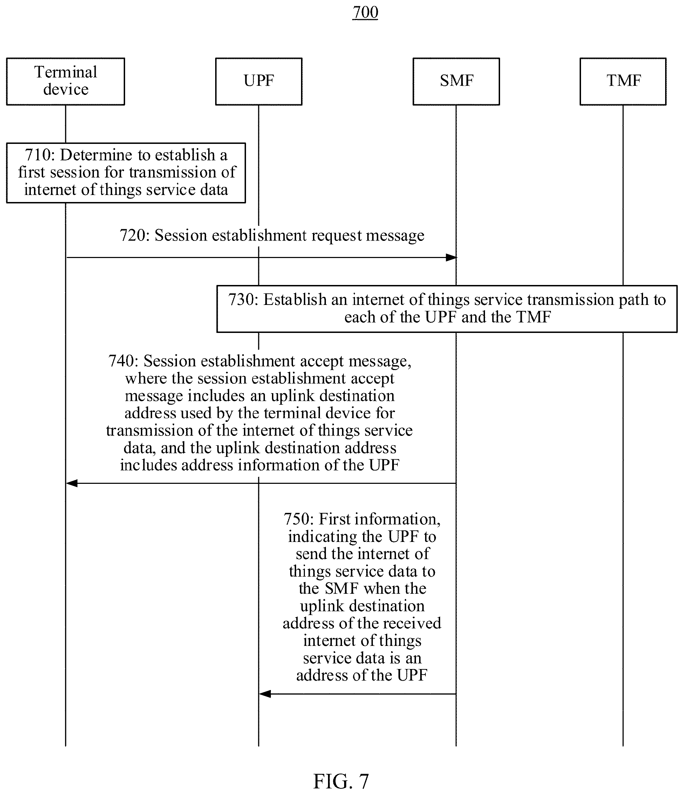

FIG. 7 is a schematic interaction flowchart of a communication method 700 according to an embodiment of this application. In the method, a data transmission path of a terminal device includes: the terminal device-a RAN-a UPF-an SMF-a TMF-a service requester or the terminal device-the RAN-the UPF-the SMF-the TMF.

710: The terminal device determines to establish a first session for transmission of internet of things service data.

For example, the terminal device sends third indication information to an AMF, where the third indication information indicates that the terminal device supports a reader function; the AMF receives the third indication information from the terminal device; the AMF sends the third indication information to a PCF; the PCF receives the third indication information sent by the AMF; the PCF generates eighth information based on the third indication information, where the eighth information indicates a session parameter for transmission of the internet of things service data, or the eighth information indicates the terminal device to establish a session for transmission of the internet of things service data; the PCF sends the eighth information to the AMF; the AMF receives the eighth information from the PCF; the AMF sends the eighth information to the terminal device; the terminal device receives the eighth information from the AMF; and the terminal device determines, based on the eighth information, to establish the first session for transmission of the internet of things service data. The third indication information may indicate whether the terminal device supports the reader function. When the third indication information indicates that the terminal device supports the reader function, the PCF generates the eighth information based on the third indication information, and the terminal device determines, based on the eighth information, to establish the first session for transmission of the internet of things service data.

In a possible implementation, for the third indication information that is sent by the terminal device and that is received by the AMF and the third indication information sent by the AMF to the PCF, formats, constructions, messages that carry the third indication information, and the like may be the same or different. For example, the AMF may forward the third indication information from the terminal device to the PCF. For example, the third indication information may be information such as reader indication (reader indication) information and reader capability (reader capability or reader capable) information. Specific content of the third indication information sent by the terminal device to the AMF and the third indication information sent by the AMF to the PCF is not limited in this application.

Optionally, the eighth information includes a UE route selection policy (UE route selection policy, URSP) rule, and the URSP rule may be a dedicated URSP rule used when the terminal device serves as a reader. Optionally, the URSP rule indicates the session parameter for transmission of the internet of things service data. For example, the session parameter includes at least one of slice information or a data network name (data network name, DNN), and the slice information includes S-NSSAI. Optionally, the URSP rule indicates whether a new session needs to be established for transmission of the internet of things service data. When the URSP rule indicates that the new session needs to be established for transmission of the internet of things service data, the terminal device determines, according to the URSP rule included in the eighth information, to establish the first session for transmission of the internet of things service data.

For example, a traffic descriptor (traffic descriptor) included in the URSP rule may indicate an internet of things service or the reader. In a possible implementation, one or more of an IP address of a service flow, a fully qualified domain name (fully qualified domain name, FQDN), or the DNN included in the URSP rule indicate the internet of things service; or a new information element (information element, IE) is added to the traffic descriptor, to indicate the internet of things service. In another possible implementation, the traffic descriptor included in the URSP rule includes indication information indicating the reader. For example, the indication information is "reader" or "reader mode" information, and indicates the terminal device to establish the session according to the URSP rule when the terminal device serves as the reader.

Optionally, when the terminal device serves as the reader, the terminal device may be configured to establish, according to the dedicated URSP rule, the session for transmission of the internet of things service data. For example, the terminal device obtains configuration information, where the configuration information indicates the terminal device to establish, according to the dedicated URSP rule when the terminal device serves as the reader, the session for transmission of the internet of things service data. That the terminal device serves as the reader may be understood as that the reader function or a reader mode is activated on the terminal device. Activating the reader function may be understood as enabling the reader function, and activating the reader mode may be understood as enabling the reader mode. For example, if the reader function is activated on the terminal device, the terminal device determines, according to the dedicated URSP rule, to establish the first session for transmission of the internet of things service data.

In a possible implementation, a registration request message sent by the terminal device to the AMF includes the third indication information, and a registration accept message sent by the AMF to the terminal device includes the eighth information.

720: The terminal device sends a session establishment request message to the SMF, where the session establishment request message is for requesting to establish the first session for transmission of the internet of things service data. Accordingly, the SMF receives the session establishment request message from the terminal device. The session establishment request message includes at least one of a request type, an identifier of the first session, a data network name requested by the terminal device, or the slice information. Optionally, when the URSP rule included in the eighth information indicates that the new session needs to be established for transmission of the internet of things service data, the terminal device sends a session modification message to the SMF after determining, based on the eighth information, to establish the first session for transmission of the internet of things service data, where the session modification message is for requesting to establish the first session for transmission of the internet of things service data. Specifically, the terminal device sends the session establishment request message to the AMF. Accordingly, the AMF receives the session establishment request message from the terminal device. The AMF selects, based on the session establishment request message, an SMF supporting the internet of things service. The AMF sends the session establishment request message to the SMF. Accordingly, the SMF receives the session establishment request message sent by the AMF.

For example, one or more of the request type, the identifier of the first session, the data network name requested by the terminal device, or the slice information included in the session establishment request message indicate that the first session that the session establishment request message is for requesting to establish is for transmission of the internet of things service data. For example, the session establishment request message includes fourth indication information, and the fourth indication information indicates that the first session is for transmission of the internet of things service data. For example, the fourth indication information may be internet of things indication information, for example, passive internet of things indication (passive IoT indication) information or ambient internet of things indication (ambient IoT indication) information.

In a possible implementation, the request type may indicate that the first session is for transmission of the internet of things service data, or indicate that the first session is a session established when the terminal device serves as the reader. For example, a session type indicated by the request type may be an internet of things session (IoT session) or a reader session (reader session).

In another possible implementation, the identifier of the first session may indicate that the first session is for transmission of the internet of things service data, or indicate that the first session is a session established when the terminal device serves as the reader. For example, the identifier of the first session may be a specific identifier that indicates the session for transmission of the internet of things service data. For example, the identifier of the first session may be a session identifier for which a specific value, character string, or encoding format is used.

In another possible implementation, the data network name and/or the slice information may indicate that the first session is for transmission of the internet of things service data, or indicate that the first session is a session established when the terminal device serves as the reader. For example, the data network name and/or the slice information may be a specific data network name and/or specific slice information that indicate/indicates the internet of things service.

Optionally, the AMF may send, to the SMF, information about an access network device serving the terminal device, for example, identification information of the access network device serving the terminal device. The identification information of the access network device includes a global radio access network node identifier (global RAN node ID), an identifier of a non-3GPP interworking function (non-3GPP interworking function, N3IWF), an identifier of a trusted non-3GPP access node (trusted N3GPP Access Point, TNAP), an identifier of a trusted non-3GPP gateway function (trusted non-3GPP gateway function, TNGF), an identifier of a trusted WLAN interworking function (trusted WLAN interworking function, TWIF), an identifier of a wireline access gateway function (wireline access gateway function, W-AGF), or the like. The information about the access network device serving the terminal device may be for determining a location of the terminal device.

Optionally, the AMF may send location information of the terminal device to the SMF. For example, the location information of the terminal device may include the identification information of the access network device serving the terminal device, a tracking area identity (tracking area identity, TAI), a cell identity (cell ID), longitude and latitude information, or coordinate value information.

In a possible implementation, the AMF may send, to the SMF via a service-oriented message, the information about the access network device serving the terminal device or the location information of the terminal device. The service-oriented message may be a PDU session create session context request (Nsmf_PDUSession_CreateSMContext Request) message or another service-oriented message. The PDU session create session context request message includes the session establishment request message, and the information about the access network device serving the terminal device/the location information of the terminal device. For example, the session establishment request message sent by the AMF to the SMF includes the information about the access network device serving the terminal device or the location information of the terminal device.

730: The SMF establishes an internet of things service transmission path to each of the UPF and the TMF based on the session establishment request message or the fourth indication information, where the internet of things service transmission path is for transmission of the internet of things service data.

In a possible implementation, when determining, based on the session establishment request message or the fourth indication information, that a transmission path for transmission of the internet of things service data needs to be established, the SMF establishes the transmission path to each of the UFP and the TMF. For example, the SMF determines, based on information that is in the session establishment request message and that may indicate that the first session is for transmission of the internet of things service data, for example, one or more of the request type, the identifier of the session, the data network name, or the slice information, that the transmission path for transmission of the internet of things service data needs to be established.

Optionally, the SMF sends a second request message to the UPF, where the second request message is for requesting to establish the internet of things service transmission path between the SMF and the UPF, the second request message includes an identifier of the internet of things service transmission path between the SMF and the UPF and first indication information, and the first indication information indicates the UPF to allocate an uplink destination address used by the terminal device for transmission of the internet of things service data. In a possible implementation, the first indication information may be a name or a type of the second request message. For example, the name or the type of the second request message may indicate the UPF to allocate the uplink destination address used by the terminal device for transmission of the internet of things service data. The UPF receives the second request message from the SMF. The UPF allocates, based on the second request message, the uplink destination address used by the terminal device for transmission of the internet of things service data. For example, the uplink destination address is address information of the UPF. The UPF sends a second response message to the SMF, where the second response message indicates that establishment of the internet of things service transmission path between the SMF and the UPF is completed, and the second response message includes the uplink destination address/the address information of the UPF, where the uplink destination address/the address information of the UPF is used by the terminal device for transmission of the internet of things service data. The SMF receives the second response message from the UPF. When the terminal device needs to transmit the internet of things service data to a network, the address information of the UPF may be used as the uplink destination address. When receiving data whose uplink destination address is the address information of the UPF, the UPF may learn that the data is the internet of things service data, or may determine that the data is the internet of things service data transmitted via the terminal device. The UPF sends the data to the SMF. In this implementation, the SMF indicates the UPF to allocate the uplink destination address/the address information of the UPF, where the uplink destination address/the address information of the UPF is used by the terminal device for transmission of the internet of things service data.

Optionally, the SMF sends a second request message to the UPF, where the second request message is for requesting to establish the internet of things service transmission path between the SMF and the UPF, and the second request message includes an identifier of the internet of things service transmission path between the SMF and the UPF and address information allocated by the SMF. In a possible implementation, the address information is an uplink destination address used by the terminal device for transmission of the internet of things service data. The address information may be address information used by the UPF. For example, the address information is address information of the UPF. The UPF receives the second request message from the SMF. The UPF sends a second response message to the SMF based on the second request message, where the second response message indicates that establishment of the internet of things service transmission path between the SMF and the UPF is completed. The SMF receives the second response message from the UPF. In this implementation, the SMF allocates the uplink destination address/the address information of the UPF, where the uplink destination address/the address information of the UPF is used by the terminal device for transmission of the internet of things service data; and sends the uplink destination address/the address information of the UPF to the UPF.

Optionally, the SMF sends a second request message to the UPF, where the second request message is for requesting to establish a second session between the SMF and the UPF, the second request message includes an identifier of the second session and first indication information, and the first indication information indicates the UPF to allocate an uplink destination address used by the terminal device for transmission of the internet of things service data. For example, the first indication information indicates the UPF to allocate the uplink destination address used by the terminal device for transmission of the internet of things service data. In a possible implementation, the first indication information may be a name or a type of the second request message. For example, the name or the type of the second request message may indicate the UPF to allocate the uplink destination address used by the terminal device for transmission of the internet of things service data. The UPF receives the second request message from the SMF. The UPF allocates, based on the second request message, the uplink destination address used by the terminal device for transmission of the internet of things service data. For example, the uplink destination address may be address information of the UPF. The UPF sends a second response message to the SMF, where the second response message indicates that establishment of the second session is completed, and the second response message includes the address information of the UPF. The SMF receives the second response message from the UPF. Establishing the second session between the SMF and the UPF is equivalent to establishing the transmission path for transmission of the internet of things service data between the SMF and the UPF. The second session may be a session established through an N4 interface, and may be referred to as an N4 session. In this implementation, the SMF indicates the UPF to allocate the uplink destination address/the address information of the UPF, where the uplink destination address/the address information of the UPF is used by the terminal device for transmission of the internet of things service data.

Optionally, the SMF sends a second request message to the UPF, where the second request message is for requesting to establish a second session between the SMF and the UPF, and the second request message includes an identifier of the second session and address information allocated by the SMF. In a possible implementation, the address information is an uplink destination address used by the terminal device for transmission of the internet of things service data. The address information may be address information used by the UPF. For example, the address information is address information of the UPF. The UPF receives the second request message from the SMF. The UPF sends a second response message to the SMF based on the second request message, where the second response message indicates that establishment of the second session is completed. The SMF receives the second response message from the UPF. In this implementation, the SMF allocates the uplink destination address/the address information of the UPF, where the uplink destination address/the address information of the UPF is used by the terminal device for transmission of the internet of things service data; and sends the uplink destination address/the address information of the UPF to the UPF.

Optionally, before the SMF sends the second request message to the UPF, the SMF selects, based on the session establishment request message or the fourth indication information from the terminal device, a UPF supporting transmission of the internet of things service data. The SMF sends the second request message to the UPF supporting transmission of the internet of things service data. Optionally, the second request message sent by the SMF to the UPF further includes an N4 rule, and the N4 rule includes rules such as a PDR and an FAR. In a possible implementation, the first indication information may be included in the N4 rule. In another possible implementation, the address information/the address information of the UPF may be included in the N4 rule, where the address information/the address information of the UPF is allocated by the SMF. For example, the address information that is of the UPF and that is allocated by the SMF may be included in the PDR. For example, when the PDR includes the address information that is of the UPF and that is allocated by the SMF, the FAR may further include information indicating the UPF to forward the internet of things service data whose uplink destination address is the address information of the UPF to the SMF.

For example, the address information of the UPF includes one or more of the following information: an IP address, a MAC address, or port information of the UPF. The IP address may include one or more of the following information: an IPv4 address, an IPv6 address, or an IPv6 prefix (IPv6 prefix).

In a possible implementation, the second request message may be an N4 message, for example, an N4 session establishment request (N4 session establishment request) message or an N4 session modification request (N4 session modification request) message. The second response message may be an N4 message, for example, an N4 session establishment response (N4 session establishment response) message or an N4 session modification response (N4 session modification response) message.

In a possible implementation, that establishment of the internet of things service transmission path between the SMF and the UPF is completed or establishment of the second session is completed may be understood as that the UPF has been installed or configured with a rule sent by the SMF, for example, the N4 rule.

Optionally, the SMF sends a first request message to the TMF, where the first request message is for requesting to establish the internet of things service transmission path between the SMF and the TMF, and the first request message includes at least one of an identifier of the terminal device, address information of the terminal device, or the identifier of the first session. Accordingly, the TMF receives the first request message from the SMF. The TMF establishes the internet of things service transmission path between the TMF and the SMF based on the first request message. The TMF sends a first response message to the SMF, where the first response message indicates that establishment of the internet of things service transmission path between the SMF and the TMF is completed. The SMF receives the first response message from the TMF. The address information of the terminal device in this embodiment of this application may be understood as address information corresponding to the terminal device, for example, address information of a UPF corresponding to the terminal device, address information of an SMF corresponding to the terminal device, or address information of the terminal device. The address information of the UPF corresponding to the terminal device may be understood as address information of a UPF serving the terminal device. The address information of the SMF corresponding to the terminal device may be understood as address information of an SMF serving the terminal device.

In a possible implementation, the first request message may be a service-oriented message, for example, an Ntmf PDUSession_SMContext_Create Request message or an Nsmf PDUSession_SMContext_Create Request message. In another possible implementation, the first response message may be a service-oriented message, for example, an Ntmf PDUSession_SMContext_Create Response message or an Nsmf PDUSession_SMContext_Create Response message.

Optionally, the SMF may send, to the TMF, one or more of the location information of the terminal device, information about a mobility management device serving the terminal device, or the information about the access network device serving the terminal device. For example, the mobility management device serving the terminal device may be an AMF serving the terminal device. Information about the AMF serving the terminal device includes identification information, domain name information, or address information of the AMF serving the terminal device. For example, the identification information of the AMF serving the terminal device may be a globally unique AMF identifier (globally unique AMF identifier, GUAMI) of the AMF; the domain name information of the AMF may be an FQDN of the AMF; and the address information of the AMF may be an IP address or a MAC address of the AMF.

Optionally, the first request message sent by the SMF to the TMF includes one or more of the location information of the terminal device, the information about the mobility management device serving the terminal device, or the information about the access network device serving the terminal device. For example, the first request message sent by the SMF to the TMF includes the information about the AMF serving the terminal device and/or information about a RAN serving the terminal device, and may be for determining the location of the terminal device. For example, the first request message sent by the SMF to the TMF includes the location information of the terminal device. In a possible implementation, the SMF may send, to the TMF via the service-oriented message, one or more of the information about the mobility management device serving the terminal device, the information about the access network device serving the terminal device, or the location information of the terminal device, where the service-oriented message may be the Ntmf_PDUSession_SMContext_Create Request message.

740: The SMF sends a session establishment accept message to the terminal device, where the session establishment accept message includes the uplink destination address used by the terminal device for transmission of the internet of things service data, and the uplink destination address includes the address information of the UPF. Accordingly, the terminal device receives the session establishment accept message from the SMF. Optionally, the session establishment accept message includes an IP address allocated by the SMF or the UPF to the terminal device, namely, a source IP address used by the terminal device for uplink transmission.

For example, the SMF sends an N1N2 message transfer message to the AMF. For example, the N1N2 message transfer message is an Namf_Communication_N1N2MessageTransfer message. Accordingly, the AMF receives the N1N2 message transfer message from the SMF. The N1N2 message transfer message includes the identifier of the first session, N1 session management container information, and N2 session management information, the N1 session management container information includes the session establishment accept message, the N2 session management information needs to be sent, via the AMF, to the RAN accessed by the terminal device, the N1 session management container information needs to be sent to the terminal device via the AMF, and the N2 session management information includes information about a tunnel endpoint identifier of the UPF and/or the address information of the UPF, namely, a destination address used by the RAN to forward uplink data of the terminal device. When the destination address of the uplink data received by the UPF is the information about the tunnel endpoint identifier of the UPF or the address information of the UPF, the UPF may determine a specific session of a specific terminal device, where the uplink data is from the specific session of the specific terminal device.

The AMF sends an N2 PDU session request message to the RAN, where the N2 PDU session request message includes the N2 session management information and a NAS message that needs to be sent to the terminal device, and the NAS message includes the identifier of the first session and the N1 session management container information. The RAN receives the N2 PDU session request message sent by the AMF, and sends, to the terminal device, the NAS message including the identifier of the first session and the N1 session management container information. The terminal device receives the NAS message sent by the RAN, and obtains the session establishment accept message based on the NAS message. The RAN sends an N2 PDU session response message to the AMF, where the N2 PDU session response message indicates that the NAS message has been successfully sent to the terminal device.

Optionally, the N2 PDU session response message sent by the RAN to the AMF includes information about a tunnel endpoint identifier of the RAN and/or address information of the RAN, namely, a destination address used by the UPF to forward downlink data of the terminal device. When receiving the downlink data whose downlink destination address is the information about the tunnel endpoint identifier of the RAN or the address information of the RAN, the RAN may learn of a specific session of a specific terminal device, where the downlink data is from the specific session of the specific terminal device. After the AMF receives the N2 PDU session response message including the information about the tunnel endpoint identifier of the RAN and/or the address information of the RAN, the AMF may send the information about the tunnel endpoint identifier of the RAN and/or the address information of the RAN to the SMF via a PDU session update session context request message. The SMF sends the information about the tunnel endpoint identifier of the RAN and/or the address information of the RAN to the UPF by using an N4 session modification procedure. The SMF sends a PDU session update session context response message to the AMF.

750: The SMF sends first information to the UPF, where the first information indicates the UPF to send the internet of things service data to the SMF when the uplink destination address of the received internet of things service data is an address of the UPF. Step 750 and step 740 may be performed simultaneously, or step 750 may be performed before step 740. This is not specifically limited herein. In a possible implementation, the SMF may send the first information to the UPF in step 730. In a possible implementation, the first information may be the N4 rule, and the N4 rule indicates the UPF to send the internet of things service data to the SMF when the UPF receives the internet of things service data whose uplink destination address is the address of the UPF. For example, the PDR in the N4 rule indicates the internet of things service data whose uplink destination address is the address of the UPF, and the FAR corresponding to the PDR indicates the UPF to report the internet of things service data to the SMF.

In the technical solution provided in this embodiment of this application, the terminal device supporting the reader function may request the SMF to establish the first session for transmission of the internet of things service data. The SMF establishes, to each of the UPF and the TMF, the internet of things service transmission path for transmission of the internet of things service data. The uplink destination address used by the terminal device for transmission of the internet of things service data is the address of the UPF. The UPF sends the internet of things service data to the SMF when the uplink destination address of the received internet of things service data is the address of the UPF. The UPF sends the internet of things service data to the SMF through the transmission path established in step 730. The SMF receives the internet of things service data from the UPF through the transmission path established in step 730. The SMF sends the internet of things service data to a functional device that is responsible for managing an internet of things device or a functional device that is responsible for managing the internet of things service, for example, the TMF or an AIMF. In this solution, the terminal device serving as the reader can communicate with the internet of things device, and the terminal device serving as the reader can be interconnected to the functional device that is in a core network and that is responsible for managing the internet of things device. When serving as the reader, the terminal device can transmit the internet of things service data to the TMF via the UPF and the SMF. In addition, terminal devices have good mobility, and are widely distributed. Therefore, the terminal device serving as the reader is more flexible than an access network device serving as the reader.

Optionally, the service requester sends fourth information to the TMF, where the fourth information indicates to execute an internet of things service instruction in a target area. The TMF receives the fourth information from the service requester. The TMF determines, based on the fourth information, the terminal device located in the target area to execute the internet of things service instruction. In a possible implementation, the TMF determines, based on one or more of the location information of the terminal device, the information about the mobility management device serving the terminal device, or the information about the access network device serving the terminal device, the terminal device located in the target area to execute the internet of things service instruction, where the location information of the terminal device, the information about the mobility management device serving the terminal device, or the information about the access network device serving the terminal device is sent by the SMF. For example, based on one or more of the location information of the terminal device, the information about the mobility management device serving the terminal device, or the information about the access network device serving the terminal device and the target area, the TMF determines the terminal device located in the target area or determines that the terminal device located in the target area, and determines the terminal device to execute the internet of things service instruction, where the location information of the terminal device, the information about the mobility management device serving the terminal device, or the information about the access network device serving the terminal device is sent by the SMF.

In another possible implementation, the TMF determines, by triggering a positioning procedure of the terminal device, that the terminal device is located in the target area, and determines the terminal device to execute the internet of things service instruction. In another possible implementation, the TMF determines, based on location information that is of the terminal device and that is obtained from a UDM or location information that is of a terminal device supporting the reader function and that is obtained from the UDM, that the terminal device is located in the target area, and determines the terminal device to execute the internet of things service instruction.

The TMF sends second information to the SMF serving the terminal device, where the second information indicates the terminal device to execute the internet of things service instruction, and the second information includes identification information of the terminal device or identification information corresponding to the terminal device. For example, the second information includes an SUPI, an SUCI, a general public subscription identifier (generic public subscription identifier, GPSI), or a reader ID of the terminal device, or identification information of the first session. The SMF serving the terminal device may be understood as the SMF that establishes, to the TMF, the internet of things service transmission path corresponding to the terminal device, or an SMF that manages the first session that is established by the terminal device and that is for transmission of the internet of things service data.

The SMF receives the second information sent by the TMF. The SMF determines, based on the second information, that the terminal device is needed to execute the internet of things service instruction. For example, the SMF determines, based on the identification information that is of the terminal device and that is included in the second information or the identification information that corresponds to the terminal device and that is included in the second information, to send the internet of things instruction to the terminal device. The SMF sends third information to the UPF serving the terminal device, where the third information indicates the terminal device to execute the internet of things service instruction, and the third information includes the identification information of the terminal device or the identification information corresponding to the terminal device. In a possible implementation, the SMF sends the third information to the UPF through the transmission path corresponding to the terminal device or the second session. The UPF serving the terminal device may be understood as the UPF that establishes, to the terminal device, the transmission path for transmission of the internet of things service data.

The UPF receives the third information sent by the SMF. The UPF sends sixth information to the terminal device (via the access network device) based on the third information, where the sixth information indicates the terminal device to execute the internet of things service instruction. The terminal device receives (via the access network device) the sixth information sent by the UPF, and executes the internet of things service instruction based on the sixth information. In this implementation, the TMF indicates, via the SMF and the UPF (a user plane), the terminal device to execute the internet of things service instruction.

Optionally, the service requester sends fourth information to the TMF, where the fourth information indicates to execute an internet of things service instruction in a target area. The TMF receives the fourth information from the service requester. The TMF determines, based on the fourth information, the terminal device located in the target area to execute the internet of things service instruction. The TMF sends fifth information to the AMF serving the terminal device, where the fifth information indicates the terminal device to execute the internet of things service instruction. The AMF receives the fifth information sent by the TMF. The AMF sends ninth information to the terminal device based on the fifth information, where the ninth information indicates the terminal device to execute the internet of things service instruction. The terminal device receives the ninth information sent by the AMF, and executes the internet of things service instruction based on the ninth information. In this implementation, the TMF indicates, via the AMF (a control plane), the terminal device to execute the internet of things service instruction.

In a possible implementation, the second information, the third information, the fourth information, the fifth information, the sixth information, and the ninth information may be information in a same format or information in different formats, and messages carrying these pieces of information may be a same message, or may be different messages. This is not limited in this application. In a possible implementation, the internet of things instruction included in the second information, the third information, the fourth information, the fifth information, the sixth information, and the ninth information has a same function.

For example, the TMF may determine, based on an operation type indicated by the internet of things service instruction and information about the target area, a terminal device for executing the internet of things service instruction. For example, when the operation type indicated by the internet of things service instruction is a short-distance operation such as a read operation, a write operation, or a positioning operation, the TMF may determine a terminal device that is located in the target area and that can perform the type of operation to execute the internet of things service instruction.

For example, when the internet of things service instruction indicates to obtain target internet of things service data from a specific internet of things device or write the target internet of things service data to the specific internet of things device, the TMF may determine, based on the information about the target area and identification information that is of the internet of things device and that is included in the internet of things service instruction, the terminal device for executing the internet of things service instruction. For example, the TMF determines, based on a historical operation record or an inventory record, a terminal device that is located in the target area and that obtains the internet of things service data from the internet of things device last time to execute the internet of things service instruction.

For example, when the internet of things service instruction indicates to obtain the target internet of things service data from the internet of things device, the terminal device receives the target internet of things service data from the internet of things device based on the internet of things service instruction, where the second information, the third information, the fourth information, and the sixth information include the identification information of the internet of things device. The terminal device sends the target internet of things service data to the UPF by using the uplink destination address/the address information of the UPF. The UPF receives the target internet of things service data from the terminal device. The UPF determines, based on the uplink destination address/the address information of the UPF, that the target internet of things service data is the internet of things service data sent by the terminal device, and sends the target internet of things service data to the SMF through the internet of things service transmission path established to the SMF in step 730 or the second session. The SMF receives the target internet of things service data from the UPF through the internet of things service transmission path established to the UPF in step 730 or the second session. The SMF determines, based on the internet of things service transmission path or the second session, that the target internet of things service data is the target internet of things service data sent by the terminal device. The SMF sends the target internet of things service data to the TMF through the internet of things service transmission path corresponding to the terminal device/the internet of things service transmission path established between the SMF and the TMF in step 730. The TMF receives the target internet of things service data sent by the SMF. The TMF sends the target internet of things service data to the service requester. After receiving the target internet of things service data sent by the SMF, the TMF may directly forward the target internet of things service data to the service requester; or may process the target internet of things service data, and then send processed target internet of things service data to the service requester.

For example, the fourth information sent by the service requester to the TMF may include address information of a server corresponding to the service requester, and the TMF sends the address information of the server and the internet of things service instruction to the terminal device together via the SMF and the UPF, or the AMF. When the internet of things service instruction indicates to obtain the target internet of things service data from the internet of things device, the terminal device receives the target internet of things service data from the internet of things device based on the internet of things service instruction. The terminal device may send, by using the address information of the server as the uplink destination address, the target internet of things service data to the server via the RAN and the UPF that correspond to the terminal device. In this manner, the uplink data can be transmitted to the server more quickly/with less bypassing, so that user experience can be improved.

The fourth information includes the information about the target area for executing the internet of things service instruction. The information about the target area includes at least one of geographical location information, the cell identity, the tracking area identity, or an operation area identifier. The geographical location information includes information such as longitude and latitude, and a coordinate value. The information about the target area may alternatively be other information that may be for representing an area location. This is not limited in this application. In a possible implementation, the TMF may map or convert the information about the target area into the information about the access network device, the information about the mobility management device, or the location information of the terminal device. The TMF may determine, based on the location information of the terminal device, the information about the mobility management device serving the terminal device, or the information about the access network device serving the terminal device, the terminal device located in the target area.

The fourth information may further include the identification information of the internet of things device. An identifier of the internet of things device may be a tag identifier or an internet of things device identifier segment. The internet of things device identifier segment may indicate one or more internet of things devices. The internet of things service instruction in this embodiment of this application may indicate any operation type in a stocktaking operation/an inventory operation, the read operation, the write operation, a disable operation, tag information obtaining, an operation of message exchange with a tag (the internet of things device), sending a payload to the tag (the internet of things device), or the positioning operation.

In a possible implementation, the terminal device that is determined by the TMF to execute the internet of things service instruction may be a terminal device on which the reader function has been activated. In one case, the terminal device supporting the reader function may serve as the reader only after the reader function is activated. In another case, the reader function of the terminal device supporting the reader function is activated, and the terminal device supporting the reader function may directly serve as the reader. In this case, the terminal device supporting the reader function may be understood as having activated the reader function, and may directly serve as the reader.

Optionally, when the terminal device supporting the reader function may serve as the reader only after the reader function is activated, the TMF determines that the reader function has been activated on the terminal device for executing the internet of things service instruction. Optionally, when the terminal device supporting the reader function may serve as the reader only after the reader function is activated, the TMF determines that the reader function has been activated on the terminal device for executing the internet of things service instruction, and the terminal device is located in the target area.

For example, after the reader function of the terminal device is activated, the terminal device sends second indication information to the TMF via the AMF (the control plane), or the SMF and the UPF (the user plane), where the second indication information indicates that the reader function has been activated on the terminal device. Accordingly, the TMF receives the second indication information from the terminal device. The TMF determines, based on the second indication information, that the reader function has been activated on the terminal device.

For example, the TMF sends a subscription request message to the UDM, where the subscription request message is for learning of information about the terminal device supporting the reader function. The UDM receives the subscription request message from the UDM. The UDM sends a subscription response message to the TMF, where the subscription response message includes at least one of an identifier of the terminal device supporting the reader function, the location information of the terminal device supporting the reader function, status information of the terminal device supporting the reader function, or information about a core network device serving the terminal device supporting the reader function. The TMF receives the subscription response message/a subscription notification message from the UDM, and determines, based on the subscription response message/the subscription notification message, that the reader function has been activated on the terminal device. The status information of the terminal device supporting the reader function includes at least one of a registered state, a deregistered state, a connected state, an inactive state, or an idle state. In this example, it may be considered that the reader function of the terminal device supporting the reader function is activated.

Optionally, the AMF serving the terminal device sends fifth indication information to the UDM, where the fifth indication information indicates that the terminal device supports the reader function. Accordingly, the UDM receives the fifth indication information from the AMF; and based on the fifth indication information, determines the terminal device supporting the reader function/learns of terminal devices supporting the reader function.

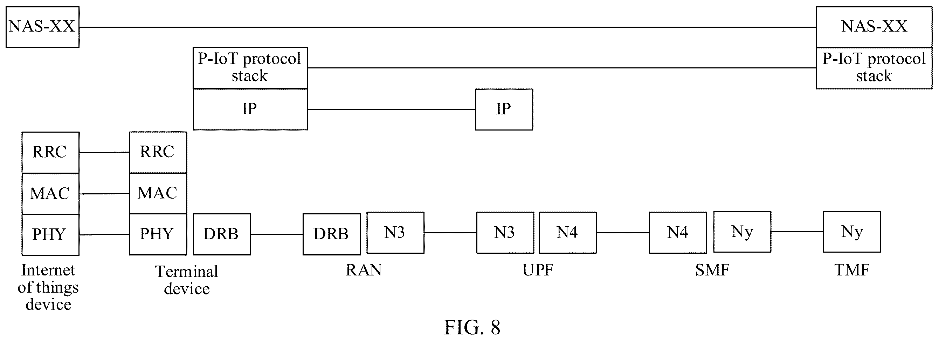

FIG. 8 is a diagram of a protocol stack corresponding to a communication method according to an embodiment of this application. A transmission path for transmission of internet of things service data is established between an SMF and a UPF/a second session is established through an N4 interface between the SMF and the UPF. A transmission path for transmission of the internet of things service data is also established between the SMF and a TMF. The SMF may communicate or perform data transmission with the TMF through a service-oriented interface. An uplink destination address of a terminal device is an address of the UPF. A data transmission path of the terminal device or a transmission path of the internet of things service data includes: the terminal device-a RAN-the UPF-the SMF-the TMF.

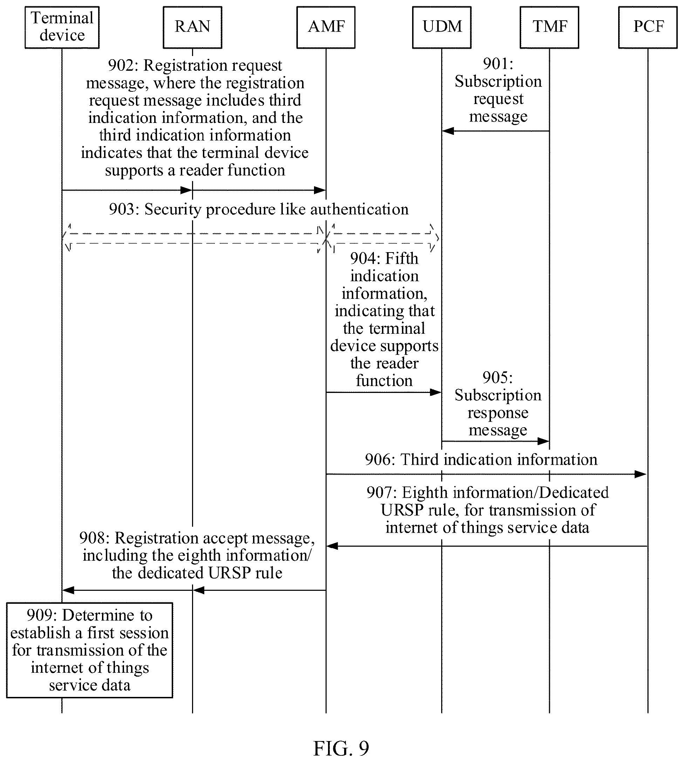

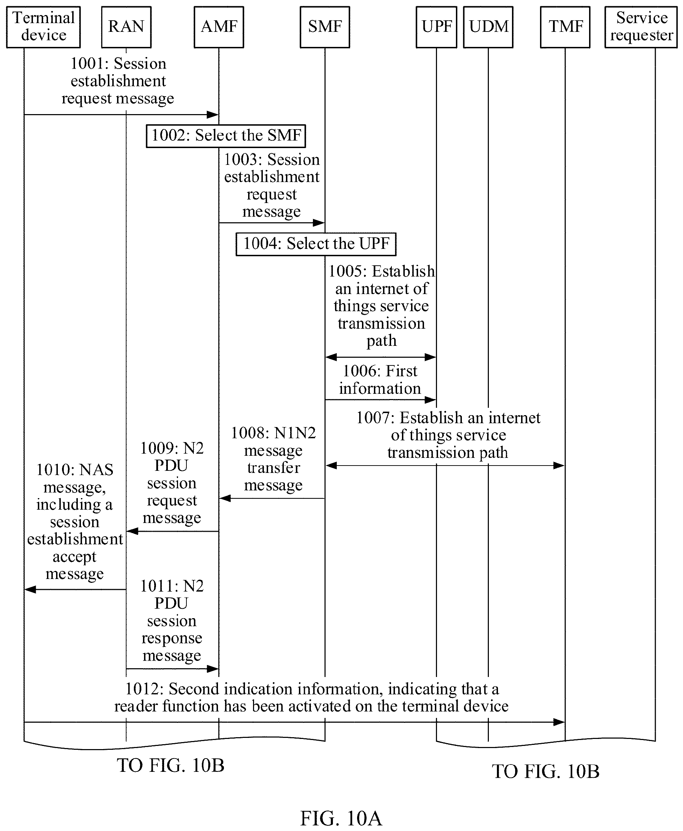

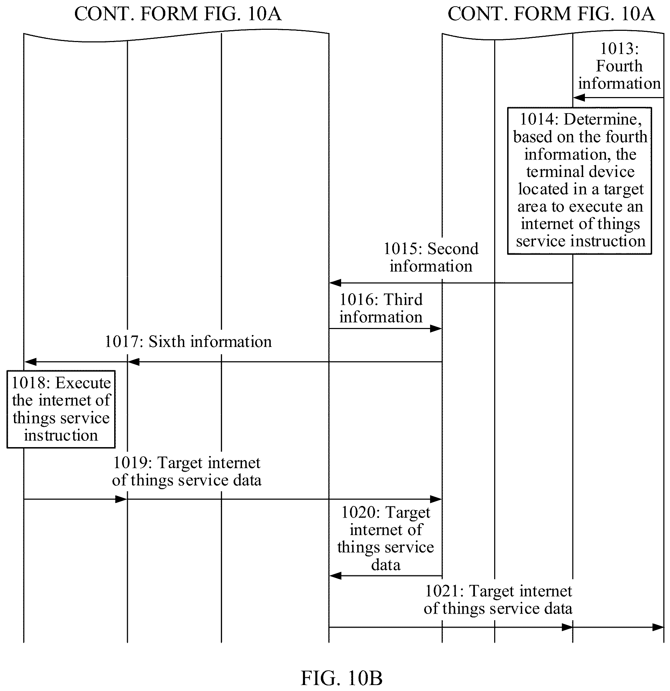

With reference to specific examples, the following describes the communication method provided in embodiments of this application. FIG. 9 is a diagram of a registration procedure of a terminal device in a communication method according to an embodiment of this application. FIG. 10A and FIG. 10B are a diagram of a session establishment procedure of a terminal device in a communication method according to an embodiment of this application. Step 1001 in FIG. 10A is performed after step 909 in FIG. 9.

901: A TMF sends a subscription request message to a UDM, where the subscription request message is for learning of information about the terminal device supporting a reader function. It may be understood as that the subscription request message is used by the UDM to notify the TMF when the UDM determines that there is a terminal device supporting the reader function.

Optionally, the subscription request message may be for learning of location information of the terminal device supporting the reader function. Optionally, the subscription request message may be for learning of status information of the terminal device supporting the reader function, for example, at least one of a registered state, a deregistered state, a connected state, an inactive state, or an idle state. Optionally, the subscription request message may be for learning of information about a core network device or an access network device serving the terminal device supporting the reader function. The subscription request message may not include an identifier of a terminal device; or the subscription request message may include an identifier of a terminal device. The identifier of the terminal device may be an SUPI, a GPSI, an SUCI, or the like. When the subscription request message does not include the identifier of the terminal device, the subscription request message may indicate to obtain information about all terminal devices supporting the reader function. When the subscription request message includes the identifier of the terminal device, the subscription request message may indicate to obtain information about the terminal device that supports the reader function and that corresponds to the identifier of the terminal device. Subscription data that is of the terminal device and that is stored in the UDM may include information about different terminal devices supporting the reader function. When the information about the different terminal devices supporting the reader function is added, updated, or deleted, the UDM may send a subscription response message to the TMF, where the subscription response message includes at least one of an identifier of the terminal device supporting the reader function, the location information of the terminal device supporting the reader function, the status information of the terminal device supporting the reader function, or the information about the core network device serving the terminal device supporting the reader function. The information about the core network device or the access network device serving the terminal device supporting the reader function may include identification information, address information, or domain name information of the core network device like an AMF, an SMF, or a PCF, or identification information, address information, or domain name information of a RAN, a TNGF, an N3IWF, a TNAP, a TWIF, or a W-AGF.

In a possible implementation, the UDM may be replaced with a UDR. The subscription data may be stored in the UDR or the UDM, and the TMF may subscribe to and obtain the subscription data from the UDR or the UDM.

902: The terminal device sends a registration request message to the RAN. Accordingly, the RAN receives the registration request message from the terminal device. The RAN selects an appropriate AMF, and sends, to the AMF, the registration request message sent by the terminal device. The registration request message includes third indication information, a registration type, and identification information of the terminal device, and the third indication information indicates that the terminal device supports the reader function. For example, the terminal device may indicate whether the terminal device supports user plane transmission when serving as the reader. In a possible implementation, the third indication information may indicate whether the terminal device supports user plane transmission when serving as the reader.

903: The terminal device, the AMF, and the UDM interact with each other to complete a security procedure like authentication.

904: After receiving the registration request message from the terminal device, the AMF sends fifth indication information to the UDM based on the third indication information, where the fifth indication information indicates that the terminal device supports the reader function. Accordingly, the UDM receives the fifth indication information from the AMF, and determines, based on the fifth indication information, that the terminal device supports the reader function.

Optionally, if the registration request message sent by the terminal device does not include the third indication information, and the subscription data stored in the UDM includes subscription data indicating that the terminal device supports the reader function, the UDM may send, to the AMF, indication information indicating that the terminal device supports the reader function. It may be understood as that the AMF may learn, via the UDM, that the terminal device supports the reader function.

905: The UDM sends the subscription response message to the TMF, where the subscription response message includes at least one of the identifier of the terminal device supporting the reader function, the location information of the terminal device supporting the reader function, the status information of the terminal device supporting the reader function, or the information about the core network device or the access network device serving the terminal device supporting the reader function. For example, the core network device may include the device like the AMF, the SMF, and the PCF.

906: The AMF establishes a policy association with the PCF, and the AMF sends the third indication information to the PCF, where the third indication information indicates that the terminal device supports the reader function. In a possible implementation, for the third indication information sent by the AMF to the PCF and the third indication information received by the AMF from the UE, formats, constructions, messages that carry the third indication information, and the like may be the same or different. The PCF generates eighth information based on the third indication information. The terminal device may establish, based on the eighth information, a first session for transmission of internet of things service data. In a possible implementation, the eighth information is a dedicated URSP rule used when the terminal device serves as the reader.

In a possible implementation, the PCF may alternatively learn, from the subscription data stored in the UDM, that the terminal device supports the reader function, and generate the eighth information for transmission of the internet of things service data.

907: The PCF sends the eighth information to the AMF. Accordingly, the AMF receives the eighth information sent by the PCF.

908: The AMF sends a registration accept message to the terminal device, where the registration accept message includes the eighth information. Accordingly, the terminal device receives the registration accept message from the AMF. In another possible implementation, the PCF sends the eighth information to the terminal device by using a configuration update procedure or a policy update procedure.

Optionally, the terminal device sends a transmission result of the eighth information to the AMF, and the AMF forwards the transmission result of the eighth information to the PCF.

909: The terminal device determines, based on the eighth information/according to the dedicated URSP rule, to establish the first session for transmission of the internet of things service data. For example, if the reader function is activated on the terminal device, the terminal device determines, based on the eighth information or according to the dedicated URSP rule, to establish the first session for transmission of the internet of things service data.

1001: The terminal device sends a session establishment request message to an AMF, where the session establishment request message is for requesting to establish a first session for transmission of internet of things service data, and the session establishment request message includes at least one of a request type, an identifier of the first session, a data network name requested by the terminal device, or slice information. Accordingly, the AMF receives the session establishment request message from the terminal device.

For example, one or more of the request type, the identifier of the first session, the data network name requested by the terminal device, or the slice information included in the session establishment request message indicate that the first session that the session establishment request message is for requesting to establish is for transmission of the internet of things service data. For example, the session establishment request message includes fourth indication information, and the fourth indication information indicates that the first session is for transmission of the internet of things service data. The fourth indication information may be internet of things indication information, for example, passive internet of things indication information or ambient internet of things indication information.

1002: The AMF selects an SMF supporting an internet of things service. In a possible implementation, the AMF selects, based on one or more of the request type, the identifier of the first session, the data network name requested by the terminal device, or the slice information, the SMF supporting the internet of things service.

1003: The AMF sends the session establishment request message to the SMF. Accordingly, the SMF receives the session establishment request message sent by the AMF.

Optionally, the AMF may send, to the SMF, information about an access network device serving the terminal device or location information of the terminal device. The information about the access network device serving the terminal device may be for determining a location of the terminal device. For example, the information about the access network device serving the terminal device includes identification information of the access network device. For example, the location information of the terminal device may include the identification information of the access network device serving the terminal device, a tracking area identity, a cell identity, longitude and latitude information, or coordinate value information.

In a possible implementation, the AMF may send, to the SMF via a service-oriented message, the information about the access network device serving the terminal device or the location information of the terminal device. For example, the service-oriented message is a PDU session create session context request message. The PDU session create session context request message includes the session establishment request message, and the information about the access network device serving the terminal device/the location information of the terminal device. For example, the session establishment request message sent by the AMF to the SMF includes the information about the access network device serving the terminal device or the location information of the terminal device.

The SMF determines, based on the session establishment request message or the fourth indication information, that a transmission path for transmission of the internet of things service data needs to be established, and determines to establish the transmission path to each of a UFP and a TMF.

1004: The SMF selects, based on the session establishment request message or the fourth indication information, a UPF supporting the internet of things service.

1005: The SMF establishes the internet of things service transmission path to the UPF, where the internet of things service transmission path is for transmission of the internet of things service data. Establishing the internet of things service transmission path between the SMF and the UPF may be considered as establishing an N4 connection between the SMF and the UPF.

Optionally, the SMF sends a second request message to the UPF, where the second request message is for requesting to establish the internet of things service transmission path between the SMF and the UPF, the second request message includes an identifier of the internet of things service transmission path between the SMF and the UPF and first indication information, and the first indication information indicates the UPF to allocate an uplink destination address used by the terminal device for transmission of the internet of things service data. The UPF receives the second request message from the SMF. The UPF allocates, based on the second request message, the uplink destination address used by the terminal device for transmission of the internet of things service data. The uplink destination address is address information of the UPF. The UPF sends a second response message to the SMF, where the second response message indicates that establishment of the internet of things service transmission path between the SMF and the UPF is completed, and the second response message includes the address information of the UPF. The SMF receives the second response message from the UPF. When the terminal device needs to transmit the internet of things service data to a network, the address information of the UPF may be used as the uplink destination address. When receiving data whose uplink destination address is the address information of the UPF, the UPF may learn that the data is the internet of things service data, or may determine that the data is the internet of things service data transmitted via the terminal device. In this implementation, the SMF indicates the UPF to allocate the uplink destination address/the address information of the UPF, where the uplink destination address/the address information of the UPF is used by the terminal device for transmission of the internet of things service data.

Optionally, the SMF sends a second request message to the UPF, where the second request message is for requesting to establish the internet of things service transmission path between the SMF and the UPF, the second request message includes an identifier of the internet of things service transmission path between the SMF and the UPF and address information allocated by the SMF, and the address information is an uplink destination address used by the terminal device for transmission of the internet of things service data. For example, the address information is address information of the UPF. The UPF receives the second request message from the SMF. The UPF sends a second response message to the SMF based on the second request message, where the second response message indicates that establishment of the internet of things service transmission path between the SMF and the UPF is completed. The SMF receives the second response message from the UPF. In this implementation, the SMF allocates the uplink destination address/the address information of the UPF, where the uplink destination address/the address information of the UPF is used by the terminal device for transmission of the internet of things service data; and sends the uplink destination address/the address information of the UPF to the UPF.

Optionally, the SMF sends a second request message to the UPF, where the second request message is for requesting to establish a second session between the SMF and the UPF, the second request message includes an identifier of the second session and first indication information, and the first indication information indicates the UPF to allocate an uplink destination address used by the terminal device for transmission of the internet of things service data. The UPF receives the second request message from the SMF. The UPF allocates, based on the second request message, the uplink destination address used by the terminal device for transmission of the internet of things service data. The uplink destination address is address information of the UPF. The UPF sends a second response message to the SMF, where the second response message indicates that establishment of the second session is completed, and the second response message includes the address information of the UPF. The SMF receives the second response message from the UPF. Establishing the second session between the SMF and the UPF is equivalent to establishing the transmission path for transmission of the internet of things service data between the SMF and the UPF. The second session may be a session established through an N4 interface, and may be referred to as an N4 session. In this implementation, the SMF indicates the UPF to allocate the uplink destination address/the address information of the UPF, where the uplink destination address/the address information of the UPF is used by the terminal device for transmission of the internet of things service data.

Optionally, the SMF sends a second request message to the UPF, where the second request message is for requesting to establish a second session between the SMF and the UPF, the second request message includes an identifier of the second session and address information allocated by the SMF, and the address information is an uplink destination address used by the terminal device for transmission of the internet of things service data. For example, the address information is address information of the UPF. The UPF receives the second request message from the SMF. The UPF sends a second response message to the SMF based on the second request message, where the second response message indicates that establishment of the second session is completed. The SMF receives the second response message from the UPF. In this implementation, the SMF allocates the uplink destination address/the address information of the UPF, where the uplink destination address/the address information of the UPF is used by the terminal device for transmission of the internet of things service data; and sends the uplink destination address/the address information of the UPF to the UPF.

Optionally, the second request message sent by the SMF to the UPF further includes an N4 rule, and the N4 rule includes rules such as a PDR and an FAR. For example, the address information of the UPF includes one or more of the following information: an IP address, a MAC address, or port information. The IP address may include one or more of the following information: an IPv4 address, an IPv6 address, or an IPv6 prefix.

In a possible implementation, that establishment of the internet of things service transmission path between the SMF and the UPF is completed or establishment of the second session is completed may be understood as that the UPF has been installed or configured with a rule sent by the SMF, for example, the N4 rule.

1006: The SMF sends first information to the UPF, where the first information indicates the UPF to send the internet of things service data to the SMF when the uplink destination address of the received internet of things service data is an address of the UPF. In a possible implementation, the SMF may send the first information to the UPF via the second request message in step 1005. If the SMF sends the first information to the UPF in step 1005, step 1006 does not need to be performed. For example, the first information may be the N4 rule, and the N4 rule indicates the UPF to send the internet of things service data to the SMF when the UPF receives the internet of things service data whose uplink destination address is the address of the UPF. For example, the PDR in the N4 rule indicates the internet of things service data whose uplink destination address is the address of the UPF, and the FAR corresponding to the PDR indicates the UPF to report the internet of things service data to the SMF.

1007: The SMF establishes the internet of things service transmission path to the TMF, where the internet of things service transmission path is for transmission of the internet of things service data.

Optionally, the SMF sends a first request message to the TMF, where the first request message is for requesting to establish the internet of things service transmission path between the SMF and the TMF, and the first request message includes at least one of an identifier of the terminal device, address information of the terminal device, or the identifier of the first session. Accordingly, the TMF receives the first request message from the SMF. The TMF establishes the internet of things service transmission path between the TMF and the SMF based on the first request message. The TMF sends a first response message to the SMF, where the first response message indicates that establishment of the internet of things service transmission path between the SMF and the TMF is completed. The SMF receives the first response message from the TMF.

Optionally, the SMF may send, to the TMF, one or more of the location information of the terminal device, information about a mobility management device serving the terminal device, or the information about the access network device serving the terminal device. For example, the mobility management device serving the terminal device may be an AMF serving the terminal device. Information about the AMF serving the terminal device includes identification information, domain name information, or address information of the AMF serving the terminal device, for example, a GUAMI, an FQDN, an IP address, or a MAC address of the AMF. The information about the mobility management device serving the terminal device and the information about the access network device serving the terminal device may be for determining the location of the terminal device.

Optionally, the first request message sent by the SMF to the TMF further includes one or more of the location information of the terminal device, the information about the mobility management device serving the terminal device, or the information about the access network device serving the terminal device. For example, the first request message sent by the SMF to the TMF further includes the information about the AMF serving the terminal device and/or information about a RAN serving the terminal device.

1008. After the SMF establishes the internet of things service transmission path to each of the UPF and the TMF based on the session establishment request message, the SMF sends an N1N2 message transfer message to the AMF, where the N1N2 message transfer message includes the identifier of the first session, N1 session management container information, and N2 session management information, the N1 session management container information includes a session establishment accept message, the session establishment accept message includes the uplink destination address used by the terminal device for transmission of the internet of things service data, and the uplink destination address includes the address information of the UPF. Accordingly, the AMF receives the N1N2 message transfer message from the SMF.

Optionally, the session establishment accept message includes an IP address allocated by the SMF to the terminal device, namely, a source IP address used by the terminal device for uplink transmission.

The N2 session management information needs to be sent, via the AMF, to the RAN accessed by the terminal device, the N1 session management container information needs to be sent to the terminal device via the AMF, the N2 session management information includes core network tunnel information, and the core network tunnel information includes information about a tunnel endpoint identifier of the UPF and/or the address information of the UPF, namely, a destination address used by the RAN to forward uplink data of the terminal device. When the destination address of the uplink data received by the UPF is the information about the tunnel endpoint identifier of the UPF or the address information of the UPF, the UPF may determine a specific session of a specific terminal device, where the uplink data is from the specific session of the specific terminal device.

1009: The AMF sends an N2 PDU session request message to the RAN, where the N2 PDU session request message includes the N2 session management information and a NAS message that needs to be sent to the terminal device, and the NAS message includes the identifier of the first session and the N1 session management container information. Accordingly, the RAN receives the N2 PDU session request message sent by the AMF.

1010: The RAN sends, to the terminal device, the NAS message including the identifier of the first session and the N1 session management container information. The terminal device receives the NAS message sent by the RAN, and obtains the session establishment accept message based on the NAS message.

1011: The RAN sends an N2 PDU session response message to the AMF, where the N2 PDU session response message indicates that the NAS message has been successfully sent to the terminal device.

Optionally, the N2 PDU session response message sent by the RAN to the AMF includes information about a tunnel endpoint identifier of the RAN and/or address information of the RAN, namely, a destination address used by the UPF to forward downlink data of the terminal device. When receiving the downlink data whose downlink destination address is the information about the tunnel endpoint identifier of the RAN or the address information of the RAN, the RAN may learn of a specific session of a specific terminal device, where the downlink data is from the specific session of the specific terminal device. After the AMF receives the N2 PDU session response message including the information about the tunnel endpoint identifier of the RAN and/or the address information of the RAN, the AMF may send the information about the tunnel endpoint identifier of the RAN and/or the address information of the RAN to the SMF via a PDU session update session context request message. The SMF sends the information about the tunnel endpoint identifier of the RAN and/or the address information of the RAN to the UPF by using an N4 session modification procedure. The SMF sends a PDU session update session context response message to the AMF.

1012: After a reader function of the terminal device is activated, the terminal device sends second indication information to the TMF via the AMF (a control plane), or the SMF and the UPF (a user plane), where the second indication information indicates that the reader function has been activated on the terminal device. Accordingly, the TMF receives the second indication information from the terminal device. The TMF determines, based on the second indication information, that the reader function has been activated on the terminal device. Optionally, the second indication information further indicates an identifier of the RAN serving the terminal device, the cell identity, the tracking area identity, or the like, and is for determining the location information of the terminal device. In this case, the terminal device supporting the reader function may serve as a reader only after the reader function is activated.

Optionally, the TMF sends, to the terminal device, an acknowledgement message indicating that the second indication information has been successfully received, where the acknowledgement message may include a reader identifier allocated by the TMF to the terminal device, namely, identification information used when the terminal device serves as the reader.

Optionally, the reader function of the terminal device supporting the reader function is activated, and may be directly used as the reader.

1013: A service requester sends fourth information to the TMF, where the fourth information indicates to execute an internet of things service instruction in a target area. Accordingly, the TMF receives the fourth information from the service requester.

The fourth information may include at least one of information about an operation type, identification information of an internet of things device, or information about the target area. The operation type includes any operation type in a stocktaking operation/an inventory operation, a read operation, a write operation, a disable operation, tag information obtaining, an operation of message exchange with a tag (the internet of things device), sending a payload to the tag (the internet of things device), or a positioning operation. An identifier of the internet of things device may be a tag identifier or an internet of things device identifier segment. The internet of things device identifier segment may indicate one or more internet of things devices. The information about the target area includes at least one of geographical location information, the cell identity, the tracking area identity, or an operation area identifier. The geographical location information includes information such as longitude and latitude, and a coordinate value. The information about the target area may alternatively be other information that may be for representing an area location. This is not limited in this application.

1014: The TMF determines, based on the fourth information, the terminal device located in the target area to execute the internet of things service instruction. For example, the TMF determines, based on one or more of the location information of the terminal device, the information about the mobility management device serving the terminal device, or the information about the access network device serving the terminal device, the terminal device located in the target area to execute the internet of things service instruction, where the location information of the terminal device, the information about the mobility management device serving the terminal device, or the information about the access network device serving the terminal device is sent by the SMF.

For example, the TMF determines, based on the operation type indicated by the internet of things service instruction and the information about the target area, a terminal device for executing the internet of things service instruction. For example, when the operation type indicated by the internet of things service instruction is a short-distance operation such as the read operation, the write operation, or the positioning operation, the TMF may determine a terminal device that is located in the target area and that can perform the type of operation to execute the internet of things service instruction.

For example, the TMF determines, based on the identification information of the internet of things device and the information about the target area, a terminal device for executing the internet of things service instruction. For example, a terminal device that is located in the target area and that executes the internet of things service instruction for the internet of things device last time is determined, based on a historical operation record or an inventory record, as the terminal device for executing the internet of things service instruction this time, where a reader that executes the internet of things service instruction for the internet of things device last time is a terminal device supporting the reader function.

For example, the TMF determines, based on the information about the target area, a terminal device for executing the internet of things service instruction. For example, when the TMF determines that an area indicated by the information about the target area includes one or more terminal devices supporting the reader function, the TMF may determine the one or more terminal devices supporting the reader function as the terminal device for executing the internet of things service instruction this time.

1015: The TMF sends second information to the SMF serving the terminal device, where the second information indicates the terminal device to execute the internet of things service instruction, and the second information includes identification information of the terminal device or identification information corresponding to the terminal device. For example, the second information includes an SUPI, an SUCI, a GPSI, or the reader ID of the terminal device, or identification information of the first session. Accordingly, the SMF receives the second information from the TMF.

Specifically, the TMF obtains context information corresponding to the terminal device for executing the internet of things service instruction, determines an SMF corresponding to the terminal device or the SMF serving the terminal device, and sends the second information to the SMF.

1016: The SMF sends third information to the UPF serving the terminal device, where the third information indicates the terminal device to execute the internet of things service instruction, and the third information includes the identification information of the terminal device or the identification information corresponding to the terminal device. Accordingly, the UPF receives the third information sent by the SMF. Specifically, the SMF obtains the context information corresponding to the terminal device for executing the internet of things service instruction, determines a UPF corresponding to the terminal device or the UPF serving the terminal device, and sends the third information to the UPF.

For example, the SMF sends the third information to the UPF through the transmission path corresponding to the terminal device or the second session/the N4 session, and the UPF receives the third information sent by the SMF.

Optionally, the fourth information further includes address information of a server corresponding to the service requester, and the TMF sends the address information of the server and the internet of things service instruction to the terminal device together via the SMF and the UPF. A function of the address information of the server is as follows: After receiving uplink data from the tag/the internet of things device, the terminal device serving as the reader may directly send the uplink data to the server via the RAN and the UPF (the user plane). When the TMF does not need to process the uplink data, in this manner, the uplink data can be transmitted to the server more quickly/with less bypassing, so that user experience can be improved.

1017: The UPF determines, based on context information corresponding to the N4 session/the second session/the transmission path established between the SMF and the UPF, to send sixth information to the terminal device, where the sixth information indicates the terminal device to execute the internet of things service instruction. Specifically, the UPF sends the sixth information to the terminal device via the RAN.

1018: The terminal device receives the sixth information sent by the UPF, and executes the internet of things service instruction based on the sixth information. For example, when the internet of things service instruction indicates to obtain target internet of things service data from the internet of things device, the terminal device receives the target internet of things service data from the internet of things device based on the internet of things service instruction, where the second information, the third information, the fourth information, and the sixth information include the identification information of the internet of things device.

Optionally, the TMF may alternatively indicate, via the AMF (the control plane), the terminal device to execute the internet of things service instruction. Specifically, the TMF sends fifth information to the AMF serving the terminal device, where the fifth information indicates the terminal device to execute the internet of things service instruction. The AMF receives the fifth information sent by the TMF. The AMF sends ninth information to the terminal device based on the fifth information, where the ninth information indicates the terminal device to execute the internet of things service instruction. The terminal device receives the ninth information sent by the AMF, and executes the internet of things service instruction based on the ninth information. This optional implementation and the implementation of step 1015 to step 1018 may be mutually replaced.

1019: When the terminal device needs to transmit the target internet of things service data to the network, the terminal device sends the target internet of things service data to the UPF by using the address information of the UPF as the uplink destination address.

1020: Because the uplink destination address of the target internet of things service data is the address information of the UPF, the UPF sends, after receiving the target internet of things service data from the terminal device, the target internet of things service data to the SMF serving the terminal device. Accordingly, the SMF receives the target internet of things service data sent by the UPF.

1021: After receiving the target internet of things service data sent by the UPF, the SMF sends the target internet of things service data to the TMF that establishes the internet of things service transmission path to the SMF. The TMF receives the target internet of things service data sent by the SMF, and the TMF sends the target internet of things service data to the service requester. After receiving the target internet of things service data sent by the SMF, the TMF may directly forward the target internet of things service data to the service requester; or may process the target internet of things service data, and then send processed target internet of things service data to the service requester.

Optionally, when the terminal device has learned of the address information of the server corresponding to the service requester, the terminal device may send, by using the address information of the server as the uplink destination address, the target internet of things service data to the server via the RAN and the UPF that correspond to the terminal device.

For example, the internet of things service instruction indicates the terminal device to perform random access of the internet of things device, the fourth information includes the identification information or identification range information of the internet of things device that participates in a random access procedure, and the identification range information of the internet of things device may be understood as mask information. The terminal device initiates the random access procedure to the internet of things device based on the sixth information. The internet of things device whose random access is successful sends the identification information of the internet of things device to the terminal device. The identification information of the internet of things device may be encapsulated by using NAS signaling or an application layer protocol. The terminal device sends the identification information of the internet of things device to the TMF via the UPF and the SMF. In an implementation, the terminal device does not parse the identification information of the internet of things device.

Optionally, after random access of the internet of things device is successful, the terminal device receives another internet of things service instruction from the TMF, for example, an internet of things service instruction indicating to obtain the target internet of things service data from the internet of things device. The terminal device obtains data in the internet of things device from the internet of things device, and sends the obtained data to the TMF via the UPF and the SMF.

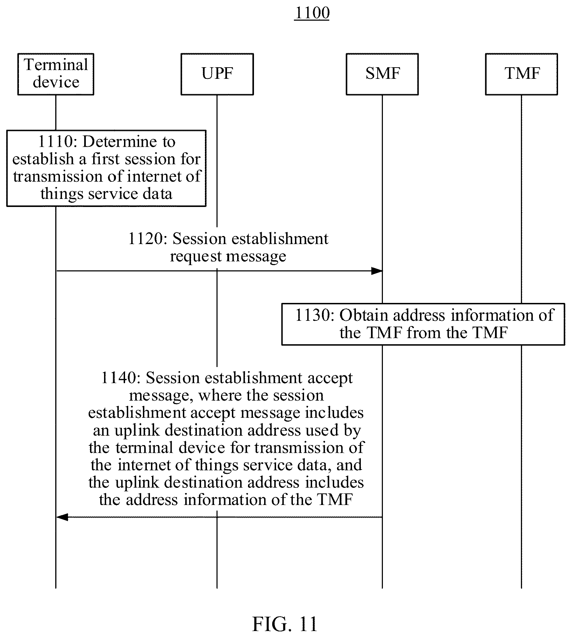

FIG. 11 is a schematic interaction flowchart of another communication method 1100 according to an embodiment of this application. In the method, a data transmission path of a terminal device includes the terminal device-a RAN-a UPF-a TMF or the terminal device-the RAN-the UPF-the TMF-a service requester.

1110: The terminal device determines to establish a first session for transmission of internet of things service data.

For example, the terminal device sends third indication information to an AMF, where the third indication information indicates that the terminal device supports a reader function; the AMF receives the third indication information from the terminal device; the AMF sends the third indication information to a PCF; the PCF receives the third indication information sent by the AMF; the PCF generates eighth information based on the third indication information, where the eighth information indicates a session parameter for transmission of the internet of things service data, or the eighth information indicates the terminal device to establish a session for transmission of the internet of things service data; the PCF sends the eighth information to the AMF; the AMF receives the eighth information from the PCF; the AMF sends the eighth information to the terminal device; the terminal device receives the eighth information from the AMF; and the terminal device determines, based on the eighth information, to establish the first session for transmission of the internet of things service data. The third indication information may indicate whether the terminal device supports the reader function. When the third indication information indicates that the terminal device supports the reader function, the PCF generates the eighth information based on the third indication information, and the terminal device determines, based on the eighth information, to establish the first session for transmission of the internet of things service data.

In a possible implementation, for the third indication information that is sent by the terminal device and that is received by the AMF and the third indication information sent by the AMF to the PCF, formats, constructions, messages that carry the third indication information, and the like may be the same or different. For example, the AMF may forward the third indication information from the terminal device to the PCF. For example, the third indication information may be information such as a reader indication and a reader capability or reader capable. Specific content of the third indication information sent by the terminal device to the AMF and the third indication information sent by the AMF to the PCF is not limited in this application.

Optionally, the eighth information includes a URSP rule. The URSP rule may be a dedicated URSP rule used when the terminal device serves as a reader. The URSP rule indicates the session parameter for transmission of the internet of things service data. For example, the session parameter includes at least one of slice information or a DNN, and the slice information includes S-NSSAI. Optionally, the URSP rule indicates whether a new session needs to be established for transmission of the internet of things service data. When the URSP rule indicates that the new session needs to be established for transmission of the internet of things service data, the terminal device determines, according to the URSP rule included in the eighth information, to establish the first session for transmission of the internet of things service data.

For example, a traffic descriptor included in the URSP rule may indicate an internet of things service or the reader; one or more of an IP address of a service flow, an FQDN, or a DNN included in the URSP rule indicates the internet of things service; or a new IE is added to the traffic descriptor to indicate the internet of things service. In another possible implementation, the traffic descriptor included in the URSP rule includes indication information indicating the reader. For example, the indication information is "reader" or "reader mode" information, and indicates the terminal device to establish the session according to the URSP rule when the terminal device serves as the reader.

Optionally, when the terminal device serves as the reader, the terminal device may be configured to establish, according to the dedicated URSP rule, the session for transmission of the internet of things service data. For example, the terminal device obtains configuration information, where the configuration information indicates the terminal device to establish, according to the dedicated URSP rule when the terminal device serves as the reader, the session for transmission of the internet of things service data. For example, if the reader function is activated on the terminal device, the terminal device determines, according to the dedicated URSP rule, to establish the first session for transmission of the internet of things service data.

In a possible implementation, a registration request message sent by the terminal device to the AMF includes the third indication information, and a registration accept message sent by the AMF to the terminal device includes the eighth information.

1120: The terminal device sends a session establishment request message to an SMF, where the session establishment request message is for requesting to establish the first session for transmission of the internet of things service data. Accordingly, the SMF receives the session establishment request message from the terminal device. The session establishment request message includes at least one of a request type, an identifier of the first session, a data network name requested by the terminal device, or the slice information. Optionally, when the URSP rule included in the eighth information indicates that the new session needs to be established for transmission of the internet of things service data, the terminal device sends a session modification message to the SMF after determining, based on the eighth information, to establish the first session for transmission of the internet of things service data, where the session modification message is for requesting to establish the first session for transmission of the internet of things service data.

Specifically, the terminal device sends the session establishment request message to the AMF. Accordingly, the AMF receives the session establishment request message from the terminal device. The AMF selects, based on the session establishment request message, an SMF supporting the internet of things service. The AMF sends the session establishment request message to the SMF. Accordingly, the SMF receives the session establishment request message sent by the AMF.

For example, one or more of the request type, the identifier of the first session, the data network name requested by the terminal device, or the slice information included in the session establishment request message indicate that the first session that the session establishment request message is for requesting to establish is for transmission of the internet of things service data. For example, the session establishment request message includes fourth indication information, and the fourth indication information indicates that the first session is for transmission of the internet of things service data. For example, the fourth indication information may be internet of things indication information, for example, passive IoT indication information or ambient IoT indication information.

In a possible implementation, the request type may indicate that the first session is for transmission of the internet of things service data, or indicate that the first session is a session established when the terminal device serves as the reader. For example, a session type indicated by the request type may be an IoT session or a reader session.

In another possible implementation, the identifier of the first session may indicate that the first session is for transmission of the internet of things service data, or indicate that the first session is a session established when the terminal device serves as the reader. For example, the identifier of the first session may be a specific identifier that indicates the session for transmission of the internet of things service data. For example, the identifier of the first session may be a session identifier for which a specific value, character string, or encoding format is used.

In another possible implementation, the data network name and/or the slice information may indicate that the first session is for transmission of the internet of things service data, or indicate that the first session is a session established when the terminal device serves as the reader. For example, the data network name and/or the slice information may be a specific data network name and/or specific slice information that indicate/indicates the internet of things service.

Optionally, the AMF may send, to the SMF, information about an access network device serving the terminal device, for example, identification information of the access network device serving the terminal device. The identification information of the access network device includes a global RAN node ID, an identifier of an N3IWF, an identifier of a TNAP, an identifier of a TNGF, an identifier of a TWIF, an identifier of a W-AGF, or the like. The information about the access network device serving the terminal device may be for determining a location of the terminal device.

Optionally, the AMF may send, to the SMF, information about an access network device serving the terminal device, for example, identification information of the access network device serving the terminal device. The identification information of the access network device includes a global RAN node ID, an identifier of an N3IWF, an identifier of a TNAP, an identifier of a TNGF, an identifier of a TWIF, an identifier of a W-AGF, or the like. The information about the access network device serving the terminal device may be for determining a location of the terminal device.

Optionally, the AMF may send location information of the terminal device to the SMF. For example, the location information of the terminal device may include the identification information of the access network device serving the terminal device, a tracking area identity, a cell identity, longitude and latitude information, or coordinate value information.

In a possible implementation, the AMF may send, to the SMF via a service-oriented message, the information about the access network device serving the terminal device or the location information of the terminal device. The service-oriented message may be a PDU session create session context request message or another service-oriented message. The PDU session create session context request message includes the session establishment request message, and the information about the access network device serving the terminal device/the location information of the terminal device. For example, the session establishment request message sent by the AMF to the SMF includes the information about the access network device serving the terminal device or the location information of the terminal device.

1130: The SMF obtains address information of the TMF from the TMF based on the session establishment request message or the fourth indication information, where the TMF is for transmission of the internet of things service data corresponding to the first session. For example, the address information of the TMF includes one or more of the following information: an IP address, a MAC address, or port information of the TMF. The IP address may include one or more of the following information: an IPv4 address, an IPv6 address, or an IPv6 prefix (IPv6 prefix).

In a possible implementation, the SMF determines, based on the session establishment request message or the fourth indication information, to obtain the address information of the TMF from the TMF. For example, the SMF determines, based on information that is in the session establishment request message and that may indicate that the first session is for transmission of the internet of things service data, for example, one or more of the request type, the identifier of the session, the data network name, or the slice information, that the address information of the TMF needs to be obtained from the TMF.

Optionally, the SMF sends a third request message to the TMF, where the third request message is for requesting to obtain the address information of the TMF, the third request message includes address information corresponding to the terminal device, and the address information corresponding to the terminal device includes address information of the terminal device and/or address information of a UPF corresponding to the terminal device. Accordingly, the TMF receives the third request message from the SMF. The TMF sends a third response message to the SMF, where the third response message includes the address information of the TMF. Accordingly, the SMF receives the third response message from the TMF. The UPF corresponding to the terminal device may be understood as a UPF serving the terminal device, and the UPF supports transmission of the internet of things service data. The address information of the UPF may be address information that is of an N6 interface and that is allocated by the SMF, or address information that is of an N6 interface and that is obtained by the SMF from the UPF.

For example, the third request message sent by the SMF to the TMF includes the address information of the terminal device. Optionally, the SMF sends sixth indication information to the UPF, where the sixth indication information indicates the UPF to directly forward uplink internet of things service data without performing address translation on the uplink internet of things service data after receiving the uplink internet of things service data from the terminal device. After receiving the uplink internet of things service data forwarded by the UPF, the TMF may learn, based on a source address information/the address information of the terminal device, of the terminal device from which the uplink internet of things service data is.

For example, the third request message sent by the SMF to the TMF includes the address information of the UPF corresponding to the terminal device. In this example, after the UPF receives uplink internet of things service data sent by the terminal device, the UPF performs address translation on the uplink internet of things service data, and source address information of the uplink internet of things service data on which address translation has been performed is the address information of the UPF. For example, after the UPF receives the uplink internet of things service data sent by the terminal device, the UPF performs address translation on the uplink internet of things service data, to translate a source address information of the uplink internet of things service data into the address information of the UPF corresponding to the terminal device. After receiving the uplink internet of things service data on which address translation has been performed, the TMF may learn, based on the source address information/the address information of the UPF, of the terminal device from which the uplink internet of things service data is. In addition, when the TMF needs to send downlink data to the terminal device, the TMF may send the downlink data to the terminal device via the UPF based on the address information of the UPF corresponding to the terminal device.

For example, the third request message sent by the SMF to the TMF includes the address information of the terminal device and the address information of the UPF corresponding to the terminal device. In this example, after the UPF receives uplink internet of things service data sent by the terminal device, the UPF may perform address translation on the uplink internet of things service data, or may not perform address translation.

In a possible implementation, the third request message may be a service-oriented message, for example, an Ntmf PDUSession_SMContext_Create Request message or an Nsmf PDUSession_SMContext Create Request message. In another possible implementation, the third response message may be a service-oriented message, for example, an Ntmf PDUSession_SMContext_Create Response message or an Nsmf PDUSession_SMContext_Create Response message.

Optionally, the SMF may send, to the TMF, one or more of the location information of the terminal device, information about a mobility management device serving the terminal device, or the information about the access network device serving the terminal device. For example, the mobility management device serving the terminal device may be an AMF serving the terminal device. Information about the AMF serving the terminal device includes identification information, domain name information, or address information of the AMF serving the terminal device.

Optionally, the third request message sent by the SMF to the TMF further includes one or more of the location information of the terminal device, the information about the mobility management device serving the terminal device, or the information about the access network device serving the terminal device. For example, the third request message sent by the SMF to the TMF further includes the information about the AMF serving the terminal device and/or the information about the access network device serving the terminal device. The information about the AMF serving the terminal device and/or the information about the access network device serving the terminal device may be for determining the location of the terminal device. For example, the third request message sent by the SMF to the TMF further includes the location information of the terminal device. In a possible implementation, the SMF may send, to the TMF via the service-oriented message, one or more of the information about the mobility management device serving the terminal device, the information about the access network device serving the terminal device, or the location information of the terminal device, where the service-oriented message may be the Ntmf_PDUSession_SMContext_Create Request message.

Optionally, before the SMF sends the third request message to the TMF, the SMF sends first indication information to the UPF, where the first indication information indicates the UPF to allocate address information used by the terminal device for transmission of the internet of things service data. The UPF receives the first indication information from the SMF. The UPF allocates, based on the first indication information, the address information that is of the UPF and that is used by the terminal device for transmission of the internet of things service data. The UPF sends the address information of the UPF to the SMF. The SMF receives the address information of the UPF from the UPF. In this implementation, the SMF indicates the UPF to allocate the address information that is of the UPF and that is used by the terminal device for transmission of the internet of things service data.

Optionally, before the SMF sends the first indication information to the UPF, the SMF selects, based on the session establishment request message or the fourth indication information from the terminal device, a UPF supporting transmission of the internet of things service data. The SMF sends the first indication information to the UPF supporting transmission of the internet of things service data. Optionally, the SMF further sends an N4 rule to the UPF, where the N4 rule includes rules such as a PDR and an FAR. In a possible implementation, the first indication information may be included in the N4 rule.

Optionally, the address information that is of the UPF and that is used by the terminal device for transmission of the internet of things service data may alternatively be allocated and sent to the UPF by the SMF.

1140: The SMF sends a session establishment accept message to the terminal device, where the session establishment accept message includes the uplink destination address used by the terminal device for transmission of the internet of things service data, and the uplink destination address includes the address information of a TMF. Accordingly, the terminal device receives the session establishment accept message from the SMF. Optionally, the session establishment accept message includes an IP address allocated by the SMF or the UPF to the terminal device, namely, a source IP address used by the terminal device for uplink transmission.

For example, the SMF sends an N1N2 message transfer message to the AMF. For example, the N1N2 message transfer message is an Namf_Communication_N1N2MessageTransfer message. Accordingly, the AMF receives the N1N2 message transfer message from the SMF. The N1N2 message transfer message includes the identifier of the first session, N1 session management container information, and N2 session management information, the N1 session management container information includes the session establishment accept message, the N2 session management information needs to be sent, via the AMF, to the RAN accessed by the terminal device, and the N1 session management container information needs to be sent to the terminal device via the AMF.

The AMF sends an N2 PDU session request message to the RAN, where the N2 PDU session request message includes the N2 session management information and a NAS message that needs to be sent to the terminal device, and the NAS message includes the identifier of the first session and the N1 session management container information. The RAN receives the N2 PDU session request message sent by the AMF, and sends, to the terminal device, the NAS message including the identifier of the first session and the N1 session management container information. The terminal device receives the NAS message sent by the RAN, and obtains the session establishment accept message based on the NAS message. The RAN sends an N2 PDU session response message to the AMF, where the N2 PDU session response message indicates that the NAS message has been successfully sent to the terminal device.

Optionally, the N2 PDU session response message sent by the RAN to the AMF includes information about a tunnel endpoint identifier of the RAN and/or address information of the RAN, namely, a destination address used by the UPF to forward downlink data of the terminal device. When receiving the downlink data whose downlink destination address is the information about the tunnel endpoint identifier of the RAN or the address information of the RAN, the RAN may learn of a specific session of a specific terminal device, where the downlink data is from the specific session of the specific terminal device. After the AMF receives the N2 PDU session response message including the information about the tunnel endpoint identifier of the RAN and/or the address information of the RAN, the AMF may send the information about the tunnel endpoint identifier of the RAN and/or the address information of the RAN to the SMF via a PDU session update session context request message. The SMF sends the information about the tunnel endpoint identifier of the RAN and/or the address information of the RAN to the UPF by using an N4 session modification procedure. The SMF sends a PDU session update session context response message to the AMF.

In the technical solution provided in this embodiment of this application, the terminal device supporting the reader function may request the SMF to establish the first session for transmission of the internet of things service data. The SMF obtains the address information of the TMF from the TMF. The TMF is for transmission of the internet of things service data corresponding to the first session. The uplink destination address used by the terminal device for transmission of the internet of things service data is an address of the TMF. The UPF sends the internet of things service data to the TMF when the uplink destination address of the received internet of things service data is the address of the TMF. In this solution, the terminal device serving as the reader can communicate with an internet of things device, and the terminal device serving as the reader can be interconnected to a functional device that is in a core network and that is responsible for managing the internet of things device. When serving as the reader, the terminal device can transmit the internet of things service data to the TMF via the UPF. In addition, terminal devices have good mobility, and are widely distributed. Therefore, the terminal device serving as the reader is more flexible than an access network device serving as the reader.

Optionally, the service requester sends fourth information to the TMF, where the fourth information indicates to execute an internet of things service instruction in a target area. The TMF receives the fourth information from the service requester. The TMF determines, based on the fourth information, the terminal device located in the target area to execute the internet of things service instruction. In a possible implementation, the TMF determines, based on one or more of the location information of the terminal device, the information about the mobility management device serving the terminal device, or the information about the access network device serving the terminal device, the terminal device located in the target area to execute the internet of things service instruction, where the location information of the terminal device, the information about the mobility management device serving the terminal device, or the information about the access network device serving the terminal device is sent by the SMF. In another possible implementation, the TMF determines, by triggering a positioning procedure of the terminal device, that the terminal device is located in the target area, and determines the terminal device to execute the internet of things service instruction. In another possible implementation, the TMF determines, based on location information that is of the terminal device and that is obtained from a UDM or location information that is of a terminal device supporting the reader function and that is obtained from the UDM, that the terminal device is located in the target area, and determines the terminal device to execute the internet of things service instruction.

The TMF sends seventh information to the UPF corresponding to the terminal device/the UPF serving the terminal device, where the seventh information indicates the terminal device to execute the internet of things service instruction, and the seventh information includes identification information of the terminal device or identification information corresponding to the terminal device. For example, the seventh information includes an SUPI, an SUCI, a GPSI, or a reader ID of the terminal device, or identification information of the first session. That the TMF sends the seventh information to the UPF corresponding to the terminal device may be understood as that the TMF sends the seventh information to the UPF based on the address information of the UPF corresponding to the terminal device.

The UPF receives the seventh information sent by the TMF. The UPF sends sixth information to the terminal device (via the access network device) based on the seventh information, where the sixth information indicates the terminal device to execute the internet of things service instruction. The terminal device receives (via the access network device) the sixth information sent by the UPF, and executes the internet of things service instruction based on the sixth information. In this implementation, the TMF indicates, via the UPF (a user plane), the terminal device to execute the internet of things service instruction.

Optionally, the service requester sends fourth information to the TMF, where the fourth information indicates to execute an internet of things service instruction in a target area. The TMF receives the fourth information from the service requester. The TMF determines, based on the fourth information, the terminal device located in the target area to execute the internet of things service instruction. The TMF sends fifth information to the AMF serving the terminal device, where the fifth information indicates the terminal device to execute the internet of things service instruction. The AMF receives the fifth information sent by the TMF. The AMF sends ninth information to the terminal device based on the fifth information, where the ninth information indicates the terminal device to execute the internet of things service instruction. The terminal device receives the ninth information sent by the AMF, and executes the internet of things service instruction based on the ninth information. In this implementation, the TMF indicates, via the AMF (a control plane), the terminal device to execute the internet of things service instruction.

In a possible implementation, the fourth information, the fifth information, the sixth information, the seventh information, and the ninth information may be information in a same format or information in different formats, and messages carrying these pieces of information may be a same message, or may be different messages. This is not limited in this application. In a possible implementation, the internet of things instruction included in the fourth information, the fifth information, the sixth information, the seventh information, and the ninth information has a same function.

For example, the TMF may determine, based on an operation type indicated by the internet of things service instruction and information about the target area, a terminal device for executing the internet of things service instruction. For example, when the operation type indicated by the internet of things service instruction is a short-distance operation such as a read operation, a write operation, or a positioning operation, the TMF determines a terminal device that is located in the target area and that can perform the type of operation to execute the internet of things service instruction.

For example, when the internet of things service instruction indicates to obtain target internet of things service data from a specific internet of things device or write the target internet of things service data to the specific internet of things device, the TMF may determine, based on the information about the target area and identification information that is of the internet of things device and that is included in the internet of things service instruction, the terminal device for executing the internet of things service instruction. For example, the TMF determines, based on a historical operation record or an inventory record, a terminal device that is located in the target area and that obtains the internet of things service data from the internet of things device last time to execute the internet of things service instruction.

For example, when the internet of things service instruction indicates to obtain the target internet of things service data from the internet of things device, the terminal device receives the target internet of things service data from the internet of things device based on the internet of things service instruction, where the seventh information, the fourth information, and the sixth information include the identification information of the internet of things device. The terminal device sends the target internet of things service data to the TMF via the UPF by using the address information of the TMF as the uplink destination address. Specifically, the terminal device sends the target internet of things service data and the uplink destination address (the address information of the TMF) of the target internet of things service data to the UPF. The UPF receives the target internet of things service data from the terminal device. The UPF sends the target internet of things service data to the TMF based on the uplink destination address of the target internet of things service data. The TMF receives the target internet of things service data sent by the UPF. The TMF sends the target internet of things service data to the service requester. After receiving the target internet of things service data sent by the SMF, the TMF may directly forward the target internet of things service data to the service requester; or may process the target internet of things service data, and then send processed target internet of things service data to the service requester.

For example, the fourth information sent by the service requester to the TMF may include address information of a server corresponding to the service requester, and the TMF sends the address information of the server and the internet of things service instruction to the terminal device together via the UPF or the AMF. When the internet of things service instruction indicates to obtain the target internet of things service data from the internet of things device, the terminal device receives the target internet of things service data from the internet of things device based on the internet of things service instruction. The terminal device may send, by using the address information of the server as the uplink destination address, the target internet of things service data to the server via the RAN and the UPF that correspond to the terminal device. In this manner, the uplink data can be transmitted to the server more quickly/with less bypassing, so that user experience can be improved.

The fourth information includes the information about the target area for executing the internet of things service instruction. The information about the target area includes at least one of geographical location information, the cell identity, the tracking area identity, or an operation area identifier. The geographical location information includes information such as longitude and latitude, and a coordinate value. The information about the target area may alternatively be other information that may be for representing an area location. This is not limited in this application. In a possible implementation, the TMF may map or convert the information about the target area into the information about the access network device, the information about the mobility management device, or the location information of the terminal device. The TMF may determine, based on the location information of the terminal device, the information about the mobility management device serving the terminal device, or the information about the access network device serving the terminal device, the terminal device located in the target area.

The fourth information may further include the identification information of the internet of things device. An identifier of the internet of things device may be a tag identifier or an internet of things device identifier segment. The internet of things device identifier segment may indicate one or more internet of things devices. The internet of things service instruction in this embodiment of this application may indicate any operation type in a stocktaking operation/an inventory operation, the read operation, the write operation, a disable operation, tag information obtaining, an operation of message exchange with a tag (the internet of things device), sending a payload to the tag (the internet of things device), or the positioning operation.

In a possible implementation, the terminal device that is determined by the TMF to execute the internet of things service instruction may be a terminal device on which the reader function has been activated. In one case, the terminal device supporting the reader function may serve as the reader only after the reader function is activated. In another case, the reader function of the terminal device supporting the reader function is activated, and the terminal device supporting the reader function may directly serve as the reader. In this case, the terminal device supporting the reader function may be understood as having activated the reader function, and may directly serve as the reader.

Optionally, when the terminal device supporting the reader function may serve as the reader only after the reader function is activated, the TMF determines that the reader function has been activated on the terminal device for executing the internet of things service instruction, and the terminal device is located in the target area.

For example, after the reader function of the terminal device is activated, the terminal device sends second indication information to the TMF via the AMF (the control plane) or the UPF (the user plane), where the second indication information indicates that the reader function has been activated on the terminal device. Accordingly, the TMF receives the second indication information from the terminal device. The TMF determines, based on the second indication information, that the reader function has been activated on the terminal device.

For example, the TMF sends a subscription request message to the UDM, where the subscription request message is for learning of information about the terminal device supporting the reader function. The UDM receives the subscription request message from the UDM. The UDM sends a subscription response message to the TMF, where the subscription response message includes at least one of an identifier of the terminal device supporting the reader function, the location information of the terminal device supporting the reader function, status information of the terminal device supporting the reader function, or information about a core network device serving the terminal device supporting the reader function. The TMF receives the subscription response message/a subscription notification message from the UDM, and determines, based on the subscription response message/the subscription notification message, that the reader function has been activated on the terminal device. The status information of the terminal device supporting the reader function includes at least one of a registered state, a deregistered state, a connected state, an inactive state, or an idle state. In this example, it may be considered that the reader function of the terminal device supporting the reader function is activated.

Optionally, the AMF serving the terminal device sends fifth indication information to the UDM, where the fifth indication information indicates that the terminal device supports the reader function. Accordingly, the UDM receives the fifth indication information from the AMF; and based on the fifth indication information, determines the terminal device supporting the reader function/learns of terminal devices supporting the reader function.

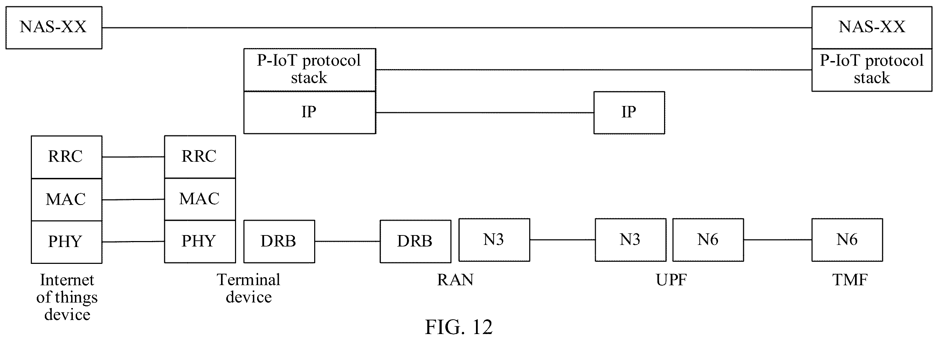

FIG. 12 is a diagram of a protocol stack corresponding to another communication method according to an embodiment of this application. An SMF sends, to a TMF, address information corresponding to a terminal device, where the address information corresponding to the terminal device includes address information of the terminal device and/or address information of a UPF corresponding to the terminal device. The SMF obtains address information of the TMF from the TMF. An uplink destination address of the terminal device is an address of the TMF. A data transmission path of the terminal device includes: the terminal device-a RAN-the UPF-the TMF.

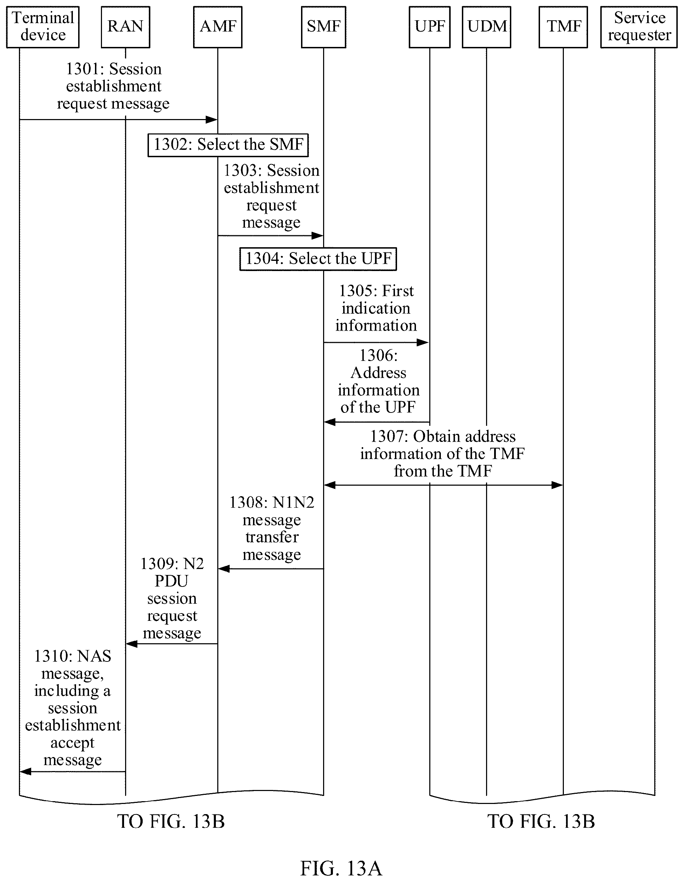

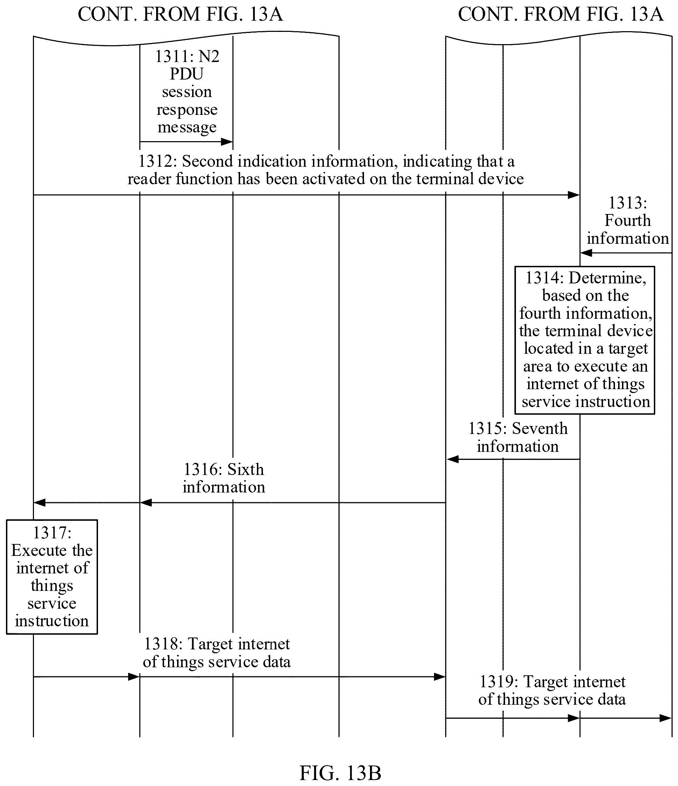

With reference to specific examples, the following describes the communication method provided in FIG. 11. FIG. 9 is an interaction diagram of a registration procedure of the terminal device in the communication method provided in FIG. 11. FIG. 13A and FIG. 13B are a diagram of a session establishment procedure of a terminal device in another communication method (the communication method provided in FIG. 11) according to an embodiment of this application. Step 1301 in FIG. 13A is performed after step 909 in FIG. 9.

1301: The terminal device sends a session establishment request message to an AMF, where the session establishment request message is for requesting to establish a first session for transmission of internet of things service data, and the session establishment request message includes at least one of a request type, an identifier of the first session, a data network name requested by the terminal device, or slice information. Accordingly, the AMF receives the session establishment request message from the terminal device.

For example, one or more of the request type, the identifier of the first session, the data network name requested by the terminal device, or the slice information included in the session establishment request message indicate that the first session that the session establishment request message is for requesting to establish is for transmission of the internet of things service data. For example, the session establishment request message includes fourth indication information, and the fourth indication information indicates that the first session is for transmission of the internet of things service data. The fourth indication information may be internet of things indication information, for example, passive internet of things indication information or ambient internet of things indication information.

1302: The AMF selects an SMF supporting an internet of things service. In a possible implementation, the AMF selects, based on one or more of the request type, the identifier of the first session, the data network name requested by the terminal device, or the slice information, the SMF supporting the internet of things service.

1303: The AMF sends the session establishment request message to the SMF. Accordingly, the SMF receives the session establishment request message sent by the AMF.

Optionally, the AMF may send, to the SMF, information about an access network device serving the terminal device or location information of the terminal device, for example, identification information of the access network device serving the terminal device. The information about the access network device serving the terminal device may be for determining a location of the terminal device. For example, the information about the access network device serving the terminal device includes identification information of the access network device. For example, the location information of the terminal device may include the identification information of the access network device serving the terminal device, a tracking area identity, a cell identity, longitude and latitude information, or coordinate value information.

In a possible implementation, the AMF may send, to the SMF via a service-oriented message, the information about the access network device serving the terminal device or the location information of the terminal device. For example, the service-oriented message is a PDU session create session context request message. The PDU session create session context request message includes the session establishment request message, and the information about the access network device serving the terminal device/the location information of the terminal device. For example, the session establishment request message sent by the AMF to the SMF includes the information about the access network device serving the terminal device or the location information of the terminal device.

The SMF determines, based on the session establishment request message or the fourth indication information, that address information of a UPF needs to be obtained and that address information of a TMF needs to be obtained from the TMF. In a possible implementation, the SMF determines, based on the session establishment request message or the fourth indication information, that the address information of the UPF needs to be obtained. The UPF and the TMF are for transmission of the internet of things service data corresponding to the first session.

1304: The SMF selects, based on the session establishment request message or the fourth indication information, a UPF supporting transmission of the internet of things service data.

1305: The SMF sends first indication information to the UPF, where the first indication information indicates the UPF to allocate address information used by the terminal device for transmission of the internet of things service data. The UPF receives the first indication information from the SMF.

Optionally, the SMF further sends an N4 rule to the UPF, where the N4 rule includes rules such as a PDR and an FAR.

1306. The UPF allocates, based on the first indication information, the address information that is of the UPF and that is used by the terminal device for transmission of the internet of things service data. The UPF sends the address information of the UPF to the SMF. The SMF receives the address information of the UPF from the UPF. The SMF indicates the UPF to allocate the address information that is of the UPF and that is used by the terminal device for transmission of the internet of things service data.

Optionally, the address information that is of the UPF and that is used by the terminal device for transmission of the internet of things service data may alternatively be allocated and sent to the UPF by the SMF.

For example, the address information of the UPF includes one or more of the following information: an IP address, a MAC address, or port information. The IP address may include one or more of the following information: an IPv4 address, an IPv6 address, or an IPv6 prefix.

1307: The SMF obtains the address information of the TMF from the TMF based on the session establishment request message or the fourth indication information, where the TMF is for transmission of the internet of things service data corresponding to the first session. For example, the address information of the TMF includes one or more of the following information: an IP address, a MAC address, or port information of the TMF. The IP address may include one or more of the following information: an IPv4 address, an IPv6 address, or an IPv6 prefix (IPv6 prefix).

Optionally, the SMF sends a third request message to the TMF, where the third request message is for requesting to obtain the address information of the TMF, the third request message includes address information corresponding to the terminal device, and the address information corresponding to the terminal device includes address information of the terminal device and/or address information of a UPF corresponding to the terminal device. Accordingly, the TMF receives the third request message from the SMF. The TMF sends a third response message to the SMF, where the third response message includes the address information of the TMF. Accordingly, the SMF receives the third response message from the TMF.

For example, the third request message sent by the SMF to the TMF includes the address information of the terminal device. Optionally, the SMF sends sixth indication information to the UPF, where the sixth indication information indicates the UPF to directly forward uplink internet of things service data without performing address translation on the uplink internet of things service data after receiving the uplink internet of things service data from the terminal device. After receiving the uplink internet of things service data forwarded by the UPF, the TMF may learn, based on a source address information/the address information of the terminal device, of the terminal device from which the uplink internet of things service data is.

For example, the third request message sent by the SMF to the TMF includes the address information of the UPF corresponding to the terminal device. In this example, after the UPF receives uplink internet of things service data sent by the terminal device, the UPF performs address translation on the uplink internet of things service data. For example, after the UPF receives the uplink internet of things service data sent by the terminal device, the UPF performs address translation on the uplink internet of things service data, to translate a source address information of the uplink internet of things service data into the address information of the UPF corresponding to the terminal device. After receiving the uplink internet of things service data on which address translation has been performed, the TMF may learn, based on the source address information/the address information of the UPF, of the terminal device from which the uplink internet of things service data is. In addition, when the TMF needs to send downlink data to the terminal device, the TMF may send the downlink data to the terminal device via the UPF based on the address information of the UPF corresponding to the terminal device.

For example, the third request message sent by the SMF to the TMF includes the address information of the terminal device and the address information of the UPF corresponding to the terminal device. In this example, after the UPF receives uplink internet of things service data sent by the terminal device, the UPF may perform address translation on the uplink internet of things service data, or may not perform address translation.

Optionally, the SMF may send, to the TMF, one or more of the location information of the terminal device, information about a mobility management device serving the terminal device, or the information about the access network device serving the terminal device. For example, the mobility management device serving the terminal device may be an AMF serving the terminal device. Information about the AMF serving the terminal device includes identification information, domain name information, or address information of the AMF serving the terminal device.

Optionally, the third request message sent by the SMF to the TMF further includes one or more of the location information of the terminal device, the information about the mobility management device serving the terminal device, or the information about the access network device serving the terminal device. For example, the third request message sent by the SMF to the TMF further includes the information about the AMF serving the terminal device and/or the information about the access network device serving the terminal device. The information about the AMF serving the terminal device and/or the information about the access network device serving the terminal device may be for determining the location of the terminal device. For example, the third request message sent by the SMF to the TMF further includes the location information of the terminal device. In a possible implementation, the SMF may send, to the TMF via the service-oriented message, one or more of the information about the mobility management device serving the terminal device, the information about the access network device serving the terminal device, or the location information of the terminal device, where the service-oriented message may be an Ntmf_PDUSession_SMContext_Create Request message.

1308: The SMF sends an N1N2 message transfer message to the AMF, where the N1N2 message transfer message includes the identifier of the first session, N1 session management container information, and N2 session management information, the N1 session management container information includes a session establishment accept message, the session establishment accept message includes an uplink destination address used by the terminal device for transmission of the internet of things service data, and the uplink destination address includes the address information of the TMF. Accordingly, the AMF receives the N1N2 message transfer message from the SMF. The N2 session management information needs to be sent, via the AMF, to a RAN accessed by the terminal device, and the N1 session management container information needs to be sent to the terminal device via the AMF.

Optionally, the session establishment accept message includes an IP address allocated by the SMF to the terminal device, namely, a source IP address used by the terminal device for uplink transmission.

1309: The AMF sends an N2 PDU session request message to the RAN, where the N2 PDU session request message includes the N2 session management information and a NAS message that needs to be sent to the terminal device, and the NAS message includes the identifier of the first session and the N1 session management container information. Accordingly, the RAN receives the N2 PDU session request message sent by the AMF.

1310: The RAN sends, to the terminal device, the NAS message including the identifier of the first session and the N1 session management container information. The terminal device receives the NAS message sent by the RAN, and obtains the session establishment accept message based on the NAS message.

1311: The RAN sends an N2 PDU session response message to the AMF, where the N2 PDU session response message indicates that the NAS message has been successfully sent to the terminal device.

Optionally, the N2 PDU session response message sent by the RAN to the AMF includes information about a tunnel endpoint identifier of the RAN and/or address information of the RAN, namely, a destination address used by the UPF to forward downlink data of the terminal device. When receiving the downlink data whose downlink destination address is the information about the tunnel endpoint identifier of the RAN or the address information of the RAN, the RAN may learn of a specific session of a specific terminal device, where the downlink data is from the specific session of the specific terminal device. After the AMF receives the N2 PDU session response message including the information about the tunnel endpoint identifier of the RAN and/or the address information of the RAN, the AMF may send the information about the tunnel endpoint identifier of the RAN and/or the address information of the RAN to the SMF via a PDU session update session context request message. The SMF sends the information about the tunnel endpoint identifier of the RAN and/or the address information of the RAN to the UPF by using an N4 session modification procedure. The SMF sends a PDU session update session context response message to the AMF.

1312: After a reader function of the terminal device is activated, the terminal device sends second indication information to the TMF via the AMF (a control plane) or the UPF (a user plane), where the second indication information indicates that the reader function has been activated on the terminal device. Accordingly, the TMF receives the second indication information from the terminal device. The TMF determines, based on the second indication information, that the reader function has been activated on the terminal device. Optionally, the second indication information further indicates an identifier of the RAN serving the terminal device, the cell identity, the tracking area identity, or the like, and is for determining the location information of the terminal device. In this case, the terminal device supporting the reader function may serve as a reader only after the reader function is activated.

Optionally, the TMF sends, to the terminal device, an acknowledgement message indicating that the second indication information has been successfully received, where the acknowledgement message may include a reader identifier allocated by the TMF to the terminal device, namely, identification information used when the terminal device serves as the reader.

Optionally, the reader function of the terminal device supporting the reader function is activated, and may be directly used as the reader.

1313: A service requester sends fourth information to the TMF, where the fourth information indicates to execute an internet of things service instruction in a target area. Accordingly, the TMF receives the fourth information from the service requester.

The fourth information may include at least one of information about an operation type, identification information of an internet of things device, or information about the target area. The operation type includes any operation type in a stocktaking operation/an inventory operation, a read operation, a write operation, a disable operation, tag information obtaining, an operation of message exchange with a tag (the internet of things device), sending a payload to the tag (the internet of things device), or a positioning operation. An identifier of the internet of things device may be a tag identifier or an internet of things device identifier segment. The internet of things device identifier segment may indicate one or more internet of things devices. The information about the target area includes at least one of geographical location information, the cell identity, the tracking area identity, or an operation area identifier. The geographical location information includes information such as longitude and latitude, and a coordinate value. The information about the target area may alternatively be other information that may be for representing an area location. This is not limited in this application.

1314: The TMF determines, based on the fourth information, the terminal device located in the target area to execute the internet of things service instruction. For example, the TMF determines, based on one or more of the location information of the terminal device, the information about the mobility management device serving the terminal device, or the information about the access network device serving the terminal device, the terminal device located in the target area to execute the internet of things service instruction, where the location information of the terminal device, the information about the mobility management device serving the terminal device, or the information about the access network device serving the terminal device is sent by the SMF. In a possible implementation, the TMF may map or convert the information about the target area into the information about the access network device, the information about the mobility management device, or the location information of the terminal device. The TMF may determine, based on the location information of the terminal device, the information about the mobility management device serving the terminal device, or the information about the access network device serving the terminal device, the terminal device located in the target area.

For example, the TMF determines, based on the operation type indicated by the internet of things service instruction and the information about the target area, a terminal device for executing the internet of things service instruction. For example, when the operation type indicated by the internet of things service instruction is a short-distance operation such as the read operation, the write operation, or the positioning operation, the TMF may determine a terminal device that is located in the target area and that can perform the type of operation to execute the internet of things service instruction.

For example, the TMF determines, based on the identification information of the internet of things device and the information about the target area, a terminal device for executing the internet of things service instruction. For example, a terminal device that is located in the target area and that executes the internet of things service instruction for the internet of things device last time is determined, based on a historical operation record or an inventory record, as the terminal device for executing the internet of things service instruction this time, where a reader that executes the internet of things service instruction for the internet of things device last time is a terminal device supporting the reader function.

For example, the TMF determines, based on the information about the target area, a terminal device for executing the internet of things service instruction. For example, when the TMF determines that an area indicated by the information about the target area includes one or more terminal devices supporting the reader function, the TMF may determine the one or more terminal devices supporting the reader function as the terminal device for executing the internet of things service instruction this time.

1315: The TMF sends seventh information to the UPF serving the terminal device/corresponding to the terminal device, where the seventh information indicates the terminal device to execute the internet of things service instruction, and the seventh information includes identification information of the terminal device or identification information corresponding to the terminal device. For example, the seventh information includes an SUPI, an SUCI, a GPSI, or the reader ID of the terminal device, or identification information of the first session. Accordingly, the UPF receives the seventh information sent by the TMF.

Specifically, the TMF obtains context information corresponding to the terminal device for executing the internet of things service instruction, determines the UPF corresponding to the terminal device, and sends the seventh information to the UPF.

Optionally, the fourth information further includes address information of a server corresponding to the service requester, and the TMF sends the address information of the server and the internet of things service instruction to the terminal device together via the UPF. A function of the address information of the server is as follows: After receiving uplink data from the tag/the internet of things device, the terminal device serving as the reader may directly send the uplink data to the server via the RAN and the UPF (the user plane). When the TMF does not need to process the uplink data, in this manner, the uplink data can be transmitted to the server more quickly/with less bypassing, so that user experience can be improved.

1316: The UPF sends sixth information to the terminal device based on the seventh information, where the sixth information indicates the terminal device to execute the internet of things service instruction, and the sixth information includes the identification information of the terminal device or the identification information corresponding to the terminal device. Specifically, the UPF sends the sixth information to the terminal device via the RAN.

1317: The terminal device receives the sixth information sent by the UPF, and executes the internet of things service instruction based on the sixth information. For example, when the internet of things service instruction indicates to obtain target internet of things service data from the internet of things device, the terminal device receives the target internet of things service data from the internet of things device based on the internet of things service instruction, where the seventh information, the fourth information, and the sixth information include the identification information of the internet of things device.

Optionally, the TMF may alternatively indicate, via the AMF (the control plane), the terminal device to execute the internet of things service instruction. Specifically, the TMF sends fifth information to the AMF serving the terminal device, where the fifth information indicates the terminal device to execute the internet of things service instruction. The AMF receives the fifth information sent by the TMF. The AMF sends ninth information to the terminal device based on the fifth information, where the ninth information indicates the terminal device to execute the internet of things service instruction. The terminal device receives the ninth information sent by the AMF, and executes the internet of things service instruction based on the ninth information. This optional implementation and the implementation of step 1315 to step 1317 may be mutually replaced.

1318: When the terminal device needs to transmit the target internet of things service data to a network, the terminal device sends the target internet of things service data to the UPF by using the address information of the TMF as the uplink destination address.

1319: After receiving the target internet of things service data from the terminal device, the UPF sends the target internet of things service data to the TMF because the uplink destination address of the target internet of things service data is the address information of the TMF. The TMF receives the target internet of things service data sent by the UPF, and the TMF sends the target internet of things service data to the service requester. After receiving the target internet of things service data sent by the UPF, the TMF may directly forward the target internet of things service data to the service requester; or may process the target internet of things service data, and then send processed target internet of things service data to the service requester.

Optionally, when the terminal device has learned of the address information of the server corresponding to the service requester, the terminal device may send, by using the address information of the server as the uplink destination address, the target internet of things service data to the server via the RAN and the UPF that correspond to the terminal device.

For example, the internet of things service instruction indicates the terminal device to perform random access of the internet of things device, the fourth information includes the identification information or identification range information of the internet of things device that participates in a random access procedure, and the identification range information of the internet of things device may be understood as mask information. The terminal device initiates the random access procedure to the internet of things device based on the sixth information. The internet of things device whose random access is successful sends the identification information of the internet of things device to the terminal device. The identification information of the internet of things device may be encapsulated by using NAS signaling or an application layer protocol. The terminal device sends the identification information of the internet of things device to the TMF via the UPF. The terminal device does not parse the identification information of the internet of things device.

Optionally, after random access of the internet of things device is successful, the terminal device receives another internet of things service instruction from the TMF, for example, an internet of things service instruction indicating to obtain the target internet of things service data from the internet of things device. The terminal device obtains data in the internet of things device from the internet of things device, and sends the obtained data to the TMF via the UPF.

The foregoing describes the communication methods provided in embodiments of this application. The following describes execution bodies configured to perform the foregoing communication methods.

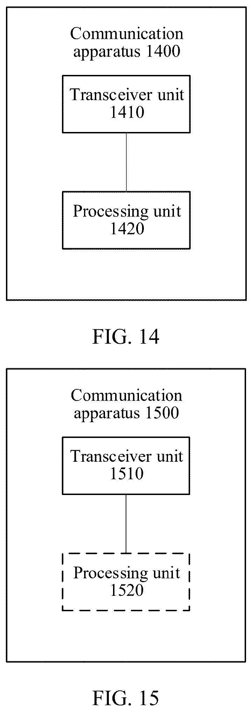

FIG. 14 is a schematic block diagram of a communication apparatus 1400 according to an embodiment of this application. The apparatus may be used in the session management device in the method in FIG. 7 or FIG. 10A and FIG. 10B in embodiments of this application. The communication apparatus 1400 includes:
a transceiver unit 1410, configured to receive a session establishment request message from a terminal device, where the session establishment request message is for requesting to establish a first session for transmission of internet of things service data; and
a processing unit 1420, configured to establish an internet of things service transmission path to each of a user plane device and an internet of things management device based on the session establishment request message, where the internet of things service transmission path is for transmission of the internet of things service data, where
the transceiver unit 1410 is further configured to send a session establishment accept message to the terminal device, where the session establishment accept message includes an uplink destination address used by the terminal device for transmission of the internet of things service data, and the uplink destination address includes address information of the user plane device; and
the transceiver unit 1410 is further configured to send first information to the user plane device, where the first information indicates the user plane device to send the internet of things service data to the apparatus when the uplink destination address of the received internet of things service data is an address of the user plane device.

FIG. 15 is a schematic block diagram of a communication apparatus 1500 according to an embodiment of this application. The apparatus may be used in the internet of things management device in the method in FIG. 7, FIG. 9, or FIG. 10A and FIG. 10B in embodiments of this application. The communication apparatus 1500 includes a transceiver unit 1510 and a processing unit 1520.

The transceiver unit 1510 is configured to receive a first request message from a session management device, where the first request message is for requesting to establish an internet of things service transmission path between the session management device and the apparatus, the first request message includes at least one of an identifier of a terminal device, address information of the terminal device, or an identifier of a session that the terminal device requests to establish, and the internet of things service transmission path is for transmission of internet of things service data; and
the transceiver unit 1510 is further configured to send a first response message to the session management device, where the first response message indicates that establishment of the internet of things service transmission path between the session management device and the apparatus is completed.

Optionally, the transceiver unit 1510 is further configured to receive fourth information from a service requester, where the fourth information indicates to execute an internet of things service instruction in a target area;
the processing unit 1520 is configured to determine the terminal device located in the target area to execute the internet of things service instruction; and
the transceiver unit 1510 is further configured to: send second information to the session management device, where the second information indicates the terminal device to execute the internet of things service instruction; or send fifth information to an access and mobility management device, where the fifth information indicates the terminal device to execute the internet of things service instruction.

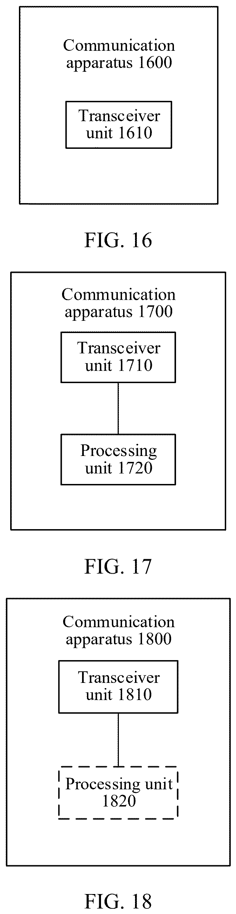

FIG. 16 is a schematic block diagram of a communication apparatus 1600 according to an embodiment of this application. The apparatus may be used in the user plane device in the method in FIG. 7 or FIG. 10A and FIG. 10B in embodiments of this application. The communication apparatus 1600 includes:
a transceiver unit 1610, configured to receive a second request message from a session management device, where the second request message is for requesting to establish an internet of things service transmission path between the session management device and the apparatus, the second request message includes an identifier of the internet of things service transmission path and first indication information, the first indication information indicates the apparatus to allocate an uplink destination address used by a terminal device for transmission of internet of things service data, and the internet of things service transmission path is for transmission of the internet of things service data, where
the transceiver unit 1610 is further configured to send a second response message to the session management device, where the second response message indicates that establishment of the internet of things service transmission path is completed, and the second response message includes address information of the apparatus.

FIG. 17 is a schematic block diagram of a communication apparatus 1700 according to an embodiment of this application. The apparatus may be used in the session management device in the method in FIG. 11 or FIG. 13A and FIG. 13B in embodiments of this application. The communication apparatus 1700 includes:
a transceiver unit 1710, configured to receive a session establishment request message from a terminal device, where the session establishment request message is for requesting to establish a first session for transmission of internet of things service data; and
a processing unit 1720, configured to obtain address information of an internet of things management device from the internet of things management device based on the session establishment request message, where the internet of things management device is for transmission of the internet of things service data corresponding to the first session, where
the transceiver unit 1710 is further configured to send a session establishment accept message to the terminal device, where the session establishment accept message includes an uplink destination address used by the terminal device for transmission of the internet of things service data, and the uplink destination address includes the address information of the internet of things management device.

FIG. 18 is a schematic block diagram of a communication apparatus 1800 according to an embodiment of this application. The apparatus may be used in the internet of things management device in the method in FIG. 11, FIG. 9, or FIG. 13A and FIG. 13B in embodiments of this application. The communication apparatus 1800 includes a transceiver unit 1810 and a processing unit 1820.

The transceiver unit 1810 is configured to receive a third request message from a session management device, where the third request message is for requesting to obtain address information of the apparatus, the third request message includes address information corresponding to a terminal device that requests to establish a first session, the address information corresponding to the terminal device includes address information of the terminal device and/or address information of a user plane device corresponding to the terminal device, and the apparatus and the user plane device are for transmission of internet of things service data corresponding to the first session; and
the transceiver unit 1810 is further configured to send a third response message to the session management device, where the third response message includes the address information of the apparatus.

Optionally, the transceiver unit 1810 is further configured to receive fourth information from a service requester, where the fourth information indicates to execute an internet of things service instruction in a target area;
the processing unit 1820 is configured to determine the terminal device located in the target area to execute the internet of things service instruction; and
the transceiver unit 1810 is further configured to: send seventh information to the user plane device, where the seventh information indicates the terminal device to execute the internet of things service instruction; or send fifth information to an access and mobility management device, where the fifth information indicates the terminal device to execute the internet of things service instruction.

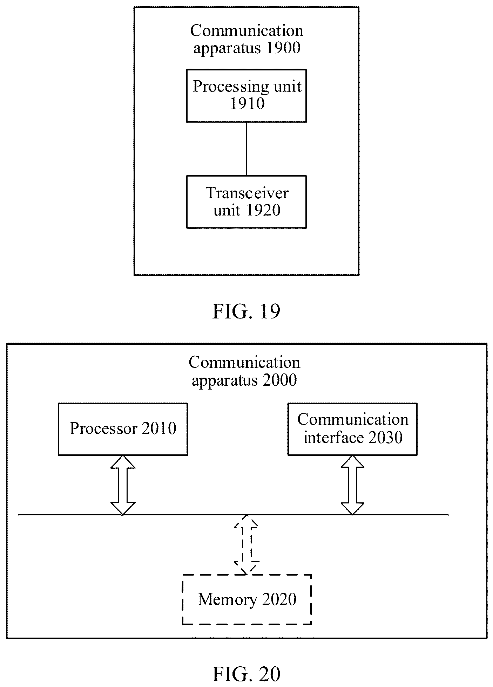

FIG. 19 is a schematic block diagram of a communication apparatus 1900 according to an embodiment of this application. The apparatus may be used in the terminal device in the method in FIG. 7, FIG. 9, FIG. 10A and FIG. 10B, FIG. 11, or FIG. 13A and FIG. 13B in embodiments of this application. The communication apparatus 1900 includes:
a processing unit 1910, configured to determine to establish a first session for transmission of internet of things service data; and
a transceiver unit 1920, configured to send a session establishment request message to a session management device, where the session establishment request message is for requesting to establish the first session for transmission of the internet of things service data, where
the transceiver unit 1920 is further configured to receive a session establishment accept message from the session management device, where the session establishment accept message includes an uplink destination address used by the apparatus for transmission of the internet of things service data, the uplink destination address includes address information of a user plane device or address information of an internet of things management device, and the internet of things management device and the user plane device are for transmission of the internet of things service data corresponding to the first session.

FIG. 20 is a schematic block diagram of a communication apparatus 2000 according to an embodiment of this application. The communication apparatus 2000 includes a processor 2010, a memory 2020, and a communication interface 2030.

The memory 2020 is configured to store executable instructions.

The processor 2010 is coupled to the memory 2020 through the communication interface 2030. The processor 2010 is configured to invoke and run the executable instructions in the memory 2020, to implement the methods in embodiments of this application. The communication device may be a first device or a second device in embodiments of this application. Optionally, the processor 2010 and the memory 2020 are integrated together.

The processor 2010 may be an integrated circuit chip, and have a signal processing capability. In an implementation process, steps in the foregoing method embodiments can be completed by using a hardware integrated logic circuit in the processor, or by using instructions in a software form. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to: perform the method in any one of the method embodiments, and perform processing and/or generate the output information based on the input information.

An embodiment of this application further provides a communication system, including a session management device, an internet of things management device, a user plane device, and a terminal device. The session management device, the internet of things management device, the user plane device, and the terminal device are configured to implement the methods in the foregoing method embodiments.

An embodiment of this application further provides a computer-readable storage medium. The computer-readable storage medium stores a computer program for implementing the methods in the foregoing method embodiments. When the computer program is run on a computer, the computer is enabled to implement the methods in the foregoing method embodiments.

An embodiment of this application further provides a computer program product. The computer program product includes computer program code. When the computer program code is run on a computer, the methods in the foregoing method embodiments are caused to be performed.

An embodiment of this application further provides a chip, including a processor. The processor is connected to a memory. The memory is configured to store a computer program, and the processor is configured to execute the computer program stored in the memory, to cause the chip to perform the methods in the foregoing method embodiments.

It should be further understood that, in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In embodiments of this application, numbers "first", "second", and the like are merely for distinguishing between different objects, for example, distinguishing between different information, and do not constitute a limitation on the scope of embodiments of this application. Embodiments of this application are not limited thereto.

In addition, the term "and/or" in this application describes only an association relationship between associated objects, and indicates that three relationships may exist. For example, A and/or B may indicate the following three cases: Only A exists; both A and B exist; or only B exists. In addition, the character "/" in this specification usually indicates an "or" relationship between the associated objects. In this application, the term "at least one" may indicate "one" and "two or more than two". For example, at least one of A, B, and C may indicate the following seventh cases: Only A exists, only B exists, only C exists, both A and B exist, both A and C exist, both C and B exist, and A, B, and C all exist.

A person of ordinary skill in the art may be aware that, with reference to the units and the algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, the division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that may store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a session management device, a session establishment request message from a terminal device, wherein the session establishment request message is for requesting to establish a first session for transmission of internet of things service data;
establishing, by the session management device, an internet of things service transmission path to each of a user plane device and an internet of things management device based on the session establishment request message, wherein the internet of things service transmission path is for transmission of the internet of things service data;
sending, by the session management device, a session establishment accept message to the terminal device, wherein the session establishment accept message comprises an uplink destination address used by the terminal device for transmission of the internet of things service data, and the uplink destination address comprises address information of the user plane device; and
sending, by the session management device, first information to the user plane device, wherein the first information indicates the user plane device to send the internet of things service data to the session management device when the uplink destination address of the received internet of things service data is an address of the user plane device.

2. The method according to claim 1, wherein establishing, by the session management device, the internet of things service transmission path to the internet of things management device based on the session establishment request message comprises:
sending, by the session management device, a first request message to the internet of things management device, wherein the first request message is for requesting to establish the internet of things service transmission path between the session management device and the internet of things management device, and the first request message comprises at least one of an identifier of the terminal device, address information of the terminal device, or an identifier of the first session; and
receiving, by the session management device, a first response message from the internet of things management device, wherein the first response message indicates that establishment of the internet of things service transmission path between the session management device and the internet of things management device is completed.

3. The method according to claim 2, wherein
the first request message further comprises information about an access and mobility management device serving the terminal device and/or information about a radio access network device serving the terminal device.

4. The method according to any one of claims 1 to 3, wherein establishing, by the session management device, the internet of things service transmission path to the user plane device based on the session establishment request message comprises:
sending, by the session management device, a second request message to the user plane device, wherein the second request message is for requesting to establish the internet of things service transmission path between the session management device and the user plane device, the second request message comprises an identifier of the internet of things service transmission path between the session management device and the user plane device and first indication information, and the first indication information indicates the user plane device to allocate the uplink destination address; and
receiving, by the session management device, a second response message from the user plane device, wherein the second response message indicates that establishment of the internet of things service transmission path between the session management device and the user plane device is completed, and the second response message comprises the address information of the user plane device.

5. The method according to any one of claims 1 to 3, wherein establishing, by the session management device, the internet of things service transmission path to the user plane device based on the session establishment request message comprises:
sending, by the session management device, a second request message to the user plane device, wherein the second request message is for requesting to establish a second session between the session management device and the user plane device, the second request message comprises an identifier of the second session and first indication information, and the first indication information indicates the user plane device to allocate the uplink destination address; and
receiving, by the session management device, a second response message from the user plane device, wherein the second response message indicates that establishment of the second session is completed, and the second response message comprises the address information of the user plane device.

6. The method according to any one of claims 1 to 3, wherein establishing, by the session management device, the internet of things service transmission path to the user plane device based on the session establishment request message comprises:
sending, by the session management device, a second request message to the user plane device, wherein the second request message is for requesting to establish the internet of things service transmission path between the session management device and the user plane device, and the second request message comprises an identifier of the internet of things service transmission path between the session management device and the user plane device and the address information of the user plane device; and
receiving, by the session management device, a second response message from the user plane device, wherein the second response message indicates that establishment of the internet of things service transmission path between the session management device and the user plane device is completed.

7. The method according to any one of claims 1 to 3, wherein establishing, by the session management device, the internet of things service transmission path to the user plane device based on the session establishment request message comprises:
sending, by the session management device, a second request message to the user plane device, wherein the second request message is for requesting to establish a second session between the session management device and the user plane device, and the second request message comprises an identifier of the second session and the address information of the user plane device; and
receiving, by the session management device, a second response message from the user plane device, wherein the second response message indicates that establishment of the second session is completed.

8. The method according to any one of claims 1 to 7, wherein the method further comprises:
receiving, by the session management device, second information sent by the internet of things management device, wherein the second information indicates the terminal device to execute an internet of things service instruction; and
sending, by the session management device, third information to the user plane device, wherein the third information indicates the terminal device to execute the internet of things service instruction.

9. The method according to claim 8, wherein when the internet of things service instruction indicates to obtain target internet of things service data from an internet of things device, the method further comprises:
receiving, by the session management device, the target internet of things service data sent by the user plane device; and
sending, by the session management device, the target internet of things service data to the internet of things management device.

10. A communication method, comprising:
receiving, by an internet of things management device, a first request message from a session management device, wherein the first request message is for requesting to establish an internet of things service transmission path between the session management device and the internet of things management device, the first request message comprises at least one of an identifier of a terminal device, address information of the terminal device, or an identifier of a session that the terminal device requests to establish, and the internet of things service transmission path is for transmission of internet of things service data; and
sending, by the internet of things management device, a first response message to the session management device, wherein the first response message indicates that establishment of the internet of things service transmission path between the session management device and the internet of things management device is completed.

11. The method according to claim 10, wherein
the first request message further comprises information about an access and mobility management device serving the terminal device and/or information about a radio access network device serving the terminal device.

12. The method according to claim 10 or 11, wherein the method further comprises:
receiving, by the internet of things management device, fourth information from a service requester, wherein the fourth information indicates to execute an internet of things service instruction in a target area;
determining, by the internet of things management device, the terminal device located in the target area to execute the internet of things service instruction; and
sending, by the internet of things management device, second information to the session management device, wherein the second information indicates the terminal device to execute the internet of things service instruction.

13. The method according to claim 11, wherein the method further comprises:
receiving, by the internet of things management device, fourth information from a service requester, wherein the fourth information indicates to execute an internet of things service instruction in a target area;
determining, by the internet of things management device, the terminal device located in the target area to execute the internet of things service instruction; and
sending, by the internet of things management device, fifth information to the access and mobility management device, wherein the fifth information indicates the terminal device to execute the internet of things service instruction.

14. The method according to claim 12 or 13, wherein when the internet of things service instruction indicates to obtain target internet of things service data from an internet of things device, the method further comprises:
receiving, by the internet of things management device, the target internet of things service data sent by the session management device; and
sending, by the internet of things management device, the target internet of things service data to the service requester.

15. The method according to any one of claims 12 to 14, wherein determining, by the internet of things management device, the terminal device located in the target area to execute the internet of things service instruction comprises:
determining, by the internet of things management device, that a reader function has been activated on the terminal device, and determining that the terminal device is located in the target area.

16. The method according to claim 15, wherein determining, by the internet of things management device, that the terminal device is located in the target area comprises:
determining, by the internet of things management device based on the information about the access and mobility management device serving the terminal device and/or the information about the radio access network device serving the terminal device, that the terminal device is located in the target area;
determining, by the internet of things management device by triggering a positioning procedure of the terminal device, that the terminal device is located in the target area; or
determining, by the internet of things management device based on location information that is of the terminal device and that is obtained from a unified data management device or location information that is of a terminal device supporting the reader function and that is obtained from the unified data management device, that the terminal device is located in the target area.

17. The method according to claim 15 or 16, wherein determining, by the internet of things management device, that the reader function has been activated on the terminal device comprises:
sending, by the internet of things management device, a subscription request message to the unified data management device, wherein the subscription request message is for obtaining information about the terminal device supporting the reader function;
receiving, by the internet of things management device, a subscription response message from the unified data management device, wherein the subscription response message comprises at least one of an identifier of the terminal device supporting the reader function, the location information of the terminal device supporting the reader function, status information of the terminal device supporting the reader function, or information about a core network device serving the terminal device supporting the reader function; and
determining, by the internet of things management device based on the subscription response message, that the reader function has been activated on the terminal device.

18. The method according to claim 15 or 16, wherein determining, by the internet of things management device, that the reader function has been activated on the terminal device comprises:
receiving, by the internet of things management device, second indication information from the terminal device, wherein the second indication information indicates that the reader function has been activated on the terminal device.

19. A communication method, comprising:
receiving, by a user plane device, a second request message from a session management device, wherein the second request message is for requesting to establish an internet of things service transmission path between the session management device and the user plane device, the second request message comprises an identifier of the internet of things service transmission path and first indication information, the first indication information indicates the user plane device to allocate an uplink destination address used by a terminal device for transmission of internet of things service data, and the internet of things service transmission path is for transmission of the internet of things service data; and
sending, by the user plane device, a second response message to the session management device, wherein the second response message indicates that establishment of the internet of things service transmission path is completed, and the second response message comprises address information of the user plane device.

20. The method according to claim 19, wherein the method further comprises:
receiving, by the user plane device, third information sent by the session management device, wherein the third information indicates the terminal device to execute an internet of things service instruction; and
sending, by the user plane device, sixth information to the terminal device, wherein the sixth information indicates the terminal device to execute the internet of things service instruction.

21. The method according to claim 20, wherein when the internet of things service instruction indicates to obtain target internet of things service data from an internet of things device, the method further comprises:
receiving, by the user plane device, the target internet of things service data from the terminal device; and
sending, by the user plane device, the target internet of things service data to the session management device.

22. A communication method, comprising:
receiving, by a session management device, a session establishment request message from a terminal device, wherein the session establishment request message is for requesting to establish a first session for transmission of internet of things service data;
obtaining, by the session management device, address information of an internet of things management device from the internet of things management device based on the session establishment request message, wherein the internet of things management device is for transmission of the internet of things service data corresponding to the first session; and
sending, by the session management device, a session establishment accept message to the terminal device, wherein the session establishment accept message comprises an uplink destination address used by the terminal device for transmission of the internet of things service data, and the uplink destination address comprises the address information of the internet of things management device.

23. The method according to claim 22, wherein obtaining, by the session management device, the address information of the internet of things management device from the internet of things management device based on the session establishment request message comprises:
sending, by the session management device, a third request message to the internet of things management device, wherein the third request message is for requesting to obtain the address information of the internet of things management device, the third request message comprises address information corresponding to the terminal device, and the address information corresponding to the terminal device comprises address information of the terminal device and/or address information of a user plane device corresponding to the terminal device; and
receiving, by the session management device, a third response message from the internet of things management device, wherein the third response message comprises the address information of the internet of things management device.

24. The method according to claim 23, wherein
the third request message further comprises information about an access and mobility management device serving the terminal device and/or information about a radio access network device serving the terminal device.

25. The method according to claim 23 or 24, wherein the method further comprises:
sending, by the session management device, first indication information to the user plane device, wherein the first indication information indicates the user plane device to allocate the address information used by the terminal device for transmission of the internet of things service data; and
receiving, by the session management device, the address information of the user plane device from the user plane device.

26. The method according to any one of claims 23 to 25, wherein the method further comprises:
receiving, by the internet of things management device, fourth information from a service requester, wherein the fourth information indicates to execute an internet of things service instruction in a target area;
determining, by the internet of things management device, the terminal device located in the target area to execute the internet of things service instruction; and
sending, by the internet of things management device, seventh information to the user plane device, wherein the seventh information indicates the terminal device to execute the internet of things service instruction.

27. The method according to claim 26, wherein when the internet of things service instruction indicates to obtain target internet of things service data from an internet of things device, the method further comprises:
receiving, by the internet of things management device, the target internet of things service data sent by the user plane device; and
sending, by the internet of things management device, the target internet of things service data to the service requester.

28. A communication method, comprising:
receiving, by an internet of things management device, a third request message from a session management device, wherein the third request message is for requesting to obtain address information of the internet of things management device, the third request message comprises address information corresponding to a terminal device that requests to establish a first session, the address information corresponding to the terminal device comprises address information of the terminal device and/or address information of a user plane device corresponding to the terminal device, and the internet of things management device and the user plane device are for transmission of internet of things service data corresponding to the first session; and
sending, by the internet of things management device, a third response message to the session management device, wherein the third response message comprises the address information of the internet of things management device.

29. The method according to claim 28, wherein
the third request message further comprises information about an access and mobility management device serving the terminal device and/or information about a radio access network device serving the terminal device.

30. The method according to claim 28 or 29, wherein the method further comprises:
receiving, by the internet of things management device, fourth information from a service requester, wherein the fourth information indicates to execute an internet of things service instruction in a target area;
determining, by the internet of things management device, the terminal device located in the target area to execute the internet of things service instruction; and
sending, by the internet of things management device, seventh information to the user plane device, wherein the seventh information indicates the terminal device to execute the internet of things service instruction.

31. The method according to claim 28 or 29, wherein the method further comprises:
receiving, by the internet of things management device, fourth information from a service requester, wherein the fourth information indicates to execute an internet of things service instruction in a target area;
determining, by the internet of things management device, the terminal device located in the target area to execute the internet of things service instruction; and
sending, by the internet of things management device, fifth information to the access and mobility management device, wherein the fifth information indicates the terminal device to execute the internet of things service instruction.

32. The method according to claim 30 or 31, wherein when the internet of things service instruction indicates to obtain target internet of things service data from an internet of things device, the method further comprises:
receiving, by the internet of things management device, the target internet of things service data sent by the user plane device; and
sending, by the internet of things management device, the target internet of things service data to the service requester.

33. The method according to any one of claims 30 to 32, wherein determining, by the internet of things management device, the terminal device located in the target area to execute the internet of things service instruction comprises:
determining, by the internet of things management device, that a reader function has been activated on the terminal device, and determining that the terminal device is located in the target area.

34. The method according to claim 33, wherein determining, by the internet of things management device, that the terminal device is located in the target area comprises:
determining, by the internet of things management device based on the information about the access and mobility management device serving the terminal device and/or the information about the radio access network device serving the terminal device, that the terminal device is located in the target area;
determining, by the internet of things management device by triggering a positioning procedure of the terminal device, that the terminal device is located in the target area; or
determining, by the internet of things management device based on location information that is of the terminal device and that is obtained from a unified data management device or location information that is of a terminal device supporting the reader function and that is obtained from the unified data management device, that the terminal device is located in the target area.

35. The method according to claim 33 or 34, wherein determining, by the internet of things management device, that the reader function has been activated on the terminal device comprises:
sending, by the internet of things management device, a subscription request message to the unified data management device, wherein the subscription request message is for learning of information about the terminal device supporting the reader function;
receiving, by the internet of things management device, a subscription response message from the unified data management device, wherein the subscription response message comprises at least one of an identifier of the terminal device supporting the reader function, the location information of the terminal device supporting the reader function, status information of the terminal device supporting the reader function, or information about a core network device serving the terminal device supporting the reader function; and
determining, by the internet of things management device based on the subscription response message, that the reader function has been activated on the terminal device.

36. The method according to claim 33 or 34, wherein determining, by the internet of things management device, that the reader function has been activated on the terminal device comprises:
receiving, by the internet of things management device, second indication information from the terminal device, wherein the second indication information indicates that the reader function has been activated on the terminal device.

37. A communication method, comprising:
determining, by a terminal device, to establish a first session for transmission of internet of things service data;
sending, by the terminal device, a session establishment request message to a session management device, wherein the session establishment request message is for requesting to establish the first session for transmission of the internet of things service data; and
receiving, by the terminal device, a session establishment accept message from the session management device, wherein the session establishment accept message comprises an uplink destination address used by the terminal device for transmission of the internet of things service data, the uplink destination address comprises address information of a user plane device or address information of an internet of things management device, and the internet of things management device and the user plane device are for transmission of the internet of things service data corresponding to the first session.

38. The method according to claim 37, wherein the determining, by the terminal device, to establish the first session for transmission of the internet of things service data comprises:
sending, by the terminal device, third indication information to an access and mobility management device, wherein the third indication information indicates that the terminal device supports a reader function;
receiving, by the terminal device, eighth information from the access and mobility management device, wherein the eighth information indicates a session parameter for transmission of the internet of things service data; and
determining, by the terminal device based on the eighth information, to establish the first session for transmission of the internet of things service data.

39. The method according to claim 37 or 38, wherein the method further comprises:
sending, by the terminal device, second indication information to the internet of things management device, wherein the second indication information indicates that the reader function has been activated on the terminal device.

40. The method according to any one of claims 37 to 39, wherein the method further comprises:
receiving, by the terminal device, sixth information sent by the user plane device, wherein the sixth information indicates the terminal device to execute an internet of things service instruction; and
executing, by the terminal device, the internet of things service instruction.

41. The method according to claim 40, wherein when the internet of things service instruction indicates to obtain target internet of things service data from the internet of things device, executing, by the terminal device, the internet of things service instruction comprises:
receiving, by the terminal device, the target internet of things service data from the internet of things device based on the internet of things service instruction; and
sending, by the terminal device, the target internet of things service data to the user plane device or the internet of things management device by using the uplink destination address.

42. A communication apparatus, comprising a unit or a module configured to perform the method according to any one of claims 1 to 9, 10 to 18, 19 to 21, 22 to 27, 28 to 36, or 37 to 41.

43. A communication apparatus, comprising a processor and a memory, wherein the memory is configured to store a computer program, and the processor is configured to execute the computer program stored in the memory, to cause the communication apparatus to perform the method according to any one of claims 1 to 41.

44. A communication device, comprising an input/output interface and a logic circuit, wherein
the input/output interface is configured to obtain input information and/or output information; and
the logic circuit is configured to perform the method according to any one of claims 1 to 41, and perform processing and/or generate the output information based on the input information.

45. A communication system, comprising: a session management device, an internet of things management device, a user plane device, and a terminal device, wherein the session management device is configured to implement the method according to any one of claims 1 to 9 or 22 to 27, the internet of things management device is configured to implement the method according to any one of claims 10 to 18 or 28 to 36, the user plane device is configured to implement the method according to any one of claims 19 to 21, and the terminal device is configured to implement the method according to any one of claims 37 to 41.

46. A computer-readable storage medium, wherein
the computer-readable medium stores a computer program; and
when the computer program is run on a computer, the computer is caused to perform the method according to any one of claims 1 to 41.
